# EUROPÄISCHE PATENTANMELDUNG

(11) **EP 4 491 439 A1**
(43) Veröffentlichungstag der Anmeldung: **15.01.2025**
(21) Anmeldenummer: 24188059.0
(22) Anmeldetag: 11.07.2024
(51) Int. Cl.: B60L 53/16, B62B 3/14, G06Q 30/06

(54) **SCHUBTRANSPORTWAGENSYSTEM**

(30) Priorität: 14.07.2023 DE 102023118739
(71) Anmelder: Expresso Deutschland GmbH & Co. KG, 34123 Kassel (DE)
(72) Erfinder: Wilhelms, Claudius, 34125 Kassel (DE); Vellmer, Uwe, 37276 Meinhard (DE); Kamzin, Eduard, 34246 Vellmar (DE); Hildmann, André, 34121 Kassel (DE)
(74) Vertreter: REHBERG HÜPPE + PARTNER

(57) **Zusammenfassung**

Die Erfindung betrifft einen Schubtransportwagen (3), der als Einkaufswagen oder Gepäckwagen ausgebildet sein kann. Der Schubtransportwagen (3) weist Kontaktelemente (65, 66) auf. Erfolgt ein Einschieben eines Schubtransportwagens (3b) in einen zweiten entsprechenden Schubtransportwagen (3a), bilden die Kontaktelemente (65, 66) einen elektrischen Kontakt (72) zwischen den Schubtransportwagen (3a, 3b) aus. Über diesen elektrischen Kontakt (72) kann eine elektrische Leistungsversorgung erfolgen, wobei unter Nutzung eines Ladeflussmanagements ein Aufladen eines Speichers (47) eines ersten Schubtransportwagens (3b) aus einem Speicher (47) mindestens eines anderen Schubtransportwagens (3a, 3c) erfolgt.

## Beschreibung

### TECHNISCHES GEBIET DER ERFINDUNG

Die Erfindung betrifft ein Schubtransportwagensystem mit mindestens zwei Schubtransportwagen.

Der Schubtransportwagen ist vorzugsweise ein Einkaufswagen, wie dieser beispielsweise Einsatz findet in Ladengeschäften, Lebensmittelmärkten oder Einkaufszentren, oder ein Gepäckwagen, wie dieser in Reisezentren, beispielsweise Bahnhöfen, Flughäfen oder Hotels Einsatz findet. Verallgemeinert findet die Erfindung Einsatz in einem beliebigen Schubtransportwagen, der über Rollen auf dem Boden aufsteht, von einem Benutzer manuell über eine Handhabungseinrichtung wie einen Griff oder eine Schubstange geschoben werden kann und auf oder in dem für den Transport Gegenstände wie bspw. Einkaufwaren oder Gepäckstücke angeordnet und transportiert werden können.

Moderne Schubtransportwagen sind mit Elektrikeinrichtungen ausgestattet, für deren Betrieb eine elektrische Leistungsversorgung über ein elektrisches Kabel erforderlich ist. Soll der Schubtransportwagen mit der Elektrikeinrichtung ohne Verbindung mit einem Kabel autark bewegt werden können, ist der Schubtransportwagen mit einem elektrischen Speicher auszustatten, der die Elektrikeinrichtung mit elektrischer Leistung versorgt. Ein derartiger Speicher muss immer wieder aufgeladen werden.

Aus den Veröffentlichungen US 2006/0254861 A1, GB 2498509A und WO 2013/092258 A1 sind Schubtransportwagensysteme mit mehreren Schubtransportwagen bekannt, welche manuell durch einen Nutzer über ein mechanisches Verbindungselement in Form einer Gliederkette miteinander und/oder mit einer Bevorratungsstation für Schubtransportwagen verbunden werden können. Durch das Verbindungselement wird gleichzeitig eine elektrische Verbindung zwischen dem Schubtransportwagen und einer Ladeeinrichtung der Bevorratungsstation oder einer Netzversorgung geschaffen. Über die elektrische Verbindung wird ein Energiespeicher des Schubtransportwagens von der Ladeeinrichtung oder der elektrischen Netzversorgung aufgeladen. Aus den Veröffentlichungen CN 206569113 U und US 11,465,663 B2 sind Schubtransportwagensysteme bekannt, welche über starre Kontaktelemente verfügen, die so angeordnet sind, dass es durch eine Einschiebebewegung der Schubtransportwagen ineinander oder in eine Ladestation gleichzeitig ohne Zutun eines Nutzers zu einer mechanischen Verbindung und zu einem elektrischen Kontakt kommt. Über den elektrischen Kontakt kann ein Energiespeicher eines Schubtransportwagens von der Ladestation aufgeladen werden.

### AUFGABE DER ERFINDUNG

Der Erfindung liegt die Aufgabe zugrunde, ein Schubtransportwagensystem vorzuschlagen, das insbesondere hinsichtlich
- einer elektrischen Leistungsversorgung und/oder
- einer elektrischen Kontaktierung und/oder
- einer Zuführung, Ableitung und/oder Übertragung elektrischer Signale und/oder
- eines Last-, Verbrauchs- und Lademanagements
verbessert ist.

### LÖSUNG

Die Aufgabe der Erfindung wird mit den Merkmalen des unabhängigen Patentanspruchs gelöst. Weitere bevorzugte Ausgestaltungen sind den abhängigen Patentansprüchen zu entnehmen.

### BESCHREIBUNG DER ERFINDUNG

Die Erfindung betrifft ein Schubtransportwagensystem mit mindestens zwei Schubtransportwagen. Bei dem Schubtransportwagen handelt es sich insbesondere um einen manuell von einem Benutzer geschobenen Einkaufswagen oder Gepäckwagen. Im Folgenden wird teilweise bevorzugt auf einen Einkaufswagen Bezug genommen, wobei dann das Entsprechende auch für einen Gepäckwagen oder einen beliebigen anderen Schubtransportwagen gelten kann. Der Schubtransportwagen weist eine Elektrikeinrichtung auf, wobei eine derartige Elektrikeinrichtung auch eine Elektronikeinrichtung mit einer elektronischen Steuereinrichtung oder CPU umfassen kann. Um lediglich einige die Erfindung nicht beschränkende Beispiele zu nennen, kann es bei der Elektrikeinrichtung um
- Messtechnik, insbesondere einen Sensor (beispielsweise einen Temperatursensor, einen Sensor zur Erfassung der Masse eines auf oder in dem Einkaufswagen oder Gepäckwagen angeordneten Gegenstandes, einen Akustiksensor zur Erfassung eines Umgebungsgeräuschs oder eines Rollgeräuschs des Schubtransportwagens, einen Scanner zur Erfassung einer Kontur des Produkts oder Gepäcks oder zur Erfassung charakteristischer Daten des Produkts oder Gepäcks oder einer Kennzeichnung, insbesondere eines Barcodes oder QR-Codes), und/oder
- eine Auswerteelektronik für die Messtechnik und/oder
- uni- oder bidirektionale drahtlose oder drahtgebundene Kommunikationseinrichtungen (beispielsweise für ein Update von Steuerlogik einer elektronischen Steuereinheit des Schubtransportwagens, eine Übergabe von Parametern an den Schubtransportwagen oder eine Übertragung von Mess- oder Betriebsgrößen von dem Schubtransportwagen zu anderen Komponenten des Schubtransportwagensystems oder für eine uni- oder bidirektionale Kommunikation mit einer portablen netzfähigen Elektronikeinrichtung des Benutzers) und/oder
- mittels eines elektrischen Aktuators betätigte Verriegelungssysteme für eine Sicherung des Schubtransportwagens gegenüber einem benachbarten Schubtransportwagen oder gegenüber eine Bevorratungs- und/oder Ladestation und/oder
- eine elektronische Steuereinheit und/oder
- ein Antriebssystem des Schubtransportwagens, welches eine von dem Benutzer aufgebrachte Schubkraft unterstützt,

### handeln.

Alternativ oder kumulativ verfügt der Schubtransportwagen über einen elektrischen Speicher, bei dem es sich bspw. um einen elektrischen Akkumulator, insbesondere einen chemischen Speicher beliebiger Bauart (Lithium-Ionen-Speicher, Natrium-lonen-speicher, Bleispeicher, LiFePo4-Speicher), und/oder eine elektrische Kapazität oder Superkapazität handeln kann. Der elektrische Speicher kann dann ggf. mit der Elektrikeinrichtung verbunden sein, um diese mit elektrischer Leistung zu versorgen und somit auch einen autarken Betrieb des Schubtransportwagens zu ermöglichen.

Die Erfindung schlägt vor, dass der Schubtransportwagen (mindestens) zwei Kontaktelemente aufweist, die im Folgenden auch als "erstes Kontaktelement" und "zweites Kontaktelement" bezeichnet sind. Die Kontaktelemente sind derart ausgebildet und an dem Schubtransportwagen angeordnet, dass ein erstes Kontaktelement des Schubtransportwagens bewegungsgesteuert durch eine Einschiebebewegung dieses Schubtransportwagens in einen zweiten, entsprechenden und vorzugsweise identisch ausgebildeten Schubtransportwagen einen elektrischen Kontakt mit dem zweiten Kontaktelement des zweiten Schubtransportwagens ausbildet. Ein derartiges Einschieben von zwei Schubtransportwagen ineinander kann dabei erfolgen, wenn mindestens zwei Schubtransportwagen zu einer Reihe ineinandergeschoben werden, um diese kompakt anzuordnen und unter Umständen auch gemeinsam zu bewegen. Des Weiteren kann ein derartiges Einschieben von Schubtransportwagen ineinander im Bereich einer Bevorratungs- und/oder Ladestation erfolgen. Erfindungsgemäß kann eine einfache Herstellung eines elektrischen Kontakts zwischen den beiden Schubtransportwagen "automatisch" gewährleistet werden, wenn das ohnehin erforderliche Einschieben der Schubtransportwagen ineinander erfolgt. Der auf diese Weise herbeigeführte elektrische Kontakt kann zu vielfältigen Zwecken dienen. So ist möglich, dass über den elektrischen Kontakt elektrische Signale zwischen den beiden Schubtransportwagen übertragen werden. Möglich ist auch, dass über den elektrischen Kontakt eine Übertragung elektrischer Leistung zum Aufladen des elektrischen Speichers erfolgt und/oder eine Weitergabe von elektrischer Leistung über mehrere derart ineinander geschobene Schubtransportwagen erfolgt.

Das Schubtransportwagensystem weist Steuerlogik auf, welche ein Ladeflussmanagement gewährleistet, bei dem ein Aufladen eines Speichers eines Schubtransportwagens aus einem Speicher mindestens eines anderen Schubtransportwagens erfolgt. Die Steuerlogik kann einen Austausch elektrischer Energie zwischen Schubtransportwagen über die elektrischen Verbindungseinrichtungen oder über die Kontaktelemente steuern, die miteinander, aber nicht mit einer Bevorratungs- und/oder Ladestation verbunden sind. Dadurch kann ein höheres Ladeniveau eines Schubtransportwagens genutzt werden zum teilweisen Aufladen mindestens eines anderen Schubtransportwagens mit einem niedrigeren Ladeniveau. Im einfachsten Fall erfolgt ein Ausgleich der Ladeniveaus der in der Reihe miteinander verbundenen Schubtransportwagen auf dasselbe gemittelte Ladeniveau. Möglich ist, dass die Steuerlogik dabei auch gewährleistet, dass ein die elektrische Leistung bereitstellender Speicher nur bis zu einem minimalen vorgegebenen Ladeniveau entladen wird, welches so bemessen ist, dass das minimale Ladeniveau den weiteren Betrieb des Schubtransportwagens (zumindest für eine reduzierte Betriebsdauer) gewährleistet. Möglich ist aber beispielsweise auch, dass die Steuerlogik bevorzugt weiter von der Ladestation beabstandete Schubtransportwagen derart priorisiert, dass an diese elektrische Leistung von weiter benachbart zu der Ladestation angeordneten Speichern übertragen wird, da für die auf diese Weise Leistung aus einem Speicher empfangenden Schubtransportwagen eine baldige Benutzung durch einen Benutzer wahrscheinlicher ist. Möglich ist sogar auch, dass die Steuerlogik für den Fall, dass zu einem anderen Zeitpunkt eine Verbindung zumindest eines Teils der Reihe der miteinander verbundenen Schubtransportwagen mit der Bevorratungs- und/oder Ladestation erfolgt, eine Überlagerung der elektrischen Leistungsversorgung durch die Ladestation mit dem Ausgleich von Energie zwischen den einzelnen Speichereinheiten herbeiführt und/oder steuert oder regelt.

Die Erfindung umfasst Ausführungsformen, bei welchen der elektrische Kontakt mit dem Erreichen einer definierten Einschiebestellung herbeigeführt wird. Für einen Vorschlag der Erfindung ist eine Ausgleichseinrichtung vorhanden. Die Ausgleichseinrichtung gewährleistet, dass der elektrische Kontakt nicht ausschließlich für ein optimales Einschieben der Schubtransportwagen ineinander ausgebildet wird. Vielmehr gewährleistet die Ausgleichseinrichtung, dass ein elektrischer Kontakt in einem Ausgleichsbereich mit unterschiedlichen Relativstellungen zwischen den ineinander geschobenen Schubtransportwagen ausgebildet wird. Diese unterschiedlichen Relativstellungen können alternativ oder kumulativ die Folgenden unterschiedlichen Relativstellungen umfassen:
a) Die Ausgleichseinrichtung kann einen elektrischen Kontakt gewährleisten für unterschiedliche Relativstellungen der Schubtransportwagen in Längsrichtung der Schubtransportwagen. Die Ausgleichseinrichtung kann somit einen Längsausgleichsbereich bereitstellen, in dem ein elektrischer Kontakt ausgebildet wird. Beispielsweise gewährleistet der Längsausgleichsbereich einen Längsausgleich in einem Bereich von 2 cm bis 50 cm, 4 cm bis 40 cm oder 6 cm bis 25 cm. Vorzugsweise beginnt dieser Längsausgleichsbereich mit der idealen vollständigen Einschiebestellung der Schubtransportwagen ineinander.
b) Möglich ist auch, dass der Ausgleichsbereich ein Querausgleichsbereichs ist, der ermöglicht, dass ein elektrischer Kontakt auch dann ausgebildet wird, wenn die beiden Schubtransportwagen mit einem Querversatz der Längsachsen ineinander eingeschoben werden. Hierbei kann der Querausgleichsbereich beispielsweise beidseits einer idealen Einschiebestellung der Schubtransportwagen ineinander mit koaxialen Längsachsen einen Querausgleich von mehr als 0 cm bis weniger als 10 cm, weniger 8 cm oder weniger 5 cm ermöglichen.
c) Möglich ist auch, dass die Ausgleichseinrichtung einen Winkelausgleichsbereich bereitstellt, der einen elektrischen Kontakt gewährleistet auch dann, wenn die beiden Schubtransportwagen unter einem Winkel der Längsachsen beidseits der Relativstellung bei einem idealen Einschieben der Schubtransportwagen mit koaxialen Längsachsen eingeschoben werden, der größer als 0° und kleiner als 25°, kleiner als 20°, kleiner als 15° oder kleiner als 10° ist.
d) Möglich ist auch, dass die Ausgleichseinrichtung einen Höhenausgleich gewährleistet.

Vorzugsweise gewährleistet die Ausgleichseinrichtung zumindest sowohl einen Längsausgleichsbereich als auch einen Querausgleichsbereich als auch einen Winkelausgleichsbereich.

Für die Gestaltung der Ausgleichseinrichtung gibt es im Rahmen der Erfindung vielfältige Möglichkeiten. Für einen Vorschlag der Erfindung ist mindestens ein Kontaktelement selbst federnd ausgebildet, sodass ein elektrischer Leiter, der das Kontaktelement bildet, selber eine Elastizität aufweist, die für die Bereitstellung des Ausgleichsbereichs genutzt wird. Alternativ oder kumulativ möglich ist, dass das Kontaktelement über eine Federeinrichtung federn abgestützt ist, wobei dann das Kontaktelement über ein Kabel kontaktiert sein kann, welches die federnde Bewegung des Kontaktelements ausgleichen kann.

Für den federnden Freiheitsgrad des Kontaktelementes gibt es im Rahmen der Erfindung unterschiedliche Möglichkeiten:
Für eine Variante der Erfindung ist das Kontaktelement in eine horizontale Richtung (vorzugsweise in Querrichtung, in Längsrichtung oder einer beliebig abgewinkelten horizontalen Richtung des Schubtransportwagens) federnd ausgebildet oder federnd abgestützt. Mit dem Einschieben der Schubtransportwagen ineinander kann somit das Kontaktelement in horizontaler Richtung, beispielsweise in Fahrzeugquerrichtung oder Fahrzeuglängsrichtung ausweichen, um den Ausgleichsbereich bereitzustellen.

Alternativ oder kumulativ möglich ist für eine Variante der Erfindung, dass das Kontaktelement in eine vertikale Richtung federnd ausgebildet ist oder federnd abgestützt ist. In diesem Fall kann ein erstes Kontaktelement eines ersten Schubtransportwagen von einem zweiten Kontaktelement eines zweiten Schubtransportwagens mit dem Einschieben überfahren oder unterfahren werden, wobei mindestens eines der Kontaktelemente auch rampenförmig ausgebildet sein kann. Mit dem Über- oder Unterfahren kann das Kontaktelement in vertikaler Richtung federnd nachgeben.

Vorgeschlagen wird auch, dass mindestens ein Kontaktelement als Kontaktgleitleiste ausgebildet ist. Ist ein erstes Kontaktelement eines ersten Schubtransportwagens als Kontaktgleitleiste ausgebildet, kann das zweite Kontaktelement des zweiten Schubtransportwagens mit dem Einschieben entlang der Kontaktgleitleiste gleiten. In diesem Fall kann das zweite Kontaktelement federnd ausgebildet oder abgestützt sein, während die Kontaktgleitleiste fest an dem Schubtransportwagen befestigt ist. Alternativ oder kumulativ kann aber auch die Kontaktgleitleiste federnd ausgebildet oder abgestützt sein. Der Gleitweg des Kontaktelements entlang der Kontaktgleitleiste kann einen Ausgleichsbereich bereitstellen. In diesem Fall kann ein zusätzlicher Ausgleichsbereich durch die federnde Ausbildung oder Abstützung des anderen Kontaktelements bereitgestellt werden.

Das federnd ausgebildete oder abgestützte Kontaktelement kann nicht vorgespannt sein, was zur Folge hat, dass dann, wenn dieses Kontaktelement in Richtung des anderen Kontaktelements des zweiten Schubtransportwagens bewegt wird, eine von Null mit zunehmender Bewegung ansteigende Kontaktkraft herbeigeführt wird. Möglich ist aber auch, dass das Kontaktelement vorgespannt ist derart, dass sich mit der Berührung der Kontaktelemente und weiterer Relativbewegung der Kontaktelement aufeinander zu die Kontaktkraft von einem Vorspannwert mit weiterer Bewegung erhöht.

Die Kontaktelemente können an beliebigen Stellen des Schubtransportwagens angeordnet sein. Für einen Vorschlag der Erfindung ist mindestens ein Kontaktelement an einem Fahrgestellrahmen angeordnet. Einerseits gewährleistet der Fahrgestellrahmen eine gute Abstützung des Kontaktelements, da der Fahrgestellrahmen für die Abstützung des Schubtransportwagens über die Fahrzeugräder ausgelegt ist und auch robust ist für die Aufnahme der Kräfte bei einer möglichen Kollision eines Schubtransportwagens mit der Umgebung. Befindet sich der Fahrgestellrahmen und das daran angeordnete Kontaktelement in einer geringen Höhe (insbesondere weniger als 30 cm, weniger als 25 cm oder weniger als 20 cm) über dem Boden, ist das Kontaktelement außerhalb des Bereichs angeordnet, in welchem dieses mit einer großen Wahrscheinlichkeit in Wechselwirkung mit dem Benutzer kommen kann, was bspw. nachteilig sein kann, wenn das Kontaktelement mit Strömen oder Spannungen beaufschlagt ist, die für den Benutzer unangenehm oder gesundheitsschädlich sind.

Vorzugsweise findet die Anordnung des mindestens einen Kontaktelements an dem Fahrgestellrahmen Einsatz für eine besondere Ausführungsform des Schubtransportwagens, bei dem an dem Fahrgestellrahmen mindestes eine Transporteinrichtung über Wägezellen abgestützt ist. Handelt es sich bei dem Schubtransportwagen um einen Einkaufswagen, kann es sich bei der Transporteinrichtung um eine Einkaufsartikelaufnahmeeinrichtung, insbesondere einen Einkaufswagenkorb, und/oder eine Einkaufsartikelaufnahmeplattform, insbesondere eine Aufstellplattform für Getränkekisten, handeln, wobei diese Einkaufsartikelaufnahmeeinrichtungen auch über einen Einkaufsartikelaufnahmerahmen gehalten sein können, der dann über die Wägezellen an dem Fahrgestellrahmen abgestützt ist. Hinsichtlich möglicher derartiger Ausgestaltungen des Schubtransportwagens mit über Wägezellen an dem Fahrgestellrahmen abgestützte Transporteinrichtungen wird insbesondere auf das Patent DE 10 2018 132 059 B1 der Anmelderin verwiesen, dessen Offenbarung zum Gegenstand der vorliegenden Patentanmeldung gemacht wird.

Im Rahmen der Erfindung gibt es vielfältige Möglichkeiten für die Gestaltung des Fahrgestellrahmens. Um lediglich eine nicht beschränkende Ausführungsform zu nennen, kann der Fahrgestellrahmen eine U-förmige Rahmenstruktur aufweisen. Die Öffnung des U kann dabei genutzt werden für das Ineinanderschieben der Schubtransportwagen. Die U-förmige Rahmenstruktur weist dabei einen Grundschenkel und zwei Seitenschenkel auf. Der Grundschenkel ist dabei im vorderen Endbereich des Schubtransportwagens angeordnet. Hingegen divergieren die von dem Grundschenkel ausgehenden Seitenschenkel nach hinten. Bei dem Einschieben der Fahrgestellrahmen von zwei Schubtransportwagen treten die in Einschieberichtung konvergierenden Seitenschenkel des hinteren Schubtransportwagens in die nach hinten divergierenden Seitenschenkel des vorderen Schubtransportwagens ein, womit eine gewisse Zentrier- und Führungswirkung herbeigeführt werden kann. Die U-förmige Rahmenstruktur kann dabei horizontal orientiert sein oder unter einem Winkel, der beispielsweise kleiner als 20° oder kleiner als 10° sein kann, gegenüber der Horizontalen geneigt sein.

Möglich ist, dass bei Verwendung einer derartigen U-förmigen Rahmenstruktur ein (erstes) Kontaktelement auf einer Außenseite eines Seitenschenkels angeordnet ist, während ein (zweites) Kontaktelement auf einer Innenseite desselben Seitenschenkels angeordnet ist. Auf diese Weise kann gewährleistet werden, dass die beiden Kontaktelemente bei dem Ineinanderschieben von zwei Schubtransportwagen einen elektrischen Kontakt ausbilden, wenn sich die entsprechenden Seitenschenkel der beiden Schubtransportwagen aneinander annähern. Hierbei sind die beiden Kontaktelemente an einem Schubtransportwagen in Längsrichtung des Seitenschenkels versetzt zueinander angeordnet, wobei dieser Versatz dem Versatz der Längsachsen der Schubtransportwagen in der eingeschobenen Stellung entsprechen können (wobei zusätzlich ein Ausgleichsbereich vorgesehen sein kann).

Alternativ oder zusätzlich ist ein Kontaktelement (vorzugsweise zwei Kontaktelemente) im Bereich des Grundschenkels angeordnet. Hierbei kann ein Kontaktelement eine Kontaktfläche aufweisen, die eine Flächennormale in Richtung der Längsachse des Schubtransportwagens aufweist und nach vorne oder hinten weist. Ebenfalls möglich ist, dass das Kontaktelement eine Kontaktfläche aufweist, deren Flächennormale in vertikaler Richtung orientiert ist. Beliebige andere Ausrichtungen der Kontaktfläche des Kontaktelements sind aber ebenfalls möglich, wobei sich die Ausrichtung auch mit einer Einfederung des Kontaktelements ändern kann. Hierbei umfasst die Anordnung des Kontaktelements "im Bereich des Grundschenkels", dass das Kontaktelement unmittelbar an dem Grundschenkel befestigt ist. Möglich ist aber auch, dass dies bedeutet, dass das Kontaktelement beabstandet an dem Grundschenkel oder an einem anderen Bauteil des Schubtransportwagens befestigt ist, sofern das Kontaktelement nicht einen größeren Abstand von dem Grundschenkel aufweist als der Abstand der beiden Grundschenkel von zwei Schubtransportwagen, wenn diese vollständig ineinander eingeschoben sind. Sind auf diese Weise ein erstes Kontaktelement sowie ein zweites Kontaktelement im Bereich des Grundschenkels angeordnet, können diese beiden Kontaktelemente beim Einschieben der Schubtransportwagen einen elektrischen Kontakt ausbilden. Für diese Ausführungsform kann ein Kontaktelement eine nach unten weisende Kontaktfläche aufweisen und das andere Kontaktelement eine nach oben weisende Kontaktfläche aufweisen.

Ein besonderer Aspekt der Erfindung betrifft für diese Ausgestaltung der Kontaktelemente die Integration des elektrischen Speichers und/oder der Elektrikeinrichtung in den Schubtransportwagen. Vorgeschlagen wird, dass der elektrische Speicher und/oder die Elektrikeinrichtung in einem Längsabschnitt angeordnet sind/ist, der sich zwischen dem Kontaktelement mit der nach unten weisenden Kontaktfläche und dem Kontaktelement mit der nach oben weisenden Kontaktfläche befindet. Dies führt einerseits zu einer kompakten Integration dieser Komponenten in den Schubtransportwagen. Unter Umständen kann auf diese Weise auch eine kurze elektrische Leitungsverbindung zwischen den Kontaktelementen und dem elektrischen Speicher und/oder der Elektrikeinrichtung gewährleistet werden.

Möglich ist, dass an dem Schubtransportwagen ein erstes Kontaktelement und ein zweites Kontaktelement vorgesehen sind, die beispielsweise der Übertragung elektrischer Leistung oder eines elektrischen Signals dienen können. Möglich ist auch, dass redundante elektrische Kontaktelemente vorhanden sind, wobei möglich ist, dass ein erstes Kontaktelement redundant vorhanden ist, während das zweite Kontaktelement lediglich einfach vorhanden ist, oder beide Kontaktelemente redundant bereitgestellt werden. Die redundanten Kontaktelemente können einerseits die Zuverlässigkeit erhöhen, indem bei einem Defekt eines Kontaktelements das redundante andere Kontaktelement genutzt wird. Möglich ist aber auch, dass die redundanten Kontaktelemente für unterschiedliche Einschiebestellungen der Schubtransportwagen ineinander zur Wirkung kommen, sodass mit den redundanten Kontaktelementen auch eine Ausgleichseinrichtung gebildet sein kann, deren Ausgleichbereich sich aus der Summe der Ausgleichbereiche der beiden redundanten Kontaktelemente ergibt. Möglich ist, dass mindestens ein Paar von Kontaktelementen vorhanden, die in diesem Fall redundante Kontaktelemente bilden können oder zur Übertragung unterschiedlicher Signale dienen können. Ebenfalls möglich ist, dass in dem Paar der Kontaktelemente ein Kontaktelement als Zuleitung in einem elektrischen Kreis verwendet wird, während das andere Kontaktelement des Paars der Kontaktelemente als Rückführleitung des elektrischen Kreises verwendet wird. Um lediglich einige die Erfindung nicht beschränkende Beispiele zu nennen, kann das Paar der Kontaktelemente von einer Art Doppelzunge oder einer Doppelkontaktgleitleiste ausgebildet sein.

In einem erfindungsgemäßen Schubtransportwagen kann ein Strukturelement vorhanden sein, welches einen Innenraum aufweist. Bei diesem Strukturelement kann es sich um ein Rahmenelement, ein Profilelement, einen Tragrahmen o. ä. handeln. Der Innenraum kann dabei einen randgeschlossenen Querschnitt aufweisen oder geschlitzt sein oder eine beliebige Öffnung aufweisen. In diesem Fall kann sich durch den Innenraum des Strukturelements ein Kabel erstrecken. Hierbei kann das Kabel von einem der Kontaktelemente ausgehen und beispielsweise mit dem elektrischen Speicher und/oder der Elektrikeinrichtung verbunden sein, zu einem anderen Ort wie einer Handhabungseinrichtung führen oder der Verbindung über weitere Kontaktelemente mit einem weiteren Schubtransportwagen dienen.

Für einen Vorschlag der Erfindung ist das Kontaktelement einstellbar. Möglich ist, dass die Position des Kontaktelements, an der das Kontaktelement an dem Schubtransportwagen, insbesondere einem Fahrgestellrahmen, angeordnet ist, einstellbar sein, um eine Einstellung der Relativposition der ineinander geschobenen Schubtransportwagen vornehmen zu können, in welcher der elektrische Kontakt hergestellt ist. Alternativ oder kumulativ kann das Kontaktelement hinsichtlich seiner Orientierung einstellbar sein. Alternativ oder kumulativ kann das Kontaktelement hinsichtlich seiner Elastizität einstellbar sein, um beispielsweise Einfluss auf die bei dem Einschieben der Schubtransportwagen ineinander herbeigeführte Kontaktkraft an dem Kontaktelementen zu nehmen und/oder die von dem Benutzer für die Erzeugung der Kontaktkraft aufzubringenden Schubkräfte zu nehmen. Alternativ oder kumulativ möglich ist, dass die Vorspannung des Kontaktelements, die Elastizität und/oder die Federkonstante einer federnden Abstützung einstellbar sind/ist.

Eine besondere Ausführungsform der Erfindung wird im Folgenden erläutert für die Ausgestaltung des Schubtransportwagens als Gepäckwagen. Ein derartiger Gepäckwagen kann eine Feststellbremse aufweisen. Die Feststellbremse kann grundsätzlich über eine Federeinrichtung in eine Parkstellung beaufschlagt sein, in der die Feststellbremse betätigt ist. Auf diese Weise kann der Gepäckwagen gegen ein Wegrollen gesichert sein. Der Benutzer kann dann, wenn der Benutzer den Gepäckwagen bewegen möchte, die Feststellbremse manuell von der Parkstellung in eine Lösestellung überführen. Dies erfolgt üblicherweise durch manuelle Betätigung eines Löseelements, welches im Bereich einer Handhabungseinrichtung des Gepäckwagens angeordnet ist. Diese Löseeinrichtung ist vorzugsweise als manuell verschwenkbare Schubstange des Gepäckwagens ausgebildet, über die der Benutzer den Gepäckwagen schiebt. Verschwenkt der Benutzer die Schubstange nach unten, wird die Feststellbremse gelöst. Um zu ermöglichen, dass mehrere ineinander geschobene Gepäckwagen gemeinsam verschoben werden können, wenn der Benutzer nur die Schubstange des letzten Gepäckwagens herunterdrückt, erfolgt bei dem Einschieben der Gepäckwagen ineinander eine automatische Überführung der Feststellbremse in die Lösestellung. Zu diesem Zweck weisen die Schubtransportwagen ein Betätigungselement auf, welches bewegungsgesteuert durch die Einschiebebewegung des Schubtransportwagens in einen zweiten entsprechenden Schubtransportwagen entgegen der Beaufschlagung durch die Federeinrichtung in eine Lösestellung bewegbar ist. Diese Bewegung des Betätigungselements ist kinematisch gekoppelt mit der Betätigung eines Bremselements der Feststellbremse, welches in der Parkstellung gegen ein Fahrzeugrad gepresst wird und in der Lösestellung beabstandet von dem Fahrzeugrad angeordnet ist. Beispiele für derartige Gepäckwagen mit Feststellbremse sind in dem Patent DE 10 2005 003 730 B4 der Anmelderin beschrieben, dessen Offenbarung zum Gegenstand der vorliegenden Patentanmeldung gemacht wird. Die Erfindung schlägt vor, dass an dem Betätigungselement für die Feststellbremse mindestens ein Kontaktelement angeordnet ist. Auf diese Weise kann der Kontakt des Betätigungselements eines Schubtransportwagens mit einer Betätigungsfläche eines anderen Schubtransportwagens, die ebenfalls mit einem Kontaktelement ausgestattet ist, multifunktional genutzt werden, nämlich einerseits für das Lösen der Feststellbremse und andererseits für die Herstellung des elektrischen Kontakts. In diesem Fall kann sogar die Federeinrichtung, die das Betätigungselement beaufschlagt, multifunktional genutzt sein, da diese nicht nur der Bereitstellung der Feststellbremswirkung dient, sondern auch die Kontaktkraft für das Kontaktelement gewährleistet.

Das Betätigungselement kann beispielsweise als verschwenkbarer Hebel ausgebildet sein, wobei über die Hebellänge und/oder die kinematische Verbindung des Betätigungselements mit dem Bremselement auch ein gewünschtes Verhältnis der Kontaktkraft einerseits und der Feststellbremskraft andererseits konstruktiv vorgegeben werden kann.

Der erfindungsgemäße Schubtransportwagen kann auch über eine mechanische Verbindungseinrichtung verfügen. Über die mechanische Verbindungseinrichtung ist der Schubtransportwagen mechanisch mit einem anderen Schubtransportwagen und/oder einer Bevorratungs- und/oder Ladestation verbindbar. Ohne dass dies zwingend der Fall ist, kann über die mechanische Verbindungseinrichtung eine Arretierung des Schubtransportwagens an einem Abstellort, insbesondere im Bereich der Bevorratungs- und/oder Ladestation erfolgen, wobei eine mehr oder weniger große Arretier- oder Sicherungskraft durch die mechanische Verbindungseinrichtung bereitgestellt werden kann. Für herkömmliche Einkaufswagen ist oftmals die mechanische Verbindungseinrichtung als Sicherungskette eines Schubtransportwagens ausgebildet, wobei die Sicherungskette dann endseitig eine Einsteckzunge aufweist, die in eine entsprechende Steckeraufnahme eines benachbarten Schubtransportwagens eingesteckt werden kann. Eine Sicherung der Einsteckzunge in der Steckeraufnahme kann dann über ein Münzschloss erfolgen, womit gewährleistet wird, dass eine Entnahme des Schubtransportwagens lediglich mit Einlegen einer Münze in das Münzschloss möglich ist und der Benutzer dazu angehalten ist, nach der Benutzung den Schubtransportwagen wieder mit einem anderen Schubtransportwagen oder der Bevorratungs- und/oder Ladestation zu verbinden, um die Münze aus dem Münzschloss zurück zu erhalten. Die mechanische Sicherungseinrichtung ist vorzugsweise unmittelbar oder mittelbar an einer Handhabungseinrichtung wie ein Griff oder eine in Querrichtung des Schubtransportwagens orientierte Schubstange, über den oder die der Benutzer den Schubtransportwagen schiebt, befestigt.

Erfindungsgemäß kann die mechanische Verbindungseinrichtung multifunktional genutzt werden. Zu diesem Zweck sind die mechanische Verbindungseinrichtung und eine elektrische Verbindungseinrichtung zusammengefasst, wobei vorzugsweise die elektrische Verbindungseinrichtung in die mechanische Verbindungseinrichtung integriert ist. Dabei sind die mechanische Verbindungseinrichtung und die elektrische Verbindungseinrichtung so konfiguriert, dass bei der mechanischen Verbindung der mechanische Verbindungseinrichtung mit der der mechanischen Verbindungseinrichtung eines benachbarten Schubtransportwagens oder der Bevorratungs- und/oder Ladestation mindestens eine elektrische Verbindung der elektrischen Verbindungseinrichtung mit einer elektrischen Verbindungseinrichtung des anderen Schubtransportwagens oder der Bevorratungs- und/oder Ladestation geschaffen wird. Über diese geschaffene elektrische Verbindung kann dann ein elektrischer Leistungsaustausch und/oder ein Signalaustausch und/oder ein Datenaustausch zwischen den beiden Schubtransportwagen erfolgen. Der elektrische Leistungsaustausch kann dabei der Veränderung des Ladezustandes dienen, wobei möglich ist, dass über die geschaffene elektrische Verbindung der elektrische Speicher aufgeladen wird. Möglich ist aber auch, dass der elektrische Speicher über die elektrische Verbindung entladen wird, wobei die entladene elektrische Leistung an den anderen Schubtransportwagen übertragen wird zum Aufladen desselben oder zur Weitergabe an einen weiteren Schubtransportwagen.

Ein etwaiger Signalaustausch über die geschaffene elektrische Verbindung kann der Übertragung eines Messsignals, beispielsweise hinsichtlich einer Betriebsgröße, einem Austausch einer spezifischen Kenngröße für den Schubtransportwagen u. ä. dienen.

Ein etwaiger Datenaustausch über die elektrische Verbindung kann beispielsweise dem Austausch einer Information über den Ladezustand des elektrischen Speichers dienen oder dem Austausch der Information dienen, ob mit den Schubtransportwagen auf einer der Ladestation abgewandten Seite ein weiterer Schubtransportwagen verbunden ist.

Möglich ist, dass der elektrische Kontakt der Kontaktelemente (insbesondere im Bereich des Fahrgestellrahmens) einerseits und die elektrische Verbindung über die elektrische Verbindungseinrichtung andererseits unterschiedlichen Zwecken dienen, wobei beispielsweise über die elektrischen Kontaktelemente das Laden des Speichers erfolgen kann und über die elektrische Verbindungseinrichtung eine Übertragung elektrischer Signale erfolgen kann (oder umgekehrt). Möglich ist aber auch, dass ein elektrischer Kontakt von Kontaktelementen der beiden Schubtransportwagen und die elektrische Verbindung über die elektrische Verbindungseinrichtung zur Bereitstellung eines elektrischen Kreises dienen, sodass beispielsweise der elektrische Kontakt der Kontaktelemente der Verbindung mit einem ersten Pol einer Leistungsquelle sowie die elektrische Verbindungseinrichtung einer Verbindung mit einem zweiten Pol einer elektrischen Leistungsquelle dient. Das Entsprechende gilt für die Nutzung in einem gemeinsamen Kreis für eine Übertragung des elektrischen Signals.

Für einen weiteren Vorschlag der Erfindung weist die mechanische Verbindungseinrichtung eine Sicherungskette auf. Hierbei ist durchaus möglich, dass ein elektrischer Leiter der elektrischen Verbindungseinrichtung separat von der Sicherungskette, aber als eine räumliche zusammengefasste Einheit ausgebildet ist. Für einen besonderen Vorschlag der Erfindung bilden lose aneinander anliegende Glieder der Sicherungskette einen elektrischen Leiter der elektrischen Verbindungseinrichtung, wobei dann eine zusätzliche Isolierung die Sicherungskette umgeben kann oder die Glieder der Sicherungskette abseits der Kontaktstellen derselben eine Isolierung aufweisen können. Sind die Ströme und/oder Spannungen, die über den von den Gliedern der Sicherungskette gebildeten Leiter übertragen werden, so klein, dass diese nicht zu Beeinträchtigungen des Benutzers führen, wenn dieser mit den Gliedern der Sicherungskette in Kontakt kommt, oder dann, wenn über die Glieder und die elektronische Verbindungseinrichtung lediglich ein Leitungszweig eines anderweitig geschlossenen Kreises übertragen wird, kann die Sicherungskette oder können die Glieder der Sicherungskette auch überhaupt nicht isoliert sein.

Im Rahmen der Erfindung kann in dem Schubtransportwagen ein Münzschloss grundsätzlich bekannter Art vorhanden sein, bei dem für das Lösen der mechanischen Verbindungseinrichtung das Einlegen einer Münze in das Münzschloss erforderlich ist. Möglich ist aber auch, dass eine beliebige anderweitige mechanische Sicherung, Verrastung und Verriegelung erfolgt, wobei beispielsweise auch möglich ist, dass ein mittels eines elektrischen Aktuators betätigtes Schloss Einsatz findet, welches von einem Benutzer mittels einer portablen netzfähigen Elektronikeinrichtung (insbesondere einem Smartphone mittels einer App des Betreibers des Einkaufszentrums) betätigt werden kann.

Für die konstruktive Ausgestaltung der Verbindungseinrichtungen des Schubtransportwagens gibt es im Rahmen der Erfindung vielfältige, teilweise auch aus dem Stand der Technik bekannte Möglichkeiten. Für einen Vorschlag weist die mechanische Verbindungseinrichtung eine elektrisch leitende Einsteckzunge und eine Steckeraufnahme auf. Eine Einsteckzunge eines Schubtransportwagens ist dann in die Steckeraufnahme eines benachbarten Schubtransportwagens einsteckbar. In diesem Fall kann die Steckeraufnahme ein elastisches oder elastisch abgestütztes elektrisches Steckerkontaktelement aufweisen, welches dann einen elektrischen Kontakt mit der Einsteckzunge ausbildet. Das Steckerkontaktelement kann beispielsweise als Federkontakt oder elastische Kontaktklemme ausgebildet sein, in die die Einsteckzunge eingeschoben werden kann. Alternativ oder kumulativ möglich ist, dass die Einsteckzunge eine Rast- oder Verriegelungsfläche aufweist. Die Rast- oder Verriegelungsfläche der Einsteckzunge tritt zur Verrastung oder Verriegelung in Wechselwirkung mit einem Rast- oder Verriegelungselement einer Steckeraufnahme des benachbarten Schubtransportwagens oder der Bevorratungs- und/oder Ladestation.

Die elektrische Verbindungseinrichtung kann eine beliebige Anzahl von Anschlüssen, Anschlussleisten oder Schnittstellen aufweisen je nach Bedarf der zu übertragenen elektrischen Signale, Daten, Ströme oder Spannungen. Für einen besonderen Vorschlag der Erfindung weist die elektrische Verbindungseinrichtung redundante Anschlüsse, Anschlussleisten oder Schnittstellen auf. Die redundanten Anschlüsse, Anschlussleisten oder Schnittstellen sind dann jeweils für unterschiedliche Montageorientierungen der mechanischen Verbindungseinrichtung nutzbar. Um lediglich ein die Erfindung nicht beschränkendes Beispiel zu nennen, kann ein Stecker eines Schubtransportwagens in zwei um 180° um seine Längsachse verdrehten Ausrichtungen in einer Steckeraufnahme eines benachbarten Schubtransportwagens eingesetzt werden. In diesem Fall sind die redundanten Anschlüsse, Anschlussleisten oder Schnittstellen so auf in Umfangsrichtung um die Längsachse gegenüberliegenden Seiten und in gleichem Abstand von der Längsachse angeordnet, dass für die beiden unterschiedlichen Montageorientierungen jeweils ein Anschluss, eine Anschlussleiste oder eine Schnittstelle der beiden redundanten Anschlüsse, Anschlussleisten oder Schnittstellen in derselben Position angeordnet ist, sodass dieser oder diese dann mit einem einzigen Anschluss, einer einzigen Anschlussleiste oder einer einzigen Schnittstelle des anderen Schubtransportwagens in Wechselwirkung treten kann. Auf diese Weise wird die Benutzung für den Benutzer vereinfacht und eine fehlerhafte Montage, bei der die elektrische Kontaktierung nicht den Erfordernissen entspricht, zuverlässig vermieden. Vorzugsweise gibt die mechanische Verbindungseinrichtung mechanisch die beispielsweise zwei möglichen unterschiedlichen Montageorientierungen vor, was beispielsweise durch entsprechende korrespondierende Geometrien des Querschnitts der Einsteckzunge und der zugeordneten Steckeraufnahme gewährleistet werden kann.

Während grundsätzlich die elektrische Verbindungseinrichtung und die beiden elektrischen Komponenten des Schubtransportwagens und des benachbarten Schubtransportwagens oder der Bevorratungs- und/oder Ladestation, welche miteinander verbunden werden, konstruktiv und geometrisch beliebig ausgebildet sein können, weist für einen erfindungsgemäßen Schubtransportwagen die elektrischen Verbindungseinrichtung einen Stecker und/oder eine Steckeraufnahme auf. In diesem Fall kann der Stecker oder kann die Steckeraufnahme ein elektrisches Steckerkontaktelement aufweisen. Dieses elektrische Steckerkontaktelement kann dann in die Einführrichtung eines Steckers in die Steckeraufnahme elastisch sein oder elastisch abgestützt sein. Für diese Ausgestaltung ist möglich, dass eine Montage der mechanischen Verbindungseinrichtung über einen gewissen Montageweg in die Einführrichtung des Steckers in die Steckeraufnahme erfolgt, wobei über diesen Montageweg der Stecker in der Steckeraufnahme geführt sein kann. In einem letzten Teilweg des Montagewegs kann dann das elastisch abgestützte oder elastische elektrische Steckerkontaktelement zur Anlage an eine Kontaktfläche des Steckers oder der Steckeraufnahme kommen. Mit weiterer Montage über den letzten Teilweg wird dann das elektrische Steckerkontaktelement mit einer zunehmenden Kontaktkraft beaufschlagt, was zu einer zunehmenden elastischen Verformung des elektrischen Steckerkontaktelements selbst oder der elastischen Abstützung derselben erfolgt. Auf diese Weise kann einerseits die Herbeiführung der erwünschten Kontaktkraft des Steckerkontaktelementes gewährleistet werden. Andererseits ergibt sich über diesen elastischen Kontaktweg des Steckerkontaktelementes eine Robustheit der elektrischen Kontaktierung unabhängig von etwaigen Schwankungen des Montagewegs und/oder Fertigungstoleranzen.

Möglich ist, dass der Stecker und die Steckeraufnahme eine Einführhilfe ausbilden, über die beispielsweise eine Art Zentrierung über den Montageweg erfolgen kann. Vorteilhaft ist, wenn diese Einführhilfe gewährleistet, dass vor dem Beginn des Kontaktierungswegs oder letzten Teilwegs bereits ein Fluchten der Längsachsen des Steckers und der Steckeraufnahme herbeigeführt wird, sodass dann, wenn das Steckerkontaktelement des Steckers oder der Steckeraufnahme zur Anlage an die Steckeraufnahme oder den Stecker kommt, dass Steckerkontaktelement bereits an der bestimmungsgemäßen Kontaktfläche zur Anlage kommt. Somit ist eine passgenaue Kontaktierung ermöglicht, wobei der Benutzer durch die Einführhilfe unterstützt wird.

Für einen erfindungsgemäßen Schubtransportwagen weist die mechanische Verbindungseinrichtung einen Magneten auf, bei dem es sich insbesondere um einen Permanentmagneten handelt. Vorzugsweise weisen dabei der Stecker eines Schubtransportwagens und die Steckeraufnahme des benachbarten Schubtransportwagens jeweils einen Permanentmagneten auf, wobei die Pole dieser Permanentmagnete so orientiert sind, dass sich bei der Herstellung der mechanischen Verbindung die beiden Permanentmagnete anziehen. Über den Permanentmagneten der mechanischen Verbindungseinrichtung kann eine Sicherung der mechanischen Verbindung mit der Magnetkraft erfolgen. Diese Magnetkraft kann auch gewährleisten, dass die über die elektrische Verbindungseinrichtung geschaffene elektrische Verbindung gegen ein unbeabsichtigtes Lösen gesichert werden. Möglich ist aber auch, dass lediglich ein Permanentmagnet entweder in dem Stecker [oder in der Steckeraufnahme] angeordnet ist, der dann ein Magnetkraft mit einem metallischen Körper in der Steckeraufnahme [oder in dem Stecker] erzeugt. Anstelle des mindestens einen Permanentmagneten kann auch ein Elektromagnet verwendet werden. Neben einer Gewährleistung des Kontakts zwischen dem Stecker und der Steckeraufnahme stellt der mindestens eine Magnet auch eine mechanische Sicherungskraft bereit. Im Fall des Einsatzes eines Elektromagneten kann die Freigabe der mechanischen Sicherung durch diesen von einer Authentifizierung eines Benutzers abhängig gemacht werden.

Für einen besonderen Vorschlag der Erfindung ist an dem Schubtransportwagen beabstandet von der in die mechanische Verbindungseinrichtung integrierten elektrischen Verbindungseinrichtung eine weitere elektrische Verbindungseinrichtung, die von den Kontaktelementen bereitgestellt ist.

Im Rahmen der Erfindung ist grundsätzlich möglich, dass die beiden elektrischen Verbindungseinrichtungen zu unterschiedlichen Zwecken, insbesondere zur Übertragung unterschiedlicher Signale, zur Übertragung einerseits von Daten und andererseits von elektrischer Leistung u. ä. genutzt werden. Für einen besonderen Vorschlag der Erfindung bilden die elektrische Verbindungseinrichtung und die weitere elektrische Verbindungseinrichtung mindestens einen geschlossenen Kreis derart, dass der elektrische Kreis eine Hin-Leitung von der Bevorratungs- und/oder Ladestation oder dem benachbarten Schubtransportwagen zu dem Schubtransportwagen aufweist, die von der elektrischen Verbindungseinrichtung bereitgestellt wird, sowie eine Rück-Leitung aufweist, die von der weiteren elektrischen Verbindungseinrichtung mit den Kontaktelementen bereitgestellt wird und von dem Schubtransportwagen zu der Bevorratung- und/oder Ladestation oder zu dem benachbarten Schubtransportwagen zurückführt. In diesem Fall ist der elektrische Kreis lediglich dann geschlossen, wenn beide elektrische Verbindungseinrichtungen eine Verbindung herstellen. Über den elektrischen geschlossenen Kreis kann dann bspw. eine Übertragung elektrischer Leistung (oder aber von Daten oder von Signalen) erfolgen. Ist abweichend zu dieser Ausführungsform ein geschlossener Kreis allein von der in die mechanischen Verbindungseinrichtung integrierten elektrischen Verbindungseinrichtung bereitgestellt, sodass an demselben Bauelement Anschlüsse für die Zu-Leitung und die Rück-Leitung vorhanden sind, könnte ein Kontakt des Benutzers mit beiden Anschlüssen zu einem Kurzschluss über den Benutzer führen, der für den Benutzer unangenehm sein kann oder sogar zu gesundheitlichen Schädigungen führen kann. Ein derartiger Kurzschluss ist für die hier erläuterte Ausführungsform erschwert oder vermieden: Befindet sich beispielsweise die weitere elektrische Verbindungseinrichtung im Bereich des Fahrgestells des Schubtransportwagens, müsste der Benutzer für einen derartigen Kurzschluss gleichzeitig beide elektrischen Verbindungseinrichtungen kontaktieren und den Abstand zwischen diesen beiden elektrischen Verbindungseinrichtungen überbrücken, was unwahrscheinlich oder je nach Lage der Verbindungseinrichtungen unmöglich ist.

Die elektrische Verbindungseinrichtung und/oder die Kontaktelemente können/kann beliebige Anschlüsse beinhalten oder bilden, die einzeln ausgebildet sein können, in eine Anschluss- oder Steckerleiste integriert sein können oder in einer beliebig gestalteten Schnittstelle vorgesehen sein können. Möglich ist beispielweise, dass die elektrische Verbindungseinrichtung und/oder die Kontaktelemente Anschlüsse für eine elektrische Leistungsversorgung aufweisen können. Hierbei kann die elektrische Verbindungseinrichtung und/oder können die Kontaktelemente für eine Übertragung eines Gleichstroms oder Wechselstroms oder beliebiger anderer elektrischer Signale dienen.

Alternativ oder kumulativ möglich ist, dass die elektrische Verbindungseinrichtung mindestens einen Anschluss aufweist für eine Ladestationserkennung oder der Kontakt der Kontaktelemente einer Ladestationserkennung dient. Diese Ladestationserkennung kann beispielsweise eine durch eine Reihe von miteinander verbundenen Schubtransportwagen durchgeschleifte Leitung aufweisen, über die ein elektrisches Signal von einer Steuereinheit des Schubtransportwagens empfangen werden kann, welches Aufschluss darüber gibt, ob die Reihe von Schubtransportwagen an eine Ladestation angeschlossen ist und somit eine Ladespannung an der Reihe der Schubtransportwagen anliegt oder nicht. Alternativ oder kumulativ kann die elektrische Verbindungseinrichtung einen (Hilfs-)Anschluss aufweisen oder können die Kontaktelemente als (Hilfs-)Anschluss dienen, über den beliebige zusätzliche Signale übertragen werden können oder auch Messsignale von Sensoren benachbarter Schubtransportwagen übertragen werden können. Alternativ oder kumulativ kann die elektrische Verbindungseinrichtung mindestens einen Anschluss für eine Signalübertragung und/oder eine Datenübertragung aufweisen oder die Kontaktelemente werden hierzu genutzt.

Durchaus möglich ist, dass in dem Schubtransportwagen der Speicher permanent mit der elektrischen Verbindungseinrichtung oder den Kontaktelementen verbunden ist, was zur Folge hat, dass immer dann, wenn an der elektrischen Verbindungseinrichtung oder den Kontaktelementen eine Versorgungspannung anliegt, der Speicher mit der Versorgungsspannung beaufschlagt wird und je nach Speicherzustand ein Laden des Speichers oder ein Entladen des Speichers erfolgt. Für eine erfindungsgemäße Ausgestaltung des Schubtransportwagens weist dieser eine Speicher-Freigabeeinrichtung auf. Die Speicher-Freigabeeinrichtung ist zwischen die elektrische Verbindungseinrichtung oder die Kontaktelemente und den Speicher zwischengeschaltet und derart ausgebildet, dass die Speicher-Freigabeeinrichtung in einer Freigabestellung derselben den Speicher mit der elektrischen Verbindungseinrichtung oder den Kontaktelementen verbindet, um eine Veränderung des Ladezustandes des Speichers über die elektrische Verbindungseinrichtung zu ermöglichen. Hingegen verfügt die Speicher-Freigabeeinrichtung auch über eine Trennstellung. In der Trennstellung trennt die Speicher-Freigabeeinrichtung den Speicher elektrisch von der elektrischen Verbindungseinrichtung oder den Kontaktelementen. Im einfachsten Fall ist die Speicher-Freigabeeinrichtung als eine Art elektronischer Schalter ausgebildet, der die Freigabestellung und die Trennstellung aufweist. Die Freigabestellung kann dabei dazu dienen, den Ladezustand des Speichers zu verändern, was darin bestehen kann, dass der Speicher über eine an der elektrischen Verbindungseinrichtung oder den Kontaktelementen anstehende Ladespannung aufgeladen wird. Ebenfalls möglich ist, dass in der Freigabestellung ein Entladen des Speichers erfolgt, sodass der Speicher über die elektrische Verbindungseinrichtung oder die Kontaktelemente elektrische Leistung an einen benachbarten Schubtransportwagen abgeben kann.

Befindet sich die Speicher-Freigabeeinrichtung in der Trennstellung, kann keine Verarbeitung der an der elektrischen Verbindungseinrichtung oder den Kontaktelementen anstehenden Spannung erfolgen. Ebenfalls möglich ist, dass die hier anstehende Spannung nicht zur Veränderung des Ladezustandes des Speichers verwendet wird, aber diese von dem Schubtransportwagen an einen benachbarten Schubtransportwagen weitergegeben wird.

Möglich ist, dass eine Ladefluss-Steuereinheit vorhanden ist. Diese Ladefluss-Steuereinheit ist dann zwischen den Stecker und die Steckeraufnahme (wenn über diese das Laden erfolgt) und/oder die Kontaktelemente (wenn über diese das Laden erfolgt) zwischengeschaltet. Des Weiteren verbindet die Ladefluss-Steuereinheit den Stecker oder die Steckeraufnahme oder die Kontaktelement mit dem Speicher, was gegebenenfalls über die Speicher-Freigabeeinrichtung erfolgen kann. Die Ladefluss-Steuereinheit kann dann zwei unterschiedliche Betriebsmodi aufweisen, nämlich einen Durchleitungs-Betriebsmodus und einen Lade-Betriebsmodus:
In dem Durchleitungs-Betriebsmodus verbindet die Ladefluss-Steuereinheit den Stecker mit der Steckeraufnahme oder die Kontaktelemente miteinander, sodass eine Durchleitung elektrischer Energie durch den Schubtransportwagen zwecks Übertragung an einen benachbarten Schubtransportwagen möglich ist. In dem Durchleitungs-Betriebsmodus trennt die Ladefluss-Steuereinheit gleichzeitig die Verbindung des Speichers mit dem Stecker oder der Steckeraufnahme oder die Verbindung des Speichers mit mindestens einem Kontaktelement, sodass keine Beeinflussung des Ladezustandes des Speichers erfolgt.

Hingegen trennt die Ladefluss-Steuereinheit in dem Lade-Betriebsmodus den Stecker von der Steckeraufnahme oder die Kontaktelemente voneinander, sodass keine Durchleitung oder Weitergabe der elektrischen Energie erfolgt. Vielmehr gewährleistet in dem Lade-Betriebsmodus die Ladefluss-Steuereinheit eine Verbindung des Speichers mit dem Stecker oder der Steckeraufnahme oder mindestens einem Kontaktelement, womit ein Aufladen des Speichers (oder auch ein Entladen des Speichers) über den Stecker oder die Steckeraufnahme oder das oder die Kontaktelement(e) möglich ist.

Unter Umständen kann wünschenswert sein, dass für eine an eine Ladestation angeschlossene Reihe von Schubtransportwagen lediglich eine Durchleitung elektrischen Energie von der Ladestation in eine Richtung zu dem am weitesten von der Ladestation entfernt angeordneten Schubtransportwagen erfolgen soll, während keine Ermöglichung eines Stroms in umgekehrter Richtung erfolgen soll. In diesem Fall kann zwischen den Stecker und die Steckeraufnahme bzw. zwischen die Kontaktelemente eine richtungsbestimmende Stromflusskomponente zwischengeschaltet sein, bei der es sich insbesondere um eine Diode handelt. Soll hingegen eine Steuerbarkeit der Richtung des möglichen Stromflusses gegeben sein, kann auch ein Bypass zu der Diode oder zu der richtungsbestimmenden Komponente vorhanden sein, bei dessen Freigabe auch eine Umkehrung des Stromflusses zugelassen wird.

Für einen erfindungsgemäßen Schubtransportwagen verfügt dieser über einen Stromsensor oder -schalter. Der Stromsensor oder -schalter kann für eine Steuerung oder Regelung des Flusses der elektrischen Signale verwendet werden. Um lediglich ein die Erfindung nicht beschränkendes Beispiel zu nennen, kann dem hinsichtlich der Ladestation ausgangsseitigen Stecker oder der ausgangsseitigen Steckeraufnahme oder dem ausgangsseitigen Kontaktelement ein Stromsensor oder -schalter vorgeordnet sein. Handelt es sich in der Reihe der an die Ladestation angeschlossenen Schubtransportwagen um den am weitesten von der Ladestation angeschlossenen Schubtransportwagen, fließt über diesen ausgangsseitigen Stecker oder die Steckeraufnahme oder das Kontaktelement kein Strom, da hier kein weiterer Schubtransportwagen angeschlossen ist. Der Stromsensor oder -schalter kann somit erkennen, dass keine Durchleitung von Strom erfolgt und somit eine Sperrung des ausgangsseitigen Steckers oder der Steckeraufnahme oder des ausgangsseitigen Kontaktelements herbeiführen. Dies kann beispielsweise dadurch erfolgen, dass die zuvor erwähnte Ladefluss-Steuereinheit dieses äußersten Schubtransportwagens in den Lade-Betriebsmodus umgeschaltet wird oder ein Trenn-Betriebsmodus der Ladefluss-Steuereinheit herbeigeführt wird, indem der eingangsseitige Stecker oder die eingangsseitige Steckeraufnahme oder das eingangsseitige Kontaktelement weder mit dem Speicher noch mit der ausgangsseitigen Steckeraufnahme oder dem ausgangsseitigen Stecker oder dem ausgangsseitigen Kontaktelement verbunden ist.

Möglich ist, dass die Ladestation elektrische Leistung durch Bereitstellung einer Gleichspannung oder eine Wechselspannung bereitstellt, die dann zum Aufladen des Speichers genutzt werden kann. Für einen Vorschlag der Erfindung ist auch möglich, dass die Ladestation Wechselspannung bereitstellt. In diesem Fall verfügen die Schubtransportwagen dann über einen AC/DC-Spannungswandler, der die von der Ladestation bereitgestellte Wechselspannung umwandelt in eine Gleichspannung, die dann zum Aufladen des Speichers genutzt werden kann. Findet eine AC-Spannung Einsatz, ergibt sich eine Unabhängigkeit von der Polung.

Für einen weiteren Vorschlag der Erfindung weist der Schubtransportwagen eine Ladeeinrichtung auf, mittels welcher eine portable netzfähige Elektronikeinrichtung des Kunden, insbesondere ein Smartphone, aufgeladen werden kann. Hierbei erfolgt die Aufladung aus dem Speicher des Schubtransportwagens, wobei alternativ oder kumulativ oder temporär auch ein Aufladen mit Energie aus der Ladestation erfolgen kann. Hierbei kann die Ladeeinrichtung kabelgebunden oder kabellos mit der portablen netzfähigen Elektronikeinrichtung des Kunden verbunden sein, wozu bspw. eine induktive Ladeschale Einsatz finden kann.

Durchaus möglich ist, dass ein von der Ladestation bereitgestelltes Spannungsniveau dem Spannungsniveau des "Bordnetzes" des Schubtransportwagens entspricht. Die Erfindung schlägt aber für eine besondere Ausführungsform vor, dass der Schubtransportwagen einen Spannungswandler aufweist, der das Spannungsniveau verändert. Bei einem derartigen Spannungswandler kann es sich beispielsweise um einen sogenannten Buck-Boost-Converter oder Inverswandler handeln. Um lediglich ein die Erfindung nicht beschränkendes Beispiel zu nennen, kann die Ladestation elektrische Leistung mit einem niedrigen Spannungsniveau, beispielsweise mit einem Spannungsniveau von maximal 24 V, maximal 12 V oder maximal 5 V bereitstellen, wobei auch Abweichungen von diesen Maxima ± 2 V oder ± 1 V möglich sind. Das Spannungsniveau ist dabei derart gewählt, dass dieses nicht zu Beeinträchtigungen des Benutzers führt, wenn mit diesem Spannungsniveau ein Kurzschluss über den Benutzer erfolgt. Dieses Spannungsniveau wird dann ausschließlich für die Kommunikation zwischen der Ladestation und/oder den Schubtransportwagen genutzt. Mittels des Spannungswandlers wird dann das Spannungsniveau angehoben auf ein Spannungsniveau, welches beispielsweise mehr als 20 %, mehr 50 % oder mehr als 100 % größer ist als das zuvor spezifizierte Spannungsniveau und bei einem Kurzschluss dieses Spannungsniveaus über den Benutzer zu Beeinträchtigungen des Benutzers führen könnte. Das höhere Spannungsniveau kann dann für den Betrieb der Elektronikeinrichtungen und das Aufladen und den Betrieb des Speichers genutzt werden.

Für einen weiteren Vorschlag der Erfindung ist in dem Schubtransportwagen eine drahtlose Sende- und/oder Empfangseinrichtung (insbesondere eine Bluetooth-Einrichtung, eine LoRa-Einrichtung. eine BLE-Einrichtung und/oder eine WiFi-Einrichtung) vorhanden. Mittels der drahtlosen Sende- und/oder Empfangseinrichtung kann der Schubtransportwagen bspw. mit der Bevorratungs- und/oder Ladestation, einem Server und einer Recheneinheit des Einkaufsmarkts, einer Kasseneinrichtung des Einkaufsmarktes und/oder einer portablen netzfähigen Elektronikeinrichtung des Kunden kommunizieren, um beliebige Daten in eine der Richtungen oder bidirektional Daten auszutauschen. Erfolgt beispielsweise eine Erfassung von in einen Einkaufswagen eingelegten Artikeln, kann über die drahtlose Sende- und/oder Empfangseinrichtung eine Übertragung der Artikel an das Kassensystem erfolgen, womit dann ein automatisierter Bezahlvorgang ausgelöst werden kann. Möglich ist aber auch, dass mittels eines Smartphones des Kunden Produkte, die in den Einkaufswagen eingelegt werden, optisch erfasst werden, beispielsweise durch Erfassung des Barcodes, und dann über die drahtlose Sende- und/oder Empfangseinrichtung eine Übertragung des erfassten Artikels an den Schubtransportwagen zur weiteren Verarbeitung erfolgen kann.

Im Rahmen der Erfindung kann die elektrische Verbindungseinrichtung (und unter Umständen auch die mechanische Verbindungseinrichtung, in die die elektrische Verbindungseinrichtung integriert ist) einen flexiblen Verbindungsstrang aufweisen, der in einem Endbereich mit dem Stecker oder der Steckeraufnahme verbunden ist, während der andere Endbereich des flexiblen Verbindungsstrangs beispielsweise mit der Handhabungseinrichtung des Schubtransportwagens, insbesondere einer Schubstange des Einkaufswagens oder des Gepäckwagens, verbunden sein kann. Möglich ist in diesem Fall, dass der Verbindungsstrang eine Seele, eine Ummantelung und/oder ein Drahtseil aufweist, um mechanische, auf den Verbindungsstrang wirkende Kräfte aufzunehmen und von elektrischen Verbindungen und Verbindungsleitungen fernzuhalten.

Der Verbindungsstrang dient der elektrischen Verbindung und gegebenenfalls mechanischen Verbindung zweier oder mehrerer Schubtransportwagen. Der Verbindungsstrang überbrückt mit seiner Längserstreckung eine definierte Verbindungsstrecke zwischen aufeinanderfolgenden Schubtransportwagen. Der Verbindungsstrang kann ein flexibler oder starrer Strang sein. Auch kann zumindest ein Teilbereich des Verbindungsstrangs flexibel und zumindest ein anderer Teilbereich des Verbindungsstrangs starr ausgebildet sein.

Für einen besonderen Vorschlag der Erfindung ist in die mechanische Verbindungseinrichtung neben oder mit der elektrischen Verbindungseinrichtung auch eine optische Erfassungseinrichtung integriert. Handelt es sich bei der optischen Erfassungseinrichtung um einen Barcode-Scanner oder QR-Scanner, ist die mechanische Verbindungseinrichtung weiter hinsichtlich eines multifunktionalen Einsatzes optimiert, indem diese nicht nur für die Integration der elektrischen Verbindungseinrichtung und die mechanische Verbindung dient, sondern auch den Scanner aufweist, mittels welchem dann zur Erkennung in einen Einkaufswagen eingelegter Artikel ein Scannen der Artikel erfolgen kann.

Möglich ist, dass der Schubtransportwagen eine für diesen Schubtransportwagen spezifische Kennung aufweist, die über die elektrische Verbindungseinrichtung oder die Kontaktelemente übertragen werden kann. Die derartige spezifische Kennung kann zu vielfältigen Zwecken verwendet werden. So ist beispielsweise möglich, dass über die spezifische Kennung mittels eines Positionserfassungssystems (insbesondere GPS) des Transportwagens eine Lokalisierung der einzelnen Schubtransportwagen möglich ist. Des Weiteren können durch Erkennung der spezifischen Kennungen die Zahl der in einer Reihe verbundenen Schubtransportwagen ermittelt werden. Möglich ist, dass (beispielsweise in einer Steuereinheit und Speichereinheit des Schubtransportwagens, der Bevorratungs- und/oder Ladestation, einem Server des Einkaufsmarktes und/oder eines Kassensystems des Einkaufsmarktes) spezifische Informationen für die Schubtransportwagen erhoben werden, beispielsweise eine Betriebsdauer desselben, Belastungskenngrößen desselben und Informationen wie Datum und Art einer Reparatur und Wartung mit möglicherweise einer Überwachung von Reparatur- oder Wartungsintervallen). Die derart ermittelten Daten oder Signale können dann über die elektrische Verbindungseinrichtung und/oder die Kontaktelemente übertragen werden.

Eine weitere Lösung der der Erfindung zugrunde liegenden Aufgabe stellt ein Schubtransportwagensystem dar.

Das Schubtransportwagensystem verfügt über mindestens zwei Schubtransportwagen, die ineinandergeschoben sind. In dem ineinandergeschobenen Zustand ist bewegungsgesteuert durch die Einschiebebewegung ein elektrischer Kontakt zwischen den Kontaktelementen der Schubtransportwagen ausgebildet, wobei auch möglich ist, dass ergänzend manuell über die mechanische Verbindungseinrichtung des Steckers mit der Steckeraufnahme auch eine (zusätzliche) elektrische Verbindungseinrichtung einen elektrischen Kontakt gewährleistet.

Möglich ist, dass das Schubtransportwagensystem auch eine Bevorratungs- und/oder Ladestation aufweist, die zum Bevorraten und/oder Laden der Schubtransportwagen mit den in einer Reihe miteinander verbunden Schubtransportwagen verbunden ist. In diesem Fall besteht über die elektrische Verbindungseinrichtung und/oder die Kontaktelemente der Schubtransportwagen eine elektrische Verbindung der Schubtransportwagen mit der Bevorratungs- und/oder Ladestation.

Im Folgenden werden mögliche Ausgestaltungen von Steuerlogiken zum Betrieb des Schubtransportwagens oder Schubtransportwagensystems genannt und erläutert. Hierbei wird die Steuerlogik auf einer Steuereinheit der Schubtransportwagen (insbesondere einer Ladefluss-Steuereinheit und/oder einer Speicher-Freigabeeinrichtung) und/oder auf einer zentralen Steuereinheit (beispielsweise einer Steuereinheit der Bevorratungs- und/oder Ladestation) ausgeführt. Hierbei können die Signale, Daten, Ströme, Spannungen, Kennzeichnungen und/oder Steuerbefehle über die elektrische Verbindungseinrichtung und/oder die Kontaktelemente zwischen zwei ineinandergeschobenen Schubtransportwagen und/oder der Lade- und/oder Bevorratungsstation übertragen werden:

Für einen Vorschlag der Erfindung ist in dem Schubtransportwagensystem oder den Schubtransportwagen Steuerlogik vorhanden, welche erkennt, wenn der oder ein Schubtransportwagen mit einem benachbarten Schubtransportwagen mechanisch und/oder elektrisch verbunden ist (oder nicht verbunden ist). Wird eine derartige Verbindung detektiert, kann beispielsweise ein Arretieren des Schubtransportwagens erfolgen (insbesondere durch eine Verrieglung einer mechanischen Verbindungseinrichtung, durch Bestromung eines Elektromagneten, der die Schubtransportwagen elektromagnetisch koppelt, einer Arretierung der Räder des Schubtransportwagens u. ä.). Eine spätere Freigabe der Arretierung kann dann beispielsweise durch Einstecken einer Münze in ein Münzschloss des zugeordneten Schubtransportwagens erfolgen. Ebenfalls möglich ist, dass die Freigabe der Arretierung des Wagens über eine mit dem Schubtransportwagen kommunizierende App auf einem Smartphone des Benutzers herbeigeführt werden kann. Wird nach dem Entleihen eines Schubtransportwagens durch den Benutzer der Schubtransportwagen wieder ordnungsgemäß abgestellt, was durch das zuvor erläuterte Detektieren erkannt wird, kann entsprechend einem physikalischen Münzsystem eine Rückerstattung eines Betrages an den Benutzer, insbesondere über eine Kunden-App des Betreibers des Einkaufmarktes, erfolgen. Möglich ist auch, dass bei dem derartigen Erkennen des ordnungsgemäßen Abstellens des Wagens über die App ein Incentive für den Kunden angeboten wird für seinen nächsten Einkauf, womit eine zusätzliche Kundenbindung herbeigeführt werden kann. Die Motivation des Benutzers, den Schubtransportwagen ordnungsgemäß abzustellen, kann auch dadurch erhöht werden, dass an einem Bildschirm des Schubtransportwagens Informationen zu dem Benutzer und dem Einkaufsverhalten, beispielsweise ein Name und/oder die Liste der getätigten Einkäufe angezeigt wird, bis das ordnungsgemäße Abstellen des Wagens erfolgt. Unter der Annahme, dass der Benutzer vermeiden möchte, dass diese Informationen an Dritte gelangen, erhält der Benutzer daher eine Motivation zum ordnungsgemäßen Abstellen des Wagens.

Alternativ oder kumulativ möglich ist, dass in dem Schubtransportwagen oder dem Schubtransportwagensystem Steuerlogik vorhanden ist, welche die Zahl der in einer Reihe miteinander und/oder mit einer Bevorratungs- und/oder Ladestation verbundenen Schubtransportwagen erfasst. Diese Erfassung kann beispielsweise dadurch erfolgen, dass jeder Schubtransportwagen eine zwischen der Reihe der Schubtransportwagen und/oder der Bevorratungs- und/oder Ladestation ausgetauschten spezifischen Kennzeichnung aufweist, über deren Erfassung dann die Zahl der Schubtransportwagen ermittelt werden kann. Möglich ist aber auch, dass ein Übertrittswiderstand zwischen den Schubtransportwagen, welcher von der Zahl der in Reihe miteinander verbundenen Schubtransportwagen abhängig ist, erfasst wird und anhand des Übertrittswiderstands dann die Zahl der miteinander verbundenen Schubtransportwagen ermittelt wird. Auf Grundlage der ermittelten Zahl der in Reihe miteinander verbundenen Schubtransportwagen kann dann beispielsweise eine Steuerung des Lademanagements erfolgen, eine Mitteilung oder ein Alarm an einen Benutzer oder einen Betreiber des Einkaufsmarktes gegeben werden, dass an einer Bevorratungsstation für die Schubtransportwagen ein Leerstand oder eine Überfüllung der Schubtransportwagen vorliegt oder es kann eine gezielte Leitung der Kundenströme zu einer anderen Bevorratungsstation erfolgen, bei welcher kein Leerstand droht.

Alternativ oder kumulativ kann Steuerlogik vorhanden sein, die ein Ladeflussmanagement gewährleistet. Das Ladeflussmanagement verfügt dabei über einen Durchleitungs-Betriebsmodus und einen Lade-Betriebsmodus:
In dem Durchleitungs-Betriebsmodus ist (insbesondere über die zuvor genannte Ladefluss-Steuereinheit) der Stecker mit der Steckeraufnahme verbunden oder die Kontaktelement sind miteinander verbunden, während die Verbindung des Speichers mit dem Stecker oder der Steckeraufnahme oder mit den Kontaktelementen getrennt ist.

Hingegen ist in dem Lade-Betriebsmodus der Stecker von der Steckeraufnahme getrennt oder die Kontaktelemente sind voneinander getrennt, während die Verbindung des Speichers mit dem Stecker oder der Steckeraufnahme oder die Verbindung des Speichers mit einem Kontaktelement besteht.

Erkennt dabei das Ladeflussmanagement, dass an einem Schubtransportwagen ein größerer Ladebedarf besteht als an einem anderen Schubtransportwagen, schaltet das Ladeflussmanagement die Ladefluss-Steuereinheit des erstgenannten Schubtransportwagens um in den Lade-Betriebsmodus, während für den mindestens einen zweitgenannten Schubtransportwagen eine Umschaltung in den Durchleitungs-Betriebsmodus erfolgt.

Das Kriterium dafür, welcher Schubtransportwagen einen höheren Ladebedarf hat, kann beispielsweise von den jeweiligen Ladeniveaus abhängen, indem ein niedrigeres Ladeniveau mit einem höheren Bedarf einer Aufladung korreliert. Alternativ oder kumulativ kann berücksichtigt werden, wo sich der Schubtransportwagen in der Reihe der Schubtransportwagen befindet - mit zunehmender Entfernung von der Ladestation kann auf einen sich erhöhenden Bedarf nach einer Aufladung geschlossen werden.

Alternativ oder kumulativ kann Steuerlogik vorhanden sein, die ein Ladeflussmanagement gewährleistet, bei dem eine für einen Einkaufsmarkt oder einen Gepäcktransportbereich spezifische Lademenge berücksichtigt wird. Diese spezifische Lademenge korreliert mit dem erwarteten Energiebedarf für eine durchschnittliche Benutzung des Schubtransportwagens im Bereich des Einkaufsmarktes oder des Gepäcktransportbereiches, wobei eine gewisse Sicherheitsmarge zugeschlagen sein kann. Handelt es sich bei dem Einkaufsmarkt um einen kleinen Markt, ist die spezifische Lademenge kleiner als bei einem großen Einkaufsmarkt oder sogar einem Einkaufsmarkt mit unterschiedlichen Einkaufläden, da im letztgenannten Fall ein Benutzer für einen üblichen Einkaufsvorgang länger mit dem Schubtransportwagen unterwegs ist. Erfindungsgemäß kann für unterschiedliche Einkaufsmärkte oder Gepäcktransportbereiche derselbe Schubtransportwagen verkauft werden, wobei dann dennoch die unterschiedliche spezifischen Lademengen berücksichtigt werden können. Die spezifische Lademenge wird dabei für das Ladeflussmanagement derart berücksichtigt, dass bei einer höheren spezifischen Lademenge das Umschalten von der Aufladung insbesondere eines entfernter von der Ladestation angeordneten Schubtransportwagen zu einem näher an der Ladestation angeordneten Schubtransportwagen erfolgt, wenn das Ladeniveau der spezifischen Lademenge entspricht.

Alternativ oder kumulativ kann Steuerlogik vorhanden sein für ein Ladeflussmanagement, bei dem für einen Einkaufsmarkt oder einen Gepäcktransportbereich und/oder für eine Uhrzeit und/oder einen Wochentag spezifische Bedarfskenngrößen berücksichtigt werden, die mit einem erweiterten Bedarf der Benutzung von Schubtransportwagen je Zeiteinheit durch die Benutzer korrelieren. Führt die Frequentierung eines Einkaufsmarktes oder eines Gepäcktransportbereichs und der zugeordneten Bevorratungsstation, eine Stoßzeit oder ein Wochentag mit einer erhöhten Zahl von Benutzern dazu, dass mit einer höheren Frequenz Schubtransportwagen aus der Bevorratungsstation entnommen werden, ergibt sich eine vergrößerte spezifische Bedarfskenngröße. Für eine größere spezifische Bedarfskenngröße muss dann dafür Sorge getragen werden, dass an der Bevorratungsstation in diesen "Stoßzeiten" mehr Schubtransportwagen mit einem minimalen Ladeniveau bereitgestellt werden. Dies kann dazu führen, dass gleichzeitig mehrere Schubtransportwagen mittels des Ladeflussmanagements aufgeladen werden, die auf der dem Benutzer zugewandten Seite der Reihe der Schubtransportwagen angeordnet sind, oder, beginnend von dem äußersten Schubtransportwagen sukzessive eine Aufladung der Schubtransportwagen auf ein infolge der erhöhten spezifischen Bedarfskenngröße reduziertes Spannungsniveau erfolgt. Signalisiert hingegen die spezifische Bedarfskenngröße, dass nur sehr selten ein Schubtransportwagen aus der Bevorratungsstation entnommen wird, kann ein Aufladen des am weitesten von der Ladestation angeordneten Schubtransportwagens auf ein höheres Spannungsniveau erfolgen.

Für die spezifische Bedarfskenngröße können a-priori festgelegte Erfahrungswerte oder im Betrieb des Schubtransportwagensystems mit der Zeit ermittelte Erfahrungswerte genutzt werden. Möglich ist auch, dass die spezifische Bedarfskenngröße selbstlernend oder mittels künstlicher Intelligenz ermittelt wird und/oder eine selbstlernende oder mittel künstlicher Intelligenz ermittelte Berücksichtigung der spezifischen Bedarfskenngröße in dem Ladeflussmanagement erfolgt.

Alternativ oder kumulativ ist möglich, dass in dem erfindungsgemäßen Schubtransportwagensystem Steuerlogik vorhanden ist, welche ein Ladeflussmanagement derart gewährleistet, dass bei einer mit der Bevorratungs- und/oder Ladestation verbundenen Reihe von Schubtransportwagen zunächst der am weitesten von der Bevorratungs- und/oder Ladestation entfernte Schubtransportwagen aufgeladen wird, bis ein Schwellwert des Ladezustandes erreicht wird, womit dann sukzessive die in Richtung der Bevorratungs- und/oder Ladestation benachbarten Schubtransportwagen aufgeladen werden. Wird dabei während der Aufladung (insbesondere eines nicht am Weitesten von der Ladestation beabstandeten Schubtransportwagens) von einem Benutzer ein Schubtransportwagen an das der Ladestation abgewandte Ende der Reihe angeschlossen, kann eine Umschaltung derart erfolgen, dass dann zunächst dieser nun am Weitesten von der Ladestation beabstandete Schubtransportwagen aufgeladen wird.

Für die Ermittlung des Schwellwertes des Ladezustandes können die zuvor erläuterten Mechanismen verwendet werden, ohne dass diese zwingend der Fall ist.

Alternativ oder kumulativ kann in dem Schubtransportwagensystem eine Steuerlogik vorhanden sein, die ein Ladeflussmanagement derart gewährleistet, dass ein Aufladen eines Speichers eines Schubtransportwagens aus einem Speicher mindestens eines anderen Schubtransportwagens erfolgt. Hierbei ist auch möglich, dass bei dem Ladeflussmanagement in ausgewählten Betriebszuständen, insbesondere mit einem erhöhten Bedarf für ein Aufladen eines Schubtransportwagens, insbesondere anhand einer erkannten großen spezifischen Bedarfskenngröße, ein Aufladen eines Speichers eines Schubtransportwagens gleichzeitig aus einem Speicher mindestens eines anderen Schubtransportwagens und aus der Ladestation erfolgt. Dieser Betrieb kann auch als eine Art Boost-Ladebetrieb bezeichnet werden.

Zuvor wurde beschrieben, wie das Lademanagement zwischen den Schubtransportwagen von dem Abstand der Schubtransportwagen von einer Lade- und/oder Bevorratungsstation abhängig sein kann. Das Entsprechende kann auch für eine Reihe von Schubtransportwagen gelten, die nicht mit einer Ladestation verbunden sind. In diesem Fall entspricht der in der vorangegangenen Beschreibung der Ladestation benachbarte Schubtransportwagen dem ersten Schubtransportwagen der Reihe, in den von hinten sukzessive die anderen Schubtransportwagen der Reihe eingeschoben sind, während der in der vorangegangenen Beschreibung am Weitesten von der Ladestation benachbarte Schubtransportwagen dem letzten Schubtransportwagen der Reihe entspricht, bei dem es sich somit um den als Erstes von den Benutzern aus der Reihe entnehmbaren Schubtransportwagen handelt.

Für einen weiteren Vorschlag der Erfindung verfügen in dem Schubtransportwagensystem die Schubtransportwagen und/oder die Bevorratungs- und/oder Ladestation über Steuerlogik, welche detektiert, wenn eine Trennung eines Schubtransportwagens von einem anderen Schubtransportwagen und/oder von einer Bevorratungs- und/oder Ladestation erfolgt. Dies kann bspw. anhand eines Schalters zwischen den Schubtransportwagen, anhand eines Abstandssensors, anhand des Einbruchs eines zwischen den Schubtransportwagen übertragenen Signals mit der Trennung, anhand einer Veränderung eines Widerstands einer elektrischen Leitung oder eines Kontakts zwischen den Schubtransportwagen oder anhand der geodätischen Standorte der Schubtransportwagen erfolgen. Alternativ oder kumulativ kann auf entsprechende oder andere Weise eine Detektierung einer Trennung der Kontaktelemente der Schubtransportwagen, eine Trennung der mechanischen Verbindungseinrichtungen und/oder der elektrischen Verbindungseinrichtungen detektiert werden.

Für die Nutzung einer detektierten Trennung gibt es im Rahmen der Erfindung vielfältige Möglichkeiten. Für einen Vorschlag der Erfindung verfügen in dem Schubtransportwagensystem die Schubtransportwagen über Steuerlogik, welche bei einer detektierten Trennung ein Display eines Schubtransportwagens aktivieren, womit der Schubtransportwagen für den Benutzer zur Benutzung vorbereitet wird. Alternativ oder kumulativ kann eine drahtlose Sende- und/oder Empfangseinrichtung aktiviert werden. Möglich ist auch, dass eine Tracking-Funktion aktiviert wird, mittels welcher eine Ortsverfolgung des entnommenen Schubtransportwagens aktiviert wird. Dies kann einerseits zur Verfolgung der Kundenströme in einem Einkaufsmarkt oder für den Strom der Gepäckwagen verwendet werden. Möglich ist aber auch, dass hierüber eine Diebstahlüberwachung erfolgt, wobei beispielsweise dann eine Diebstahlwarnung erzeugt wird, wenn der verfolgte Ort der Schubtransportwagens ein festgelegtes Territorium verlässt. Alternativ oder kumulativ möglich ist, dass bei einer detektierten Trennung ein Produktscanner aktiviert wird, mittels dessen der Benutzer an einem als Einkaufswagen ausgebildeten Schubtransportwagen Einkaufsprodukte scannen kann, bevor diese in den Einkaufswagen eingelegt werden. Alternativ oder kumulativ möglich ist, dass bei der detektierten Trennung eine Einkaufsabwicklungssoftware aktiviert wird, welche bspw. von dem Kunden selektierte Einkaufsartikel erfasst, dem Kunden Informationen für seinen Einkauf bereitstellt, eine Kommunikation des Einkaufswagens mit dem Mobiltelefon des Kunden ermöglicht und/oder einen (teilautomatischen oder vollautomatischen) Bezahlvorgang ermöglicht.

Für einen weiteren Vorschlag der Erfindung verfügen in dem Schubtransportwagensystem die Schubtransportwagen über Steuerlogik, welche bei einer detektierten Trennung eines Selbsttests des Schubtransportwagens durchführt. Alternativ oder kumulativ kann bei dem Selbsttest ein elektrisches Signal oder ein Sensorsignal des Schubtransportwagens geprüft werden, um festzustellen, ob der Schubtransportwagen funktionsfähig ist oder den Spezifikationen genügt.

Führt der Selbsttest zu dem Ergebnis, dass ein nicht ordnungsgemäßer Zustand vorliegt, also beispielsweise der Ladezustand des Speichers nicht ausreichend ist oder ein nicht ordnungsgemäßes elektrisches Signal oder Sensorsignal vorliegt, gibt die Steuerlogik des Schubtransportwagens eine Information an den Benutzer, was durch eine Anzeige an einem Display des Schubtransportwagens oder ein akustisches Signal erfolgen kann. Möglich ist auch, dass eine derartige Information an den Benutzer über das Smartphone des Benutzers gegeben wird. Insbesondere wird an einem Display des Schubtransportwagens oder des Smartphones eine Anzeige erzeugt, welche den Benutzer darüber informiert, dass der Selbsttest negativ war, dem Benutzer das Ergebnis des Selbsttests anzeigt oder dem Benutzer eine Aufforderung gibt, einen anderen Schubtransportwagen zu benutzen und/oder den Schubtransportwagen wieder an eine Bevorratungs- und/oder Ladestation anzuschließen oder einem Aussonderungsbereich zuzuführen. Es kann auch automatische eine Information an einen Betreiber erzeugt und übertragen werden, dass der Schubtransportwagen nicht ordnungsgemäß ist.

Möglich ist im Rahmen der Erfindung auch, dass die Schubtransportwagen des Schubtransportwagensystems über Steuerlogik verfügen, welche eine Herstellung einer Verbindung zwischen zwei Schubtransportwagen, zwischen Kontaktelementen, mechanischen Verbindungseinrichtungen und/oder elektrischen Verbindungseinrichtungen detektiert.

Wird die Herstellung einer derartigen Verbindung detektiert, kann ein Display eines Schubtransportwagens deaktiviert werden und/oder eine drahtlose Sende- und/oder Empfangseinrichtung wird deaktiviert. Alternativ oder kumulativ kann eine Tracking-Funktion für eine Ortsverfolgung des Schubtransportwagens deaktiviert werden, ein Produktscanner deaktiviert werden und/oder die zuvor erläuterte Einkaufsabwicklungssoftware deaktiviert werden.

Für einen besonderen Vorschlag der Erfindung verfügen die Schubtransportwagen über Steuerlogik, die auf Grundlage eines Signals eines Sensors detektiert, ob sich mit der Herstellung der Verbindung noch ein Einkaufsprodukt oder ein Gegenstand des Benutzers auf dem Schubtransportwagen befindet. Ist dies der Fall, wird dem Benutzer eine Information gegeben, dass sich noch ein Produkt oder ein Gegenstand des Benutzers auf dem Schubtransportwagen befindet. Auf diese Weise kann vermieden werden, dass der Benutzer beispielsweise ein gekauftes Produkt versehentlich bei dem Abstellen des Schubtransportwagens nach Beendigung des Einkaufsvorgangs in dem Schubtransportwagen vergisst. Die Detektierung kann dabei auf Grundlage eines Signals einer Wägezelle erfolgen, welche das Gewicht des auf dem Schubtransportwagen vergessenen Produkts erfasst. Alternativ oder kumulativ kann die Detektierung auf Grundlage eines Sensors in Ausgestaltung als Kamera erfolgen, die den vergessenen Gegenstand als Bild erfasst mit der Nutzung einer automatischen Bilderkennungssoftware zur Analyse des aufgenommenen Bilds der Kamera.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Draufsicht auf Verbindungseinrichtungen von zwei Schubtransportwagen.
- **Fig. 2**: zeigt einen Schnitt II-II durch die Verbindungseinrichtungen von zwei Schubtransportwagen gemäß Fig. 1.
- **Fig. 3**: zeigt einen Schnitt III-III durch die Verbindungseinrichtungen von zwei Schubtransportwagen gemäß Fig. 1 und 2.
- **Fig. 4**: zeigt einen Stecker der Verbindungseinrichtungen von zwei Schubtransportwagen gemäß Fig. 1 bis 3 in einer räumlichen Ansicht.
- **Fig. 5**: zeigt eine alternative Ausgestaltung von Verbindungseinrichtungen von zwei Schubtransportwagen in einer Draufsicht.
- **Fig. 6**: zeigt einen Schnitt VI-VI durch die Verbindungseinrichtungen von zwei Schubtransportwagen gemäß Fig. 5.
- **Fig. 7**: zeigt federbelastete Steckerkontaktelemente eines Steckers der Verbindungseinrichtungen von zwei Schubtransportwagen gemäß Fig. 5 und 6.
- **Fig. 8**: zeigt einen Stecker der Verbindungseinrichtungen von zwei Schubtransportwagen gemäß Fig. 5 bis 7 in einer räumlichen Ansicht.
- **Fig. 9**: zeigt eine Steckeraufnahme der Verbindungseinrichtungen von zwei Schubtransportwagen gemäß Fig. 5 bis 8 in einer räumlichen Ansicht.
- **Fig. 10**: zeigt einen Schnitt durch eine weitere Ausführungsform von Verbindungseinrichtungen von zwei Schubtransportwagen.
- **Fig. 11**: zeigt ein Detail einer Steckeraufnahme der Verbindungseinrichtungen von zwei Schubtransportwagen gemäß Fig. 10.
- **Fig. 12**: zeigt einen Stecker der Verbindungseinrichtungen von zwei Schubtransportwagen gemäß Fig. 10 und 11.
- **Fig. 13 - 18**: zeigen elektrische schematische Schaltbilder von Ausführungsformen eines Schubtransportwagensystems mit einer Ladestation und drei in einer Reihe miteinander verbundenen Schubtransportwagen.
- **Fig. 19**: zeigt in einer räumlichen Ansicht einen Schubtransportwagen in Ausgestaltung als Einkaufswagen mit Kontaktelementen im Bereich eines Fahrgestellrahmens.
- **Fig. 20**: zeigt eine Detailansicht eines ersten Kontaktelements des Schubtransportwagens gemäß Fig 19.
- **Fig. 21**: zeigt ein zweites Kontaktelement des Schubtransportwagens gemäß Fig. 19.
- **Fig. 22**: zeigt eine Detail-Draufsicht mehrerer in Längsrichtung zu einem Schubtransportwagensystem ineinander geschobener Schubtransportwagen gemäß Fig. 19 im Bereich der Fahrgestellrahmen und Kontaktelemente.
- **Fig. 23**: zeigt in einer räumlichen Ansicht eine weitere Ausführungsform eines Schubtransportwagens in Ausgestaltung als Einkaufswagen mit Kontaktelementen.
- **Fig. 24**: zeigt in einer räumlichen Detailansicht von unten erste und zweite Kontaktelemente des Schubtransportwagens gemäß Fig. 23.
- **Fig. 25**: zeigt von unten ein Schubtransportwagensystem mit zwei unvollständig ineinander eingeschobenen Schubtransportwagen gemäß Fig. 23 im Bereich der Fahrgestellrahmen und Kontaktelemente.
- **Fig. 26**: zeigt von unten ein Schubtransportwagensystem mit drei vollständig ineinander eingeschobenen Schubtransportwagen gemäß Fig. 23 im Bereich der Fahrgestellrahmen und Kontaktelemente.
- **Fig. 27**: zeigt einen Längsschnitt XXVII-XXVII durch das Schubtransportwagensystem gemäß Fig. 26.
- **Fig. 28**: zeigt ein Detail XXVIII aus Fig. 27.
- **Fig. 29**: zeigt in einer räumlichen Ansicht eine weitere Ausführungsform eines Schubtransportwagens in Ausgestaltung als Gepäckwagen mit Kontaktelementen und einer Feststellbremse.
- **Fig. 30**: zeigt den Schubtransportwagen gemäß Fig. 29 in einer Ansicht von hinten.
- **Fig. 31**: zeigt ein Detail XXXI der räumlichen Ansicht gemäß Fig. 29.
- **Fig. 32**: zeigt ein Detail XXXII der Ansicht des Schubtransportwagens von hinten gemäß Fig. 30.

### FIGURENBESCHREIBUNG

In den Figuren werden Bauelemente und Merkmale, die sich entsprechen oder ähneln, teilweise mit denselben Bezugszeichen gekennzeichnet, wobei diese Bauelemente oder Merkmale dann mit durch den Zusatz "-1", "-2", ... voneinander unterschieden sein können. Auf diese Bauelemente und Merkmale kann dann auch ohne den Zusatz Bezug genommen werden, womit dann ein derartiges Bauelement oder Merkmal, eine beliebige Zahl derartiger Bauelemente oder Merkmale oder sämtliche derart gekennzeichneten Bauelemente oder Merkmale gemeint sein können.

In den Figuren sind unterschiedliche Schubtransportwagen und deren Komponenten mit den Buchstaben a, b, c voneinander unterschieden. Auf diese Schubtransportwagen und deren Komponenten kann dann auch ohne den Buchstaben Bezug genommen werden, womit dann ein Schubtransportwagen oder eine Komponente, eine beliebige Zahl derartiger Schubtransportwagen und Komponenten oder sämtliche derart gekennzeichneten Schubtransportwagen und Komponenten gemeint sein können.

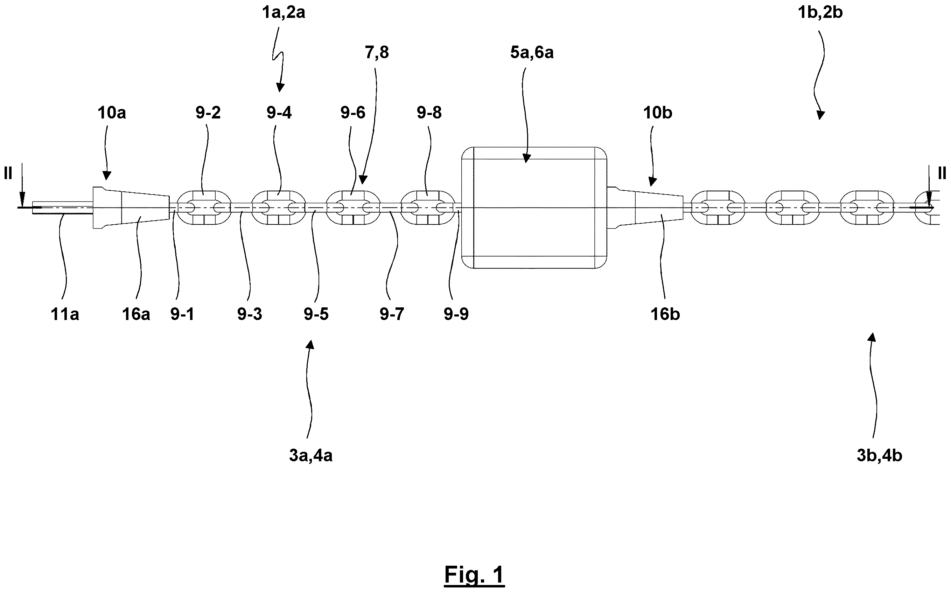

**Fig. 1** zeigt eine mechanische Verbindungseinrichtung 1 und eine elektrische Verbindungseinrichtung 2 von zwei Schubtransportwagen 3a, 3b, bei denen es sich insbesondere um Einkaufswagen 4a, 4b handelt. Die Verbindungseinrichtungen 1, 2 verfügen über ein gemeinsames Gehäuse 5. In dem Gehäuse 5 ist ein Münzschloss 6 der mechanischen Verbindungseinrichtung 1 angeordnet. Das Gehäuse 5 ist über einen flexiblen Verbindungsstrang 7 (hier eine Sicherungskette 8 mit (Ketten-)Gliedern 9a, 9b, ...) mit einem Stecker 10 verbunden.

Der Stecker 10 verfügt über eine Einsteckzunge 11. Die Einsteckzunge 11 weist eine Rast- oder Verriegelungsfläche 12 auf. Für das dargestellte Ausführungsbeispiel ist die Rast- oder Verriegelungsfläche 12 von einer Durchgangsausnehmung 13 der Einsteckzunge 11 ausgebildet. In der Rast- oder Verriegelungsstellung des Münzschlosses 6 verrastet oder verriegelt ein Rast- oder Verriegelungselement 14 mit der Rast- oder Verriegelungsfläche 12. Für das dargestellte Ausführungsbeispiel erfolgt dieses dadurch, dass das Rast- oder Verriegelungselement 14 formschlüssig in die Durchgangsausnehmung 13 eintritt. Das Rast- oder Verriegelungselement 14 ist in einer Steckeraufnahme 15 des Gehäuses 5 und Münzschlosses 6 angeordnet, in die der Stecker 10 eingesteckt werden kann. Befindet sich eine Münze in dem Münzschloss 6, gibt das Rast- oder Verriegelungselement 14 die Einsteckzunge 11 frei, womit der Stecker 10 aus der Steckeraufnahme 15 entfernt werden kann. Befindet sich hingegen keine Münze in dem Münzschloss 6, ist der Stecker 10 in der Steckeraufnahme 15 durch die Wechselwirkung zwischen dem Rast- oder Verriegelungselement 14 und der Rast- oder Verriegelungsfläche 12 gesichert. Vorzugsweise bewegt sich das Rast- oder Verriegelungselement zwischen der verrasteten oder verriegelten Stellung und der nicht verrasteten oder nicht verriegelten Stellung quer zu der Einsteckrichtung des Steckers 10 in die Steckeraufnahme 15. Ist der Stecker 10 in der Steckeraufnahme 15 angeordnet und befindet sich das Münzschloss 6 in der verrasteten oder verriegelten Stellung, bildet die mechanische Verbindungseinrichtung eine Sicherung der beiden ineinander geschobenen Schubtransportwagen 3a, 3b gegenüber einem Auseinanderziehen derselben und damit gegenüber einer Entfernung und Benutzung eines Schubtransportwagens 3b.

In die mechanische Verbindungseinrichtung 1 ist die elektrische Verbindungseinrichtung 2 integriert. Zu diesem Zweck ist die Einsteckzunge 11 elektrisch leitend ausgebildet. Der in einem Steckergehäuse 16 angeordnete Endbereich der Einsteckzunge 11 ist von einem Endbereich eines Verbindungskabels 17 kontaktiert. Der andere Endbereich des Verbindungskabels 17 kontaktiert das fest mit dem Steckergehäuse 16 verbundene Glied 9-1 der Sicherungskette 8. In Folge der Schwerkraft liegen die ineinandergreifenden Glieder 9-1, 9-2, ... aneinander an. In Folge dieses Kontakts und der elektrisch leitfähigen Ausgestaltung der Glieder 9 bildet die Sicherungskette 8 einen elektrischen Leiter. Das am weitesten von dem Stecker 10 beabstandete Glied 9-9 ist fest mit dem Gehäuse 5 verbunden. Dieses Glied 9-9 ist elektrisch von einem sich durch das Gehäuse 5 erstreckenden Verbindungskabel 18 kontaktiert.

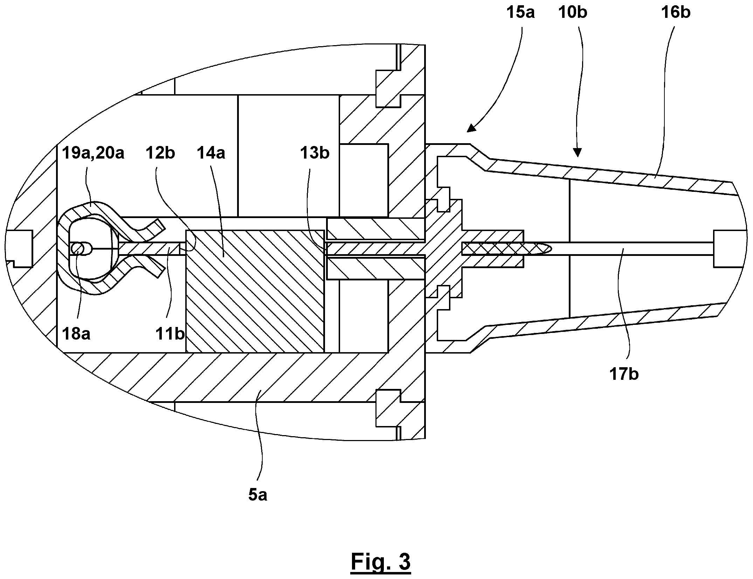

In der Steckeraufnahme 15 befindet sich ein elektrisches Steckerkontaktelement, welches für das dargestellte Ausführungsbeispiel als elastische Kontaktklemme 20 ausgebildet ist. Die Kontaktklemme 20 ist in grober Näherung mit einem U-förmigen Querschnitt ausgestattet. Der Grundschenkel des U ist dabei an dem Gehäuse 5 befestigt, während zwischen die Seitenschenkel des U die Einsteckzunge 11 unter elastischer Aufweitung der Seitenschenkel eingeschoben werden kann. Die Kontaktkraft zwischen der Kontaktklemme 20 und der Einsteckzunge 11 wird durch die elastische Rückstellkraft der Kontaktklemme 20 herbeigeführt. An dem Grundschenkel der Kontaktklemme 20 ist das Verbindungskabel 18 angeschlossen (vgl. **Fig. 3**.).

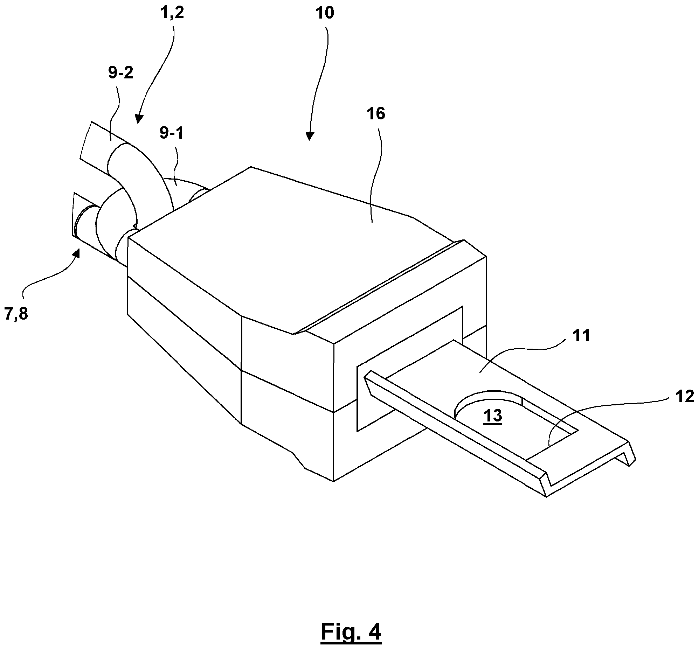

**Fig. 4** zeigt den Stecker 10 mit der Einsteckzunge 11 in einer räumlichen Ansicht. Zu erkennen ist hier, dass die Einsteckzunge 11 in entgegengesetzte Richtungen orientierte randseitige Abwinklungen aufweist. Die Steckeraufnahme 15 verfügt über eine entsprechend geformte Aufnahmekontur, so dass ein formschlüssiges Einstecken des Steckers 10 mit der Einsteckzunge 11 in die Aufnahmekontur der Steckeraufnahme 15 in zwei um 180° um die Längsachse des Steckers 10 gedrehten Orientierungen möglich ist.

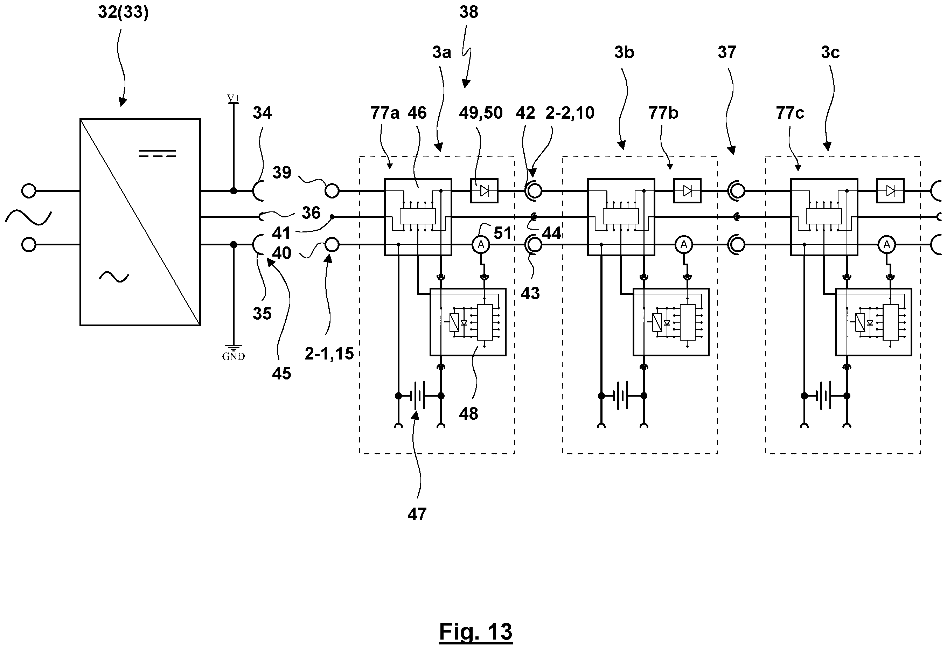

Das Verbindungskabel 18 ist auf nicht dargestellte Weise mit weiteren elektronischen Komponenten des Schubtransportwagens 3a verbunden, wie im Folgenden unter Bezugnahme auf die Fig. 13 bis 18 noch näher erläutert wird.

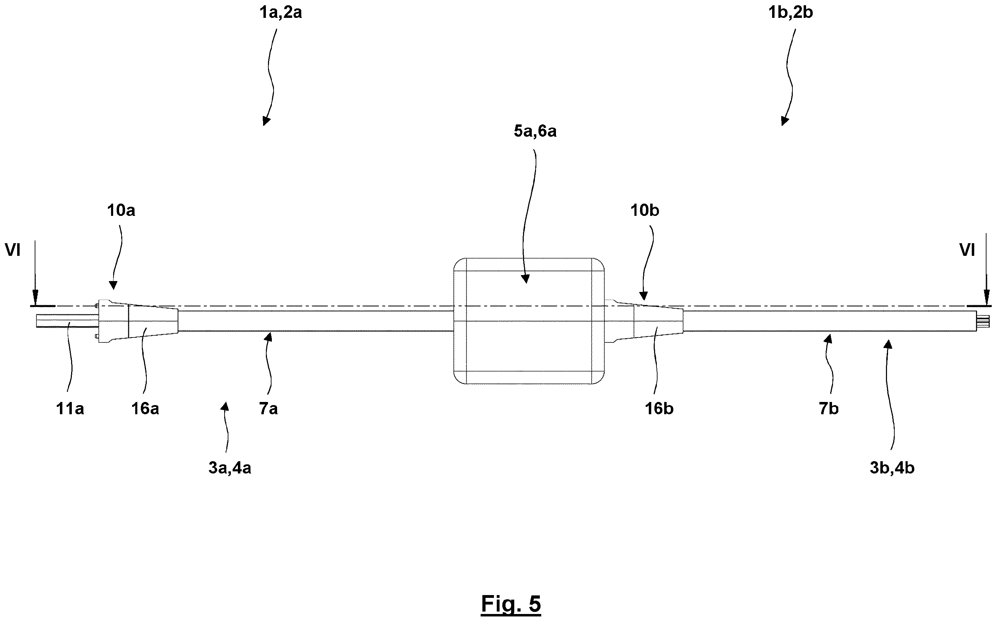

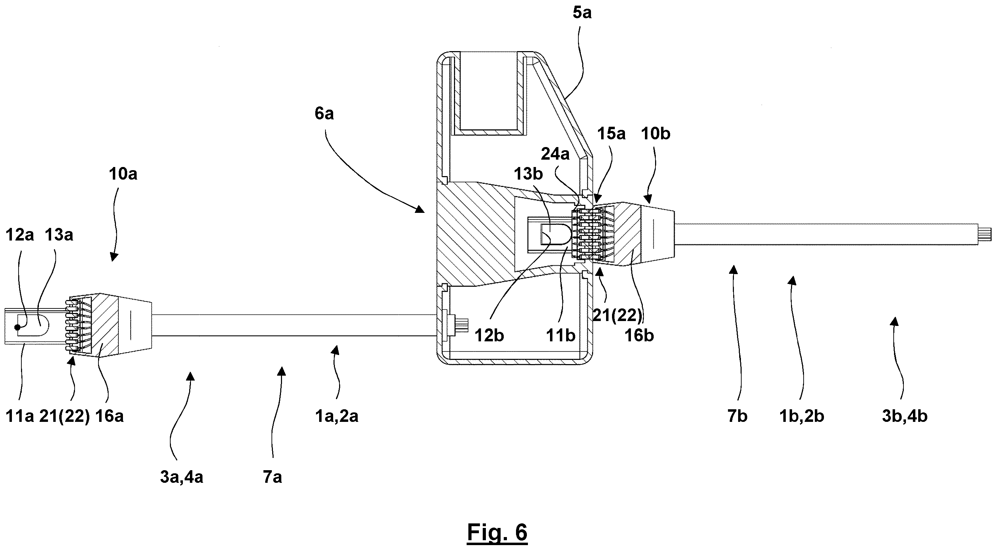

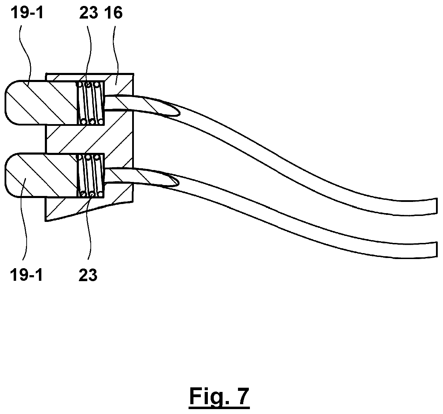

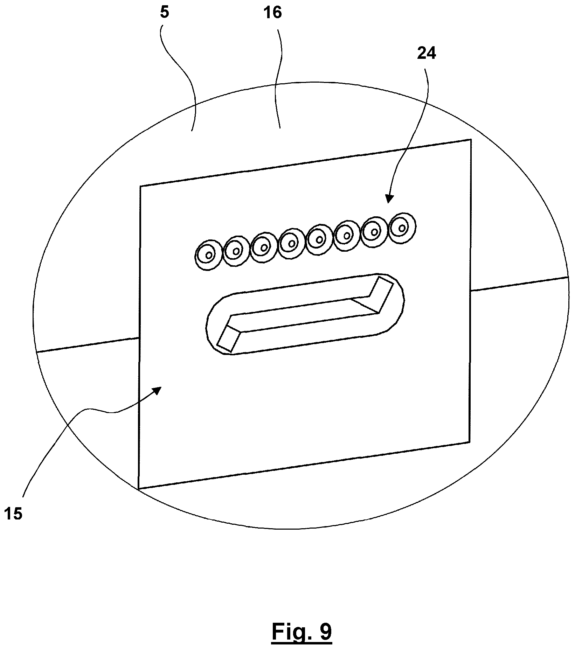

**Fig. 5 bis 9** zeigen ein anderes Ausführungsbeispiel, bei dem der Stecker 10 zwei auf gegenüberliegenden Seiten von der Einsteckzunge 11 an der Stirnfläche des Steckergehäuses 16 angeordnete Anschlussleisten 21, 22 aufweist, die jeweils mehrere Steckerkontaktelemente 19 aufweisen. Wie insbesondere in dem Teilschnitt in Fig. 7 zu erkennen ist, sind die Steckerkontaktelemente 19 hier selber starr ausgebildet, aber in dem Steckergehäuse 16 über Federn 23 abgestützt. Jeweils ein Paar von in den Anschlussleisten 21, 22 an entsprechender Position angeordneten Steckerkontaktelementen 19 sind mit einem gemeinsamen elektrischen Leiter verbunden, um zu gewährleisten, dass auch für dieses Ausführungsbeispiel der Stecker 10 in zwei um 180° um die Längsachse verdrehten Orientierungen in die Steckeraufnahme 15 eingesteckt werden kann mit der gewünschten elektrischen Kontaktierung. Die Steckeraufnahme 15 weist lediglich eine Anschlussleiste 24 auf, die dann in einer ersten Orientierung des Steckers 10 mit der Anschlussleiste 21 in Wechselwirkung tritt, während dieselbe Anschlussleiste 24 der Steckeraufnahme 15 in der zweiten Orientierung mit der anderen Anschlussleiste 22 in Wechselwirkung tritt.

Für das dargestellte Ausführungsbeispiel ist der Verbindungsstrang 7 nicht als Sicherungskette 8 ausgebildet, sondern als mehradriges Kabel der elektrischen Verbindungseinrichtung 2, wobei zur Bildung der mechanischen Verbindungseinrichtung 1 das mehradrige Kabel mit einer Verstärkung und/oder Isolierung versehen oder ummantelt sein kann. In diesem Fall ist die Einsteckzunge 11 nicht Teil der elektrischen Verbindungseinrichtung.

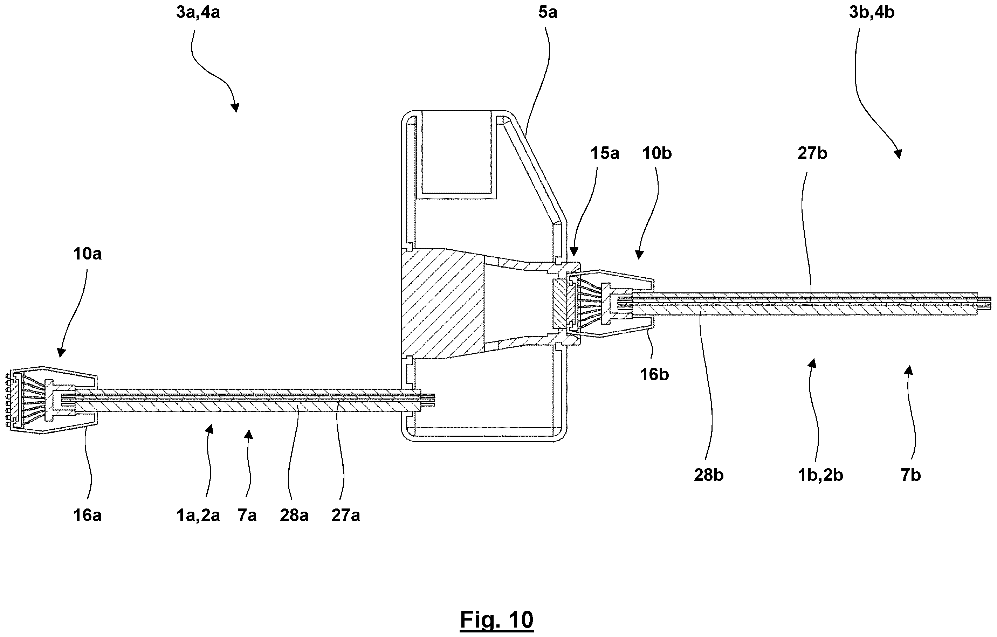

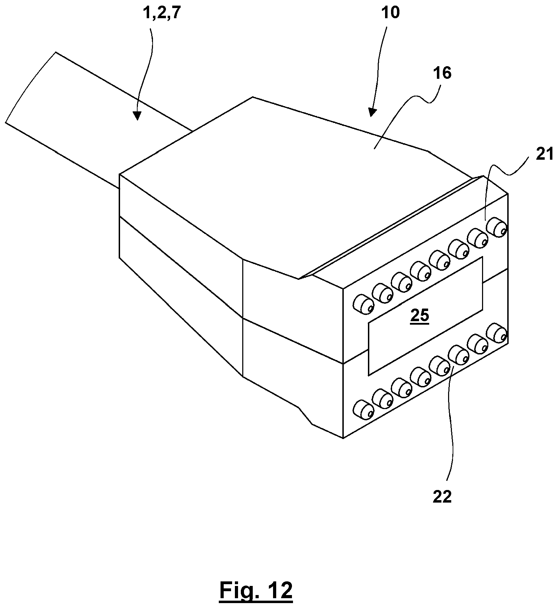

Für das Ausführungsbeispiel gemäß **Fig. 10 bis 12** verfügen die Steckeraufnahme 15 und der Stecker 10 jeweils über einen Permanentmagneten 25, 26, die dann, wenn der Stecker 10 in die Steckeraufnahme 15 eingesteckt ist, aneinander anliegen und die geschaffene mechanische und elektrische Verbindung sichern. Möglich ist aber auch, dass nur ein Permanentmagnet 26 [bzw. 25] an der Steckeraufnahme 15 [bzw. an dem Stecker 10] vorgesehen ist, der dann mit einem metallischen Gegenstück des Steckers 10 [bzw. der Steckeraufnahme] eine magnetische sichernde Verbindungskraft erzeugt.

Des Weiteren ist in Fig. 10 bis 12 ein möglicher Aufbau des Verbindungsstrangs 7 dargestellt. In diesem Fall erstreckt sich ein mehradriges Kabel 27 oder es erstrecken sich mehrere Kabel durch eine Ummantelung 28, bei der es sich vorzugsweise um eine Kevlar-Ummantelung handelt.

Für das Ausführungsbeispiel gemäß Fig. 10 bis 12 verfügt der Stecker 10 nicht über eine Einsteckzunge 11. Vielmehr sind hier der Permanentmagnet 25 und die Anschlussleisten 21, 22 im Bereich der (hier ebenen) Stirnfläche des Steckers 10 angeordnet.

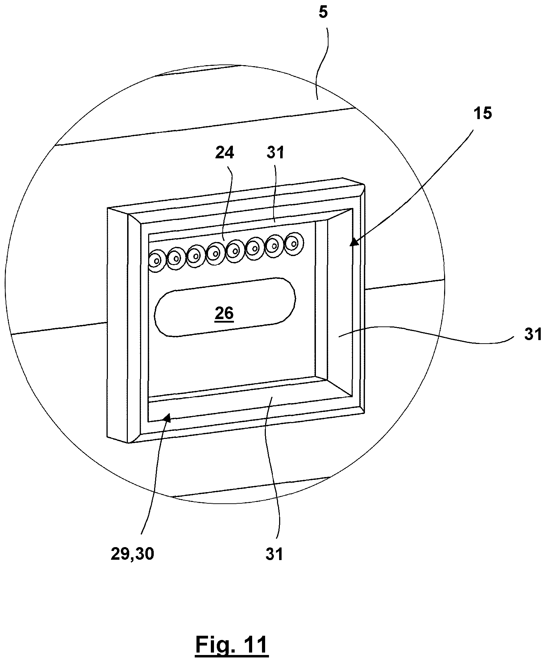

In Fig. 11 ist zu erkennen, dass die Steckeraufnahme 15 eine Einführhilfe 29 aufweist. Für das dargestellte Ausführungsbeispiel verfügt die Einführhilfe 29 über einen den Stecker 11 in eingestecktem Zustand umgebenden Rahmen 30, der Einführschrägen 31 aufweist, deren Zwischenraum sich in Richtung des Einsteckens des Steckers 10 zur Herbeiführung einer Zentrierwirkung verjüngt.

**Fig. 13** zeigt eine Ladestation 32, bei der es sich auch eine Bevorratungsstation 33 für Schubtransportwagen 3 handeln kann. Die Ladestation 32 gemäß Fig. 13 stellt elektrische Leistung mittels einer Gleichspannung zur Verfügung. Die Ladestation 32 weist Anschlüsse 34, 35, 36 auf. Hierbei dienen die Anschlüsse 34, 35 der elektrischen Leistungsversorgung und damit dem Laden der Schubtransportwagen 3 mit elektrischer Energie. Der weitere Anschluss 36 bildet einen Hilfskontakt, der beispielsweise zur Erkennung der (unmittelbaren oder mittelbaren) Verbindung des Schubtransportwagens 3 mit der Ladestation 32 dienen kann.

Fig. 13 zeigt eine Reihe 37, in der drei Schubtransportwagen 3a, 3b, 3c in elektrischer Reihenschaltung miteinander verbunden sind. In der Betriebsstellung des derart gebildeten Schubtransportwagensystems 38 gemäß Fig. 13 ist die Reihe 37 der Schubtransportwagen 3 nicht an die Ladestation 32 angeschlossen.

Die Schubtransportwagen 3 sind, zumindest hinsichtlich der elektrischen Komponenten, identisch ausgebildet.

Die Schubtransportwagen 3 verfügen über eingangsseitige Anschlüsse 39, 40, 41 sowie ausgangsseitige Anschlüsse 42, 43, 44. Hierbei bilden die eingangsseitigen Anschlüsse 39, 40, 41 eine erste elektrische Verbindungseinrichtung 2-1, während die ausgangsseitigen Anschlüsse 42, 43, 44 eine ausgangsseitige elektrische Verbindungseinrichtung 2-2 bilden. Eine eingangsseitige Verbindungseinrichtung 2-1 des Schubtransportwagens 3 kann mit den Anschlüssen 34, 35, 36 der Ladestation 32 oder einer ausgangsseitigen Verbindungseinrichtung 2-2 eines benachbarten Schubtransportwagens 3 verbunden werden. Möglich ist aber auch, dass eine hier als "Eingangsseite" bezeichnete Seite eine Ausgangsseite bildet und umgekehrt, wobei auch je nach Betriebsweise und -modus ein Wechsel der Eingangsseite zur Ausgangsseite und umgekehrt möglich ist.

In Fig. 13 sind die elektrischen Komponenten der Schubtransportwagen 3 lediglich für den Schubtransportwagen 3a mit Bezugsnummern gekennzeichnet, wobei das Entsprechende dann für die anderen Schubtransportwagen 3 gilt. Die Anschlüsse 42, 43, 44 und die damit gebildete elektrische Verbindungseinrichtung 2-2 entsprechen somit den Anschlüssen 34, 35 ,36 und einer damit entsprechend gebildeten elektrischen Verbindungseinrichtung 45 der Ladestation 32.

Eine der Verbindungseinrichtungen 2-1, 2-2 ist als Stecker 10 ausgebildet, während die andere Verbindungseinrichtung 2-2, 2-1 als Steckeraufnahme 15 ausgebildet ist. Beispielhaft ist in Fig. 13 die Verbindungseinrichtung 2-1 als Stecker 10 ausgebildet, während die andere Verbindungseinrichtung 2-2 als Steckeraufnahme 15 ausgebildet ist (während auch eine umgekehrte Gestaltung möglich ist).

Der Stecker 10 und die Steckeraufnahme 15 sind über eine Ladefluss-Steuereinheit 46 miteinander verbunden, bei der es sich vorzugsweise um eine elektronische Steuereinheit mit Steuerlogik handelt. Die Ladefluss-Steuereinheit 46 weist einen Durchleitungs-Betriebsmodus auf, in dem der Stecker 10 mit der Steckeraufnahme 15 verbunden ist. Des Weiteren kann die Ladefluss-Steuereinheit 46 einen Trenn-Betriebsmodus aufweisen, in dem der Stecker 10 von der Steckeraufnahme 15 getrennt ist. Insbesondere kann der Trenn-Betriebsmodus ein Lade-Betriebsmodus sein oder es ist ein zusätzliche Lade-Betriebsmodus vorhanden, in dem der Stecker 10 zwar von der Steckeraufnahme 15 getrennt ist, aber der Stecker 10 über die Ladefluss-Steuereinheit 46 mit einem Speicher 47 des Schubtransportwagens 3 verbunden ist. Hierbei kann die Verbindung zwischen der Ladefluss-Steuereinheit 46 und dem Speicher 47 über eine Speicher-Freigabeeinrichtung 48 erfolgen. Die Speicher-Freigabeeinrichtung 48 kann dann über eine Freigabestellung verfügen, in der der Speicher 47 mit der Ladefluss-Steuereinheit 46 verbunden ist, womit über die Ladefluss-Steuereinheit 46 ein Aufladen des Speicher 47 möglich ist oder die Nutzung der Ladung des Speichers 47 für die Aufladung eines Speichers 47 eines anderen Schubtransportwagens 3 über die Ladefluss-Steuereinheit 46 möglich ist. Des Weiteren verfügt die Speicher-Freigabeeinrichtung 48 über eine Trennstellung, in der (wie dargestellt mindestens ein Zweig) zwischen dem Speicher 47 und der Ladefluss-Steuereinheit 46 abgesperrt ist.

Zwischen korrespondierenden Anschlüssen 39, 42, die in dem Durchleitungs-Betriebsmodus der Ladefluss-Steuereinheit 46 miteinander verbunden sind, kann optional eine richtungsbestimmende Stromflusskomponente 49 angeordnet sein, die für das dargestellte Ausführungsbeispiel als Diode 50 ausgebildet ist. Die Stromflusskomponente 49 ermöglicht dabei einen Ladefluss von der Ladestation 42 über einen Schubtransportwagen 3a zu einem benachbarten, weiter von der Ladestation 32 entfernt angeordneten Schubtransportwagen 3b, während ein elektrischer Fluss in die entgegensetzte Richtung abgesperrt wird.

Des Weiteren ist zwischen korrespondierende Anschlüsse 40, 43, die in dem Durchleitungs-Betriebsmodus der Ladefluss-Steuereinheit 46 miteinander verbunden sind, ein Stromsensor 51 angeordnet.

Ohne dass dies zwingend erforderlich ist, sind für das Ausführungsbeispiel gemäß Fig. 13 die Stromflusskomponente 49 einerseits und der Stromsensor 51 andererseits in unterschiedlichen Leitungszweigen, über welche eine Aufladung aus der Ladestation 32 erfolgt, angeordnet.

Das Ausgangssignal des Stromsensors 51 wird der Speicher-Freigabeeinrichtung 48 zugeführt. Der Stromsensor 51 erkennt, wenn an den Schubtransportwagen 3a dieses Stromsensors 51 ein benachbarter Schubtransportwagen 3b angeschlossen ist, die Ladefluss-Steuereinheit 46 in dem Durchleitungs-Betriebsmodus ist und somit Strom über die elektrischen Verbindungseinrichtungen 2-2, 2-1 von dem Schubtransportwagen 3a an den Schubtransportwagen 3b (oder einen weiteren Schubtransportwagen 3 der Reihe 37) übertragen wird. Wird ein derartiger Strom übertragen, kann die Zuführung des Ausgangssignals des Stromsensors 51 zu der Speicher-Freigabeeinrichtung 48 dazu genutzt werden, die Speicher-Freigabeeinrichtung in die Sperrstellung zu überführen. Wird hingegen erkannt, dass an den Anschluss 43 des Schubtransportwagens 3 kein benachbarter Schubtransportwagen 3b angeschlossen ist oder die Ladefluss-Steuereinheit 46 des benachbarten Schubtransportwagens in dem Lade-Betriebsmodus ist, aber angesichts einer hinreichenden Befüllung die Speicher-Freigabeeinrichtung des benachbarten Schubtransportwagens 3b in der Trennstellung ist und somit kein Strom über den Anschluss 43 fließt, kann das Signal des Stromsensors 51 verwendet werden, um die Speicher-Freigabeeinrichtung 48 in die Freigabestellung zu überführen.

Mittels der (Hilfs-)Anschlüsse 41, 44 kann detektiert werden, ob eine Verbindung der Schubtransportwagen 3 mit einer Ladestation 32 besteht. Diese Information kann dann in der Ladefluss-Steuereinheit 46 und/oder der Speicher-Freigabeeinrichtung 48 verarbeitet werden, um die unterschiedlichen Betriebsmoden und Stellungen herbeizuführen.

Vorzugsweise verfügt die Ladefluss-Steuereinheit 46 über einen Steuerausgang, über welchen die Ladefluss-Steuereinheit 46 (unidirektional oder bidirektional) in steuernder Verbindung mit der Speicher-Freigabeeinrichtung 48 steht.

Für das Ausführungsbeispiel in Fig. 13 kann angesichts der nicht vorliegenden Verbindung mit der Ladestation 32 kein Aufladen der Reihe 37 aus der Ladestation 32 erfolgen. Optional möglich ist, dass ein Aufladen eines Schubtransportwagens 3b, 3c aus einem Speicher 47 eines näher an der Ladestation 32 angeordneten Schubtransportwagens 3a erfolgt.

Erfolgt die Verbindung der Reihe 37 mit der Ladestation 32, kann eine Befüllung der Schubtransportwagen 3 der Reihe 37 erfolgen, wobei über die Betriebsmoden und Stellungen der Ladefluss-Steuereinheit 46 und der Speicher-Freigabeeinrichtungen 48 eine Ladereihenfolge der Schubtransportwagen 3a, 3b, 3c vorgegeben werden kann oder ein gleichzeitiges Aufladen mehrerer oder sämtlicher Speicher 47 erfolgen kann. Vorzugsweise erfolgt zunächst ein Aufladen des Schubtransportwagens 3c, der am Weitesten von der Ladestation 32 entfernt ist, mit höherer Priorisierung mit daran anschließender sukzessiver Aufladung de Schubtransportwagen 3b, 3a in der Reihenfolge des sich verringerten Abstandes von der Ladestation 32.

In Fig. 13 ist eine redundante Erkennung, ob eine Verbindung zu der Ladestation 32 besteht, möglich durch Auswertung einerseits des Signals an den Anschlüssen 41, 44 mit der darüber geschaffenen Hilfsleitung zur Erkennung der Ladestation und andererseits durch Auswertung des Signals des Stromsensors 51.

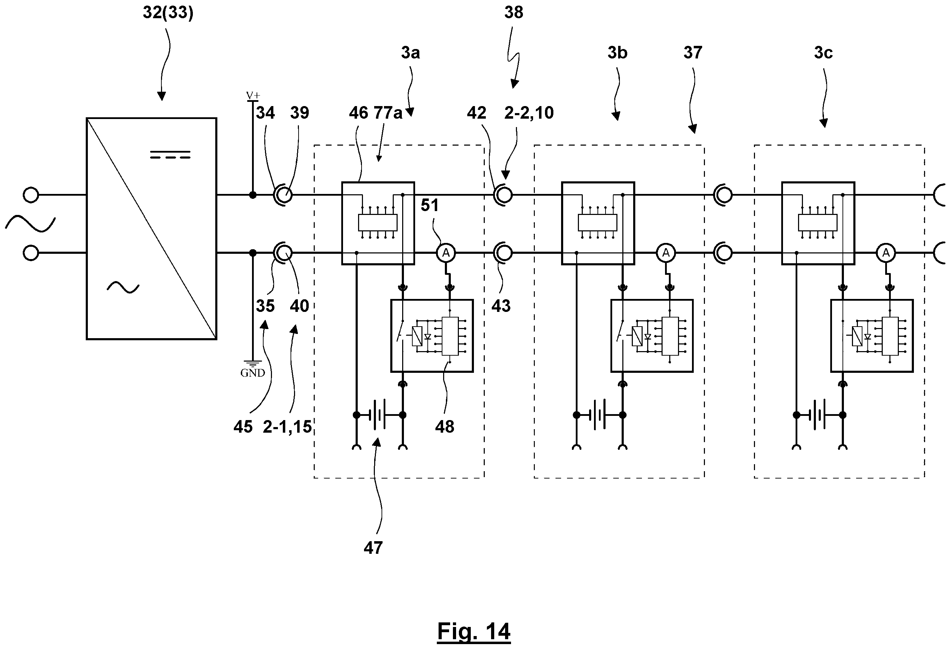

Wie **Fig. 14** zeigt, ist auch eine Ausführungsform möglich, bei der eine derartige Hilfsleitung und damit die Anschlüsse 41, 44 nicht vorhanden sind.

Für das Ausführungsbeispiels gemäß Fig. 14 verfügen die Schubtransportwagen 3 nicht über eine richtungsbestimmende Stromflusskomponente 49. Dies hat zur Folge, dass ein Ladefluss nicht ausschließlich in eine Richtung möglich ist, sondern in beide Richtungen möglich ist. Das bedeutet, dass je nach Betriebsmoden und Stellungen der Ladefluss-Steuereinheiten 46 und der Speicher-Freigabeeinrichtungen 48 möglich ist, dass elektrische Energie aus einem Speicher 47 eines weiter beabstandeten Schubtransportwagens 3c übertragen werden kann an einen mit einem kleineren Abstand von der Ladestation 32 angeordneten Schubtransportwagen 3a, 3b. Ein derartiger Ladungsausgleich in der Reihe 37 kann vorzugsweise genutzt werden, um das Speicherniveau der Speicher 47 der Reihe 37 zumindest teilweise anzugleichen, wenn keine Verbindung mit Ladestation 32 besteht.

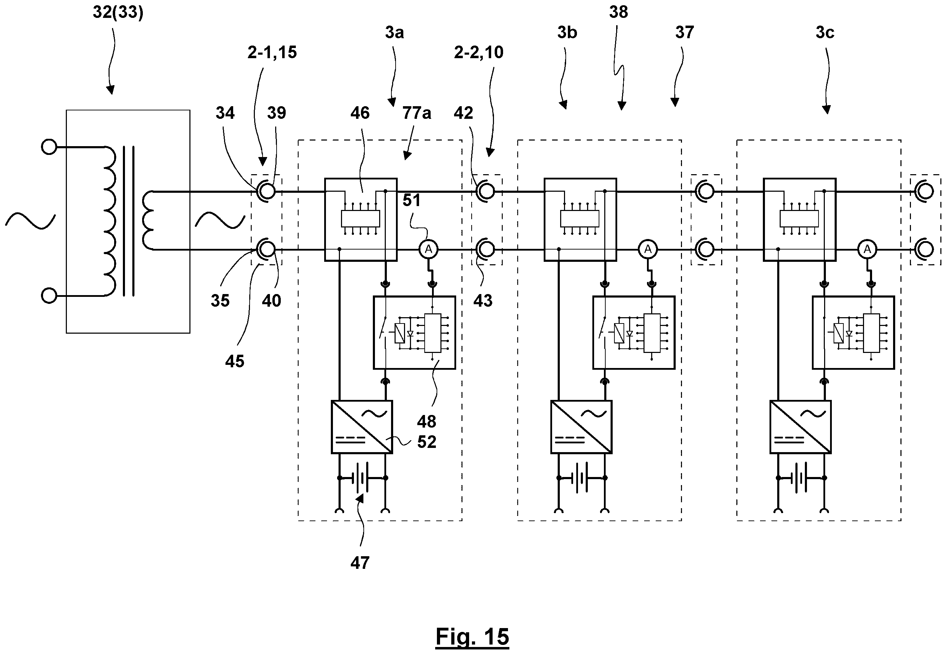

**Fig. 15** zeigt eine Ausführungsform, bei der die Ladestation 32 keine Gleichspannung, sondern eine Wechselspannung zur Verfügung stellt. Bei ansonsten grundsätzlich Figuren 13 oder 14 entsprechender Ausgestaltung ist in diesem Fall dem Speicher 47 ein AC/DC-Spannungswandler 52 vorgeordnet, der in dem Lade-Betriebsmodus die zum Aufladen des Speichers 47 erforderliche Gleichspannung herbeiführt.

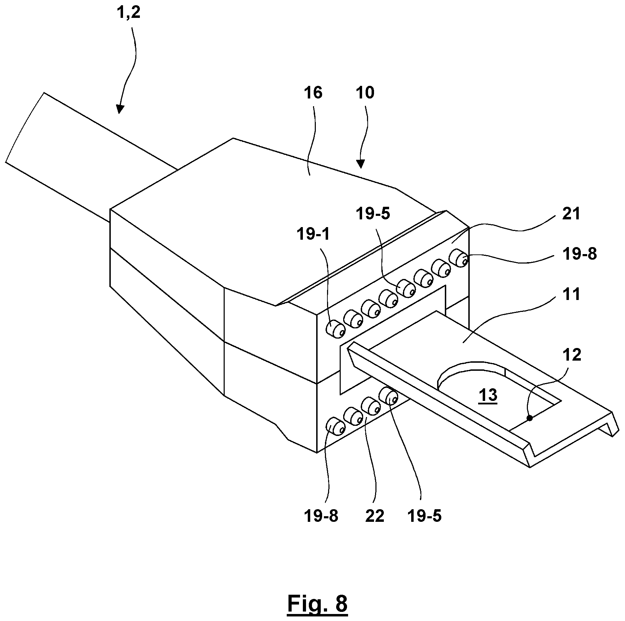

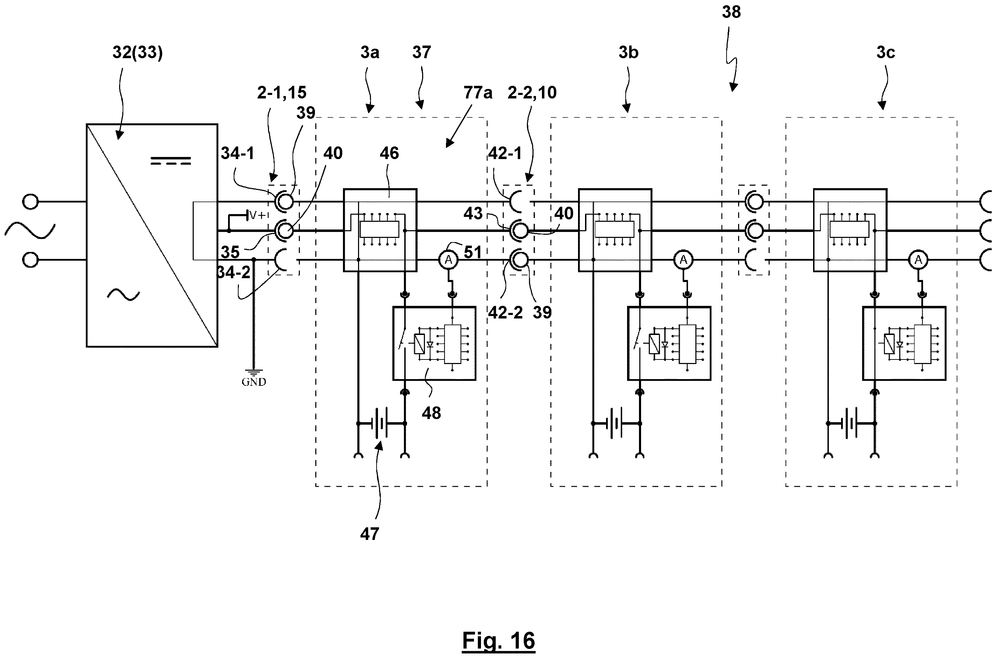

**Fig 16** zeigt eine Ausführungsform, bei der die elektrische Verbindungseinrichtung der Ladestation 32 und die elektrischen Verbindungseinrichtungen 2-2 der Schubtransportwagen 3 Anschlüsse aufweisen, die miteinander verbunden sind und dasselbe Spannungsniveau aufweisen und somit redundant sind. Diese Anschlüsse können dann in unterschiedliche Anschlussleisten 21, 22 eines Steckers 10 integriert sein (vgl. Fig. 8), um ein verpolungssicheres, zwei unterschiedliche Drehstellungen um die Längsachse gewährleistendes Einstecken des Steckers 10 in die Steckeraufnahme 15 zu ermöglichen.

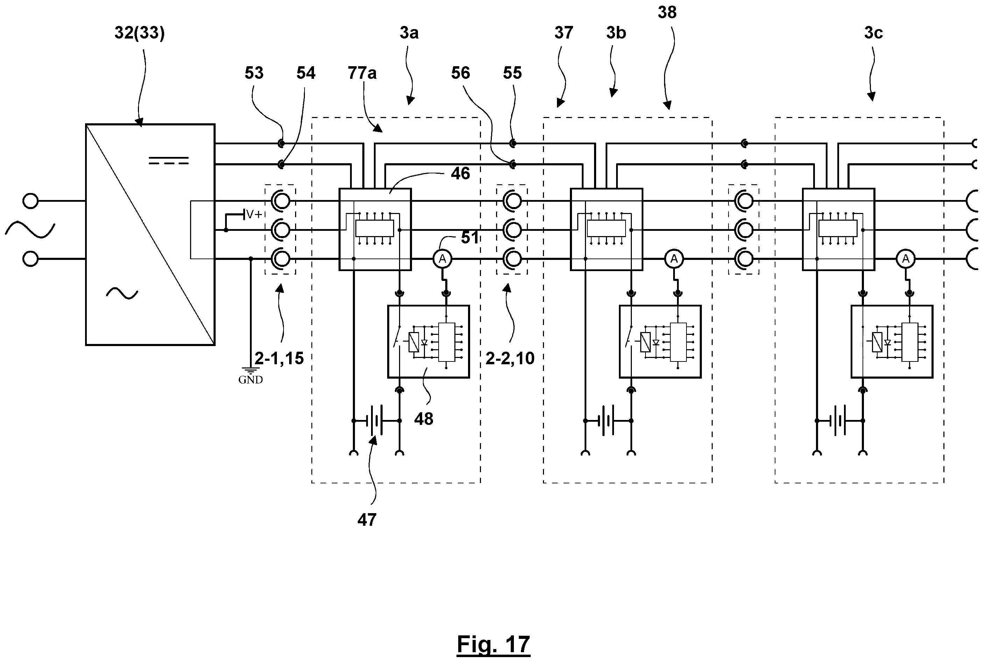

Für das in **Fig. 17** dargestellte Ausführungsbeispiel verfügen die Verbindungseinrichtungen 2-1, 2-2 über weitere eingangsseitige Anschlüsse 53, 54 sowie ausgangsseitige Anschlüsse 55, 56. Diese Anschlüsse 53, 54, 55, 56 bilden Hilfskontakte für die Übertragung weiterer Signale. Beispielsweise können die Anschlüsse 53, 54, 55, 56 Anschlüsse von Datenleitungen sein, mittels welcher zwischen den Schubtransportwagen 3 und/oder der Ladestation 32 Daten übertragen werden können. Diese Daten können beispielsweise einen erfassten Ladezustand eines Speichers 47 betreffen. Möglich ist auch, dass eine spezifische Kennzeichnung eines Schubtransportwagens 3 übertragen wird, die beispielsweise eine Ermittlung der Zahl der Schubtransportwagen 3 in der Reihe 37, die an die Ladestation 32 angeschlossen sind, ermöglichen.

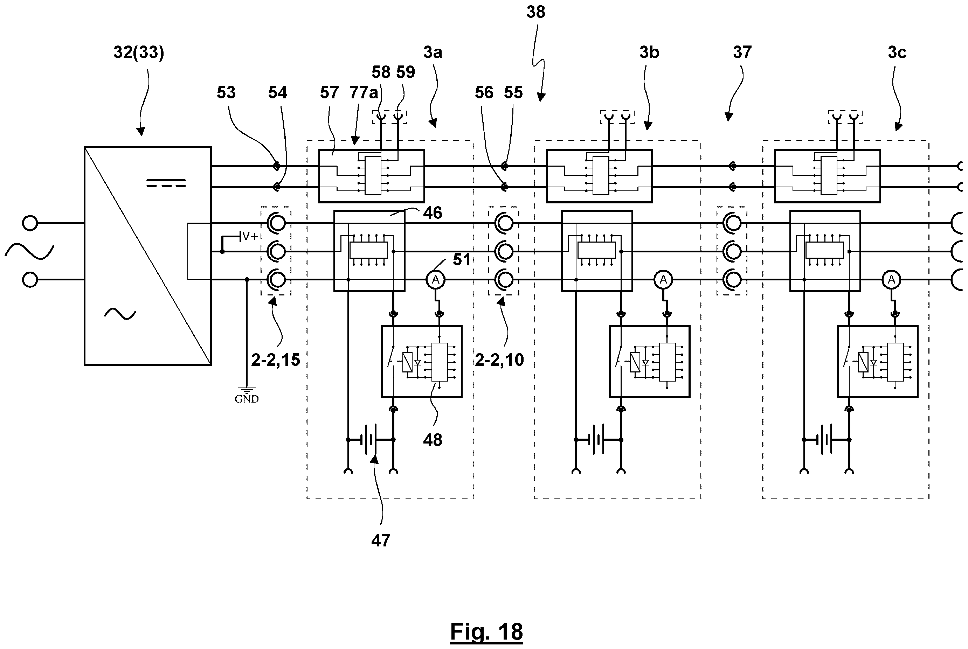

In **Fig. 18** ist zu erkennen, dass (insbesondere für den Fall der Datenübertragung zwischen den Schubtransportwagen 3 und/oder der Ladestation 32 über Anschlüsse 53, 54, 55, 56) die Schubtransportwagen 3 jeweils über eine Datenverarbeitungseinheit 57 verfügen, bei der es sich vorzugsweise um eine elektronische Steuereinheit mit Steuerlogik handelt. Die Datenverarbeitungseinheit 57 kann die übertragenen Daten bearbeiten und das Senden und/oder Empfangen der Daten koordinieren, beispielsweise durch Verwendung geeigneter Datenprotokolle. Des Weiteren zeigt Fig. 18, dass die Schubtransportwagen 3 über weitere Anschlüsse 58, 59 verfügen können, bei denen es sich um Hilfskontakte oder -anschlüsse handeln kann. An die Anschlüsse 58, 59 können beispielsweise Sensoren angeschlossen werden, insbesondere ein Temperatursensor oder ein akustischer Sensor, welcher das Rollgeräusch der Rollen der Schubtransportwagen 3 erfasst zur Analyse, in welchem Bereich mit einer spezifischen Oberflächengestaltung sich ein Schubtransportwagen 3 gerade bewegt. Die Anschlüsse 58, 59 sind dabei vorzugsweise mit der Datenverarbeitungseinheit 57 verbunden.

Möglich ist, dass die richtungsbestimmende Stromflusskomponente 49 mittels eines Bypasses überbrückt werden kann, wobei dann in diesem Bypass von einer Steuereinheit umgeschaltete Schalteinrichtung angeordnet sein kann, die bedarfsgerecht den Bypass aktivieren oder deaktivieren kann.

Die Ladestation 32 kann ein beliebiges Ladeniveau, eine beliebige Ladeleistung und eine beliebige Ladespannung aufweisen. Beispielsweise kann die Ladestation 32 mit einem 230 V-Netz verbunden sein und eine Gleichspannung mit 12 V zur Verfügung stellen. Möglich ist, dass die Schubtransportwagen 3 einen Spannungswandler aufweist, der das Spannungsniveau der Ladestation 32 anheben oder verringern kann. Für die vorgenannte Ladestation 32 mit einem 12 V bereitstellenden Netzteil kann eine Erhöhung durch den Spannungswandler beispielsweise auf ein Spannungsniveau von 24 V erfolgen.

Möglich ist im Rahmen der Erfindung auch, dass die Ladestation 32 über einen elektrischen Speicher, Pufferbatterien und/oder Photovoltaikmodule verfügt.

Anstelle der Sicherung der Schubtransportwagen 3 aneinander mittels eines Münzschlosses 6 kann auch eine digitale Sicherung erfolgen. Bei Nutzung einer kundenspezifischen App kann ein Entriegelungsvorgang durch eine Kopplung mit einer drahtlosen Sende- und/oder Empfangseinrichtung, insbesondere einer Bluetooth-Einrichtung, erfolgen. Im Extremfall kann die mechanische Verbindungseinrichtung 1 auf die elektrische Verbindungseinrichtung 2 reduziert sein und/oder es erfolgt lediglich eine mechanische Verbindung über einen Kontakt von Permanentmagneten 25, 26.

Die in dem Verbindungsstrang 7 eingesetzte mindestens eine Leitung sollte hochflexibel sein und/oder hohe Ströme verarbeiten können.

Der Stecker 10 und die Steckeraufnahme 15 sind idealerweise so ausgeführt, dass die Anschlüsse berührungssicher und vor Umwelteinflüssen geschützt sind.

Vorzugsweise erfolgt ein Laden der Speicher 47 mit einer Ladeleistung von 50 Watt, während (gegebenenfalls nach einer Spannungswandlung) die Spannung an einem Schubtransportwagen 3 beispielsweise 5 V, 12 V oder 24 V betragen kann.

Für eine Betriebsart kann in dem Schubtransportwagensystem 38 ermöglicht sein, dass ein aufgeladener oder aufzuladender Schubtransportwagen 3, der am Weitesten in der Reihe 37 von der Ladestation 32 entfernt ist, zunächst hinsichtlich seines Ladezustandes überprüft wird. Ist der Speicher 47 mindestens mit einem ersten Schwellwert (beispielsweise 70 %) geladen, erfolgt eine Ansteuerung der Ladefluss-Steuereinheiten 46 und der Speicher-Freigabeeinrichtung 48 derart, dass ein Laden dieses Speichers 47 erfolgt. Ist hingegen der Ladezustand des Speichers 47 größer als ein zweiter Schwellwert, der kleiner ist als der erste Schwellwert (beispielsweise 30 %) erfolgt über die Ladefluss-Steuereinheiten 46 und die Speicher-Freigabeeinrichtungen 48 eine ausschließliche Aufladung des Speichers 47 durch die Ladestation 32. Unterschreitet hingegen der Ladezustand des Speichers 47 den zweiten Schwellwert, kann eine kumulative Aufladung des Speichers 47 sowohl von der Ladestation 32 als auch der Speicher 47 der in der Reihe 37 davor und/oder dahinter angeordneten Schubtransportwagen 3 erfolgen, was eine Art Boost-Aufladung darstellen.

Möglich ist, dass der Schubtransportwagen 3 einen elektrischen Antrieb aufweist, der eine manuelle Bewegung des Schubtransportwagens 3 ersetzt oder unterstützt. In diesem Fall kann das Antriebssystem für eine Ausführungsform auch Energie rekuperieren, die dann dem Speicher 47 zugeführt werden kann.

An die Anschlüsse können Sensoren angeschlossen sein, die beispielsweise
- eine Wägezelle,
- eine Positionserfassungseinrichtung (absolut wie GPS; relativ),
- ein Temperatursensor zur Erfassung, ob sich der Schubtransportwagen 3 in einem spezifischen Bereich eines Einkaufsmarktes, insbesondere einem Kühlbereich befindet,
- ein Beschleunigungssensor zur Erfassung, ob der Schubtransportwagen 3 gerade bewegt wird oder steht und wie lange eine Verweildauer in einem spezifischen Bereich eines Einkaufsmarktes ist und/oder zur Erkennung eines beschädigenden Betriebs des Schubtransportwagens oder sogar eines Vandalismus und/oder zum Erfassen einer rumpligen Fahrt über einen rauen Boden oder im Bereich von Fliesen zur mittelbaren Erkennung eines Bereichs, in dem der Schubtransportwagen 3 bewegt wird,
- ein Helligkeitssensor zur Unterscheidung zwischen Tag und Nacht oder zur Unterscheidung von Einkaufsmarktbereichen mit unterschiedlicher Helligkeit oder zur Steuerung der Helligkeit eines Displays je nach Umgebungshelligkeit,
- eine Kamera, ein Scanner, eine RFID-Sende- und/oder Empfangseinrichtung oder ein Scanner für einen Barcode oder QR-Code und/oder
- ein Mikrofon,
aufweisen. In diesem Fall könne die Anschlüsse zur Übertragung von Daten und die Datenverarbeitungseinheit 57 zur Verarbeitung und Übertragung entsprechender Signale und Daten ausgebildet sein.

Die Schubtransportwagen 3 können Displays aufweisen, bei denen es sich um eine beliebige optische Anzeige, ein Rot-Gelb-Grün-Ampelsystem u. ä. handeln kann.

Des Weiteren kann der Schubtransportwagen 3 Bedieneinheiten aufweisen, bei denen es sich beispielsweise um ein Smartphone, Schalter, eine Tastatur, ein Touchscreen, eine Sprachsteuerung, Drehregler u. ä. handeln kann.

Der Schubtransportwagen 3 kann über ein Verriegelungssystem oder Diebstahlsystem verfügen, mittels dessen ein Rad des Schubtransportwagens 3 fixiert werden kann oder die Sicherungskette 8 fixiert werden kann.

Ebenfalls möglich ist, dass das Schubtransportwagensystem 38 im Bereich der Bevorratungsstation 33 über einen Riegel verfügt, über welchen die Entnahme von Schubtransportwagen 3 unterbunden werden kann. Hierbei kann eine Verrieglung durch einen von dem Schubtransportwagen 3 selber betätigen Riegel des Schubtransportwagens 3 erfolgen. Alternativ oder kumulativ kann ein Riegel der Bevorratungsstation 33 mit dem Schubtransportwagen 3 in Wechselwirkung treten.

Möglich ist, dass eine Lade- und Bevorratungsstation 32, 33 zwei nebeneinander angeordnete Reihen 37 vom Schubtransportwagen 3 ermöglicht, die dann jeweils über eine zugeordnete Ladestation geladen werden können. Je nach Ladezustand kann dann ein bevorzugtes Laden der Schubtransportwagen 3 in einer der beiden Reihen erfolgen. Möglich ist auch, dass in einem derartigen Fall für einen Benutzer angezeigt wird, aus welcher der Reihen an der Lade- und Bevorratungsstation 32, 33 ein Kunde einen Schubtransportwagen 3 entnehmen soll. Hierbei handelt es sich insbesondere um Schubtransportwagen 3 der Reihe 37, die einen höheren Ladezustand aufweisen. Dies kann dem Kunden an einer zentralen Anzeige der Lade- und Bevorratungsstation 32, 33 und/oder an einem Display der Schubtransportwagen 3 angezeigt werden.

Möglich ist, dass die Aufladung ausschließlich über den Verbindungsstrang 7 des Schubtransportwagens 3 erfolgt oder lediglich teilweise, sodass der Stromkreis für die Aufladung sowohl die Herstellung der elektrischen Verbindung über den Verbindungstrang 7 als auch eine zusätzliche Kontaktierung in einem anderen Kontaktbereich der Schubtransportwagen 3 oder mit einer Ladeschiene der Bevorratungsstation erfordert. Hierbei kann diese weitere Kontaktstelle beispielsweise im Bereich eines Einkaufskorbs oder eines Fahrgestells eines Einkaufswagen 4 angeordnet sein.

Eine Datenübertragung erfolgt beispielsweise mittels eines seriellen Protokolls.

Genutzt werden kann auch ein USP-Stecker und/oder ein CAN-Bus.

Möglich ist, dass eine verschlüsselte Übermittlung der Daten erfolgt.

Möglich ist, dass für eine Datenübertragung eine separate Leitung und zugeordnete Anschlüsse vorhanden sind. Möglich ist aber auch, dass über die Leitung für die Ladeleistung mittels einer Modulation der Ladespannung und/oder des Ladestromes eine Übertragung von Daten erfolgt.

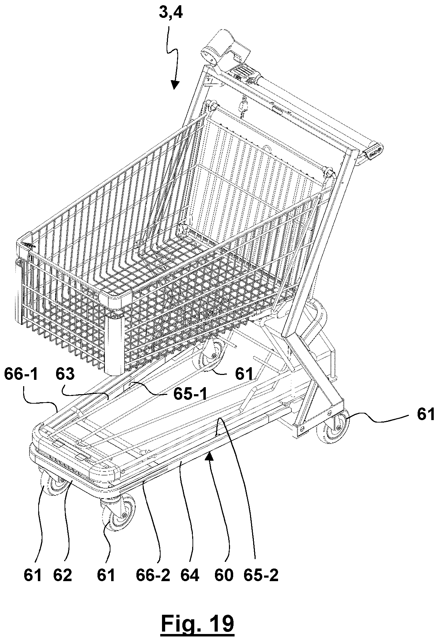

**Fig. 19** zeigt einen als Einkaufswagen 4 ausgebildeten Schubtransportwagen 3. Der Schubtransportwagen 3 verfügt über einen Fahrgestellrahmen 60, an dem (unmittelbar oder mittelbar) die Fahrzeugräder 61 gehalten sind. Der Fahrgestellrahmen 60 ist U-förmig ausgebildet mit einem vorderen Grundschenkel 62 und divergierenden, sich von dem Grundschenkel 62 nach hinten erstreckenden Seitenschenkeln 63, 64. Der Grundschenkel 62 und die Seitenschenkel 63, 64 können von beliebigen Rahmenprofilen, insbesondere Hohlprofilen, gebildet sein.

An den Seitenschenkeln 63, 62 sind jeweils innenliegend erste Kontaktelemente 65 sowie außenliegend zweite Kontaktelemente 66 angeordnet, wobei die Kontaktelemente 65, 66 in Richtung der Längsachse der Seitenschenkel 63, 64 versetzt angeordnet sind.

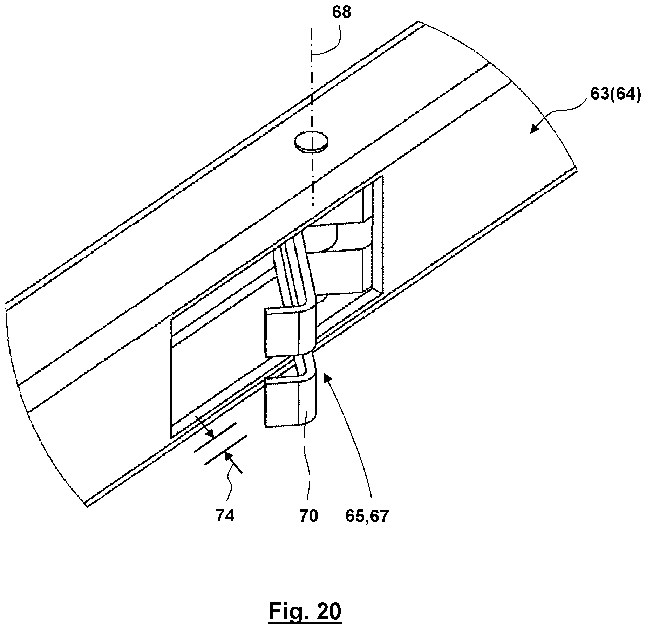

Das Kontaktelement 65 ist in dem Detail in **Fig. 20** dargestellt. Zu erkennen ist, dass das Kontaktelement 65 als Kontaktzunge 67 ausgebildet ist. Möglich ist, dass die Kontaktzunge 67 elastisch ausgebildet ist und somit eine Ausgleichsbewegung gewährleistet. Alternativ oder kumulativ kann das Kontaktelement 65 beweglich an dem Seitenschenkel 63, 64 unter Beaufschlagung einer Federeinrichtung gehalten sein, was für das in Fig. 20 dargestellte Ausführungsbeispiel dadurch erfolgt, dass das Kontaktelement 65 oder die Kontaktzunge 67 verschwenkbar um eine Schwenkachse 68 an dem Seitenschenkel 63, 64 gelagert ist, wobei die Verschwenkung um die Schwenkachse 68 unter Beaufschlagung einer Federeinrichtung erfolgt. Für das dargestellte Ausführungsbeispiel verfügt der Seitenschenkel 63, 64 über eine fensterartige Öffnung zum Innenraum, durch welches sich die Kontaktzunge 67 auf der Innenseite des Seitenschenkels 63, 64 aus diesem heraus erstreckt.

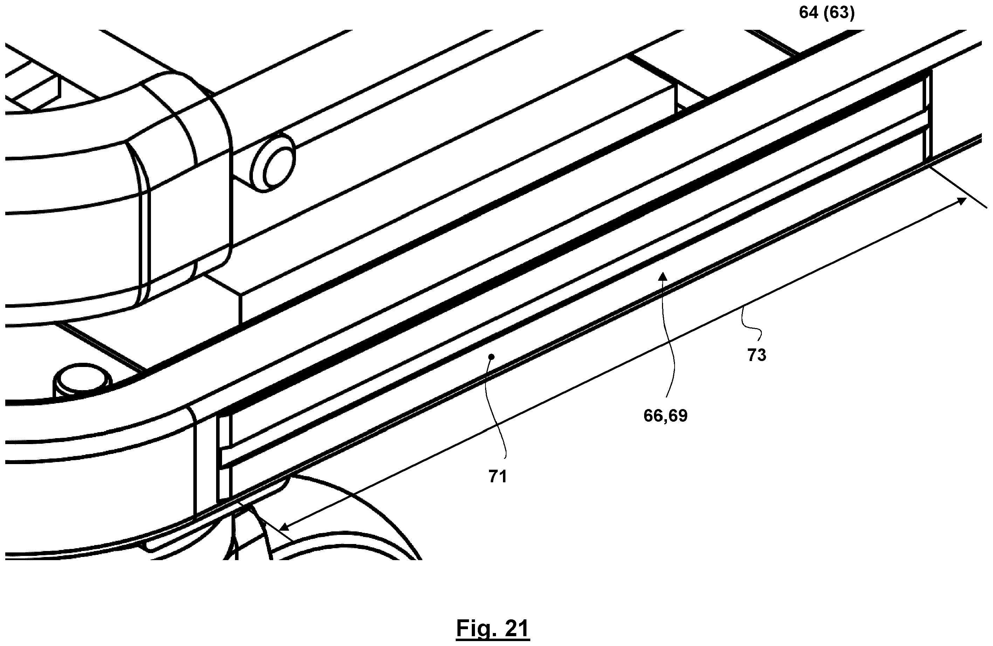

Das Kontaktelement 66 ist im Detail in **Fig. 21** dargestellt. Hier ist das Kontaktelement 66 als Kontaktgleitleiste 69 ausgebildet.

Die Kontaktelemente 65, 66 bilden jeweils Kontaktflächen 70, 71 aus, über die die Kontaktelemente 65, 66 beim Einschieben der Schubtransportwagen 3 aneinander zur Anlage kommen und einen elektrischen Kontakt 72 ausbilden. Der elektrische Kontakt 72 wird dabei in einem Ausgleichsbereich gewährleistet, der insbesondere durch die federnde Abstützung und/oder eine relative Gleitbewegung der Kontaktelemente 65, 66 gewährleistet wird

Die Länge der Kontaktgleitleiste 69 gibt einen Längsausgleichsbereich 73 vor, im Bereich dessen der elektrische Kontakt 72 gewährleistet ist. Des Weiteren ist in **Fig. 20** ein sich durch die mögliche Einfederung des Kontaktelements 65 ergebender Querausgleichsbereich 74 gekennzeichnet.

Für das dargestellte Ausführungsbeispiel sind die Kontaktelemente 65, 66 an den Seitenschenkeln 63, 64 jeweils doppelt vorgesehen, wobei die doppelten Kontaktelemente redundante Kontaktelemente bilden können oder separate Signale oder separat elektrische Leistung übertragen können.

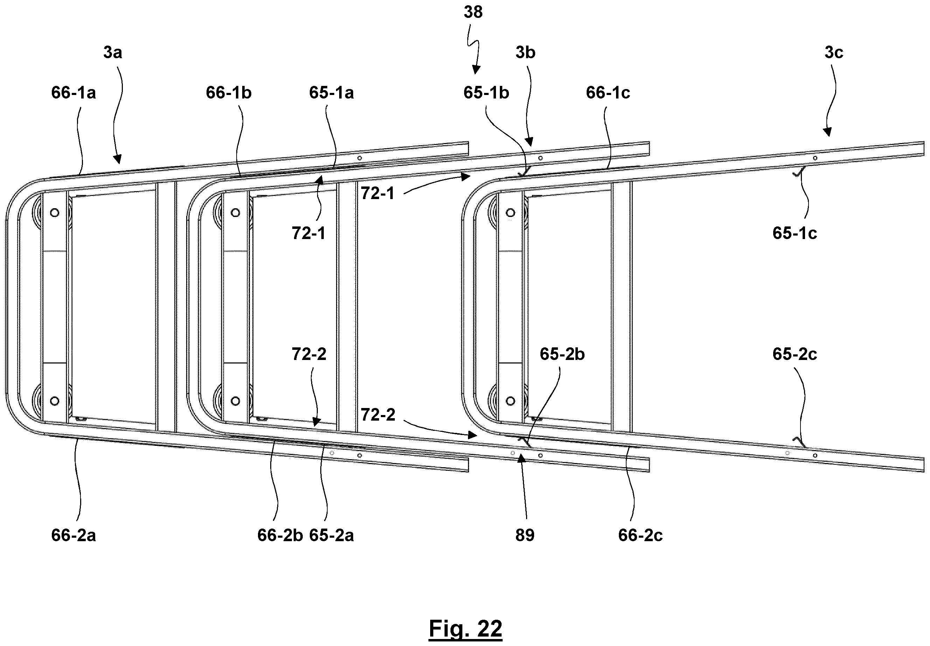

In **Fig. 22** ist ein Schubtransportwagensystem 38 mit drei Schubtransportwagen 3a, 3b, 3c dargestellt. Hierbei ist der Schubtransportwagen 3b vollständig in den Schubtransportwagen 3a eingeschoben. Der elektrische Kontakt 72 im Bereich der Kontaktelemente 65, 66 der Schubtransportwagen 3a, 3b wird gewährleistet durch die Anlage der Kontaktfläche 70 des Kontaktelements 65 im hinteren Endbereich an der Kontaktfläche 71 der Kontaktgleitleiste 69. Hingegen ist der Schubtransportwagen 3c lediglich teilweise in den Schubtransportwagen 3b eingeschoben. Dies hat zur Folge, dass die Kontaktfläche 70 des Kontaktelements 65 im vorderen Endbereich an der Kontaktfläche 71 der Kontaktgleitleiste 69 anliegt. Würde der Schubtransportwagen 3c weiter in den Schubtransportwagen 3b eingeschoben werden, würde das Kontaktelement 65 weiter nach hinten entlang der Kontaktfläche 71 der Kontaktgleitleiste 69 gleiten.

Für das Ausführungsbeispiel in den **Fig. 19 bis 22** sind die Ausgleichsbereiche, insbesondere der Längsausgleichsbereich 73 und der Querausgleichsbereich 74, durch einen Gleit-Freiheitsgrad und/oder einen elastischen oder federnden Freiheitsgrad der Kontaktelemente 65, 66 bereitgestellt, welche sich in der horizontalten Ebene erstrecken. Die Kontaktkraft zwischen den Kontaktelementen 65, 66 hat somit ebenfalls eine Orientierung in der horizontalen Ebene.

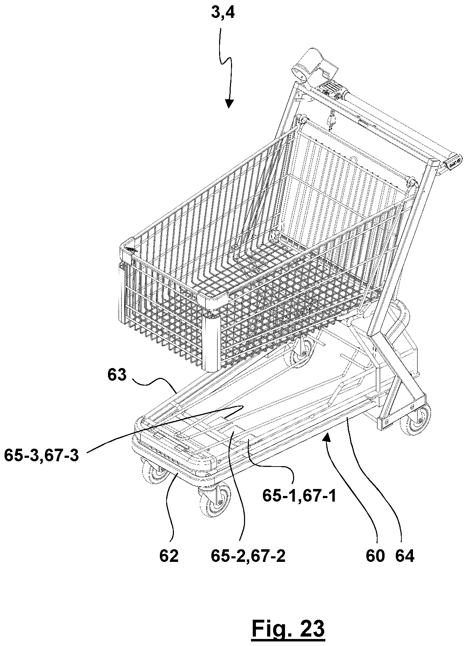

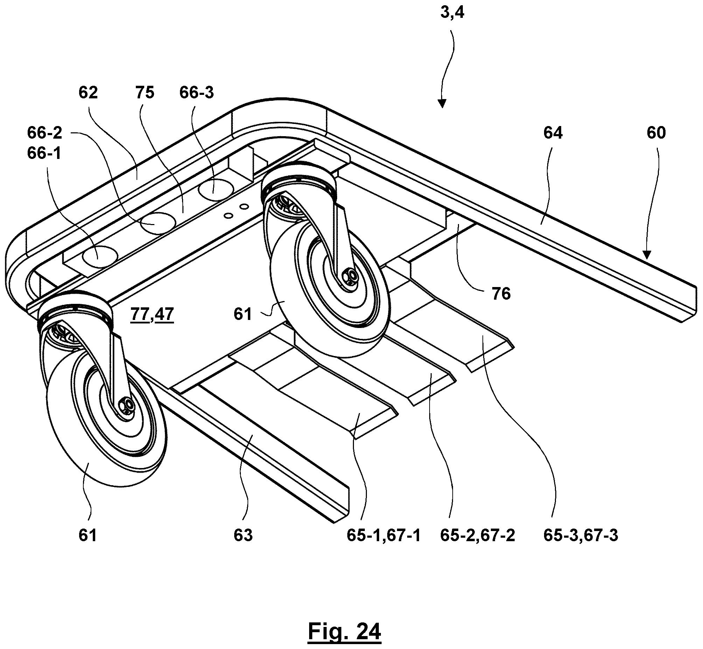

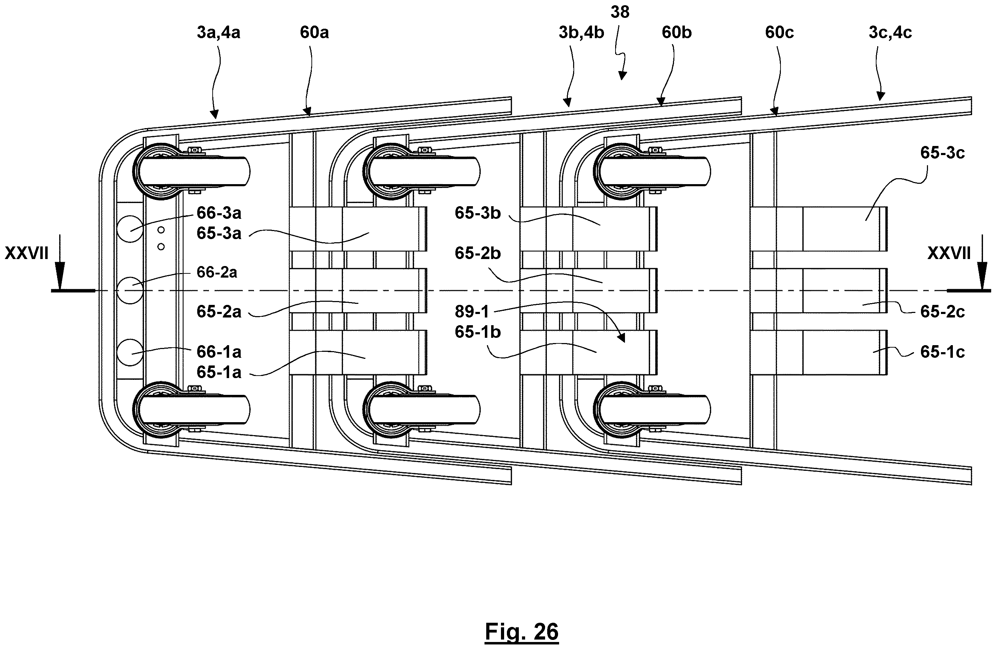

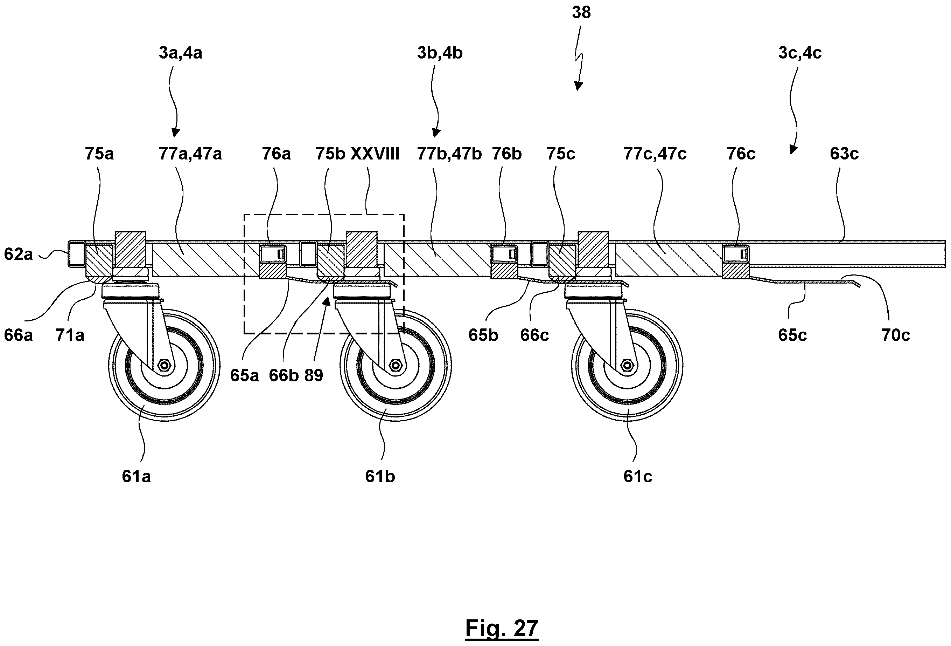

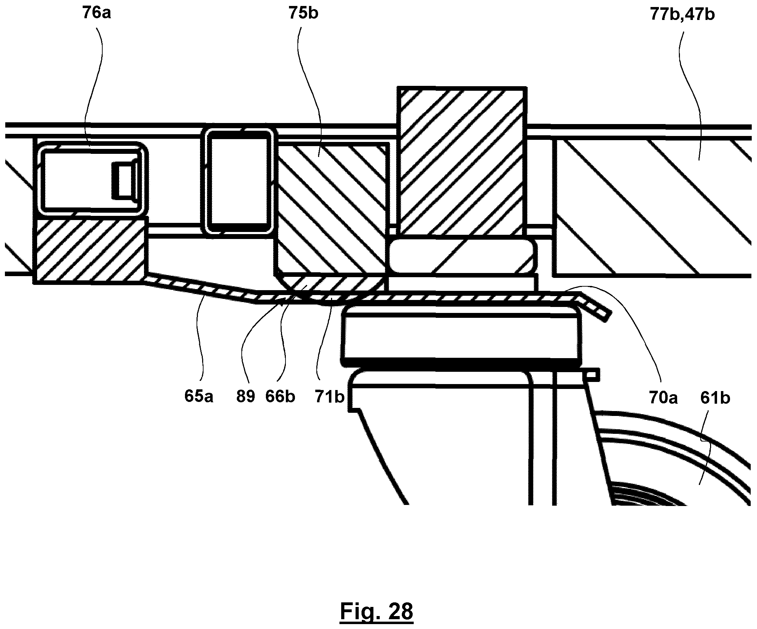

**Fig. 23 bis 28** zeigen eine Ausführungsform, bei welcher zwischen den Kontaktelementen 65, 66 eine in vertikaler Richtung orientierte Kontaktkraft wirkt. Zu diesem Zweck ist an dem Fahrgestellrahmen 60 ein in vertikaler Richtung elastisches Kontaktelement 66 abgestützt, welches hier als in vertikaler Richtung nachgiebige Kontaktzunge 67 ausgebildet ist. Des Weiteren trägt der Fahrgestellrahmen 60 ein Kontaktelement 65. Für das dargestellte Ausführungsbeispiel weist das Kontaktelement 65 nach unten. Überfährt der Schubtransportwagen 3b die Kontaktelemente 66 eines davor angeordneten Schubtransportwagens 3a, drückt das Kontaktelement 65b die Kontaktzunge 67a des davor angeordneten Schubtransportwagens 3a nach unten unter Ausbildung des elektrischen Kontakts 72.

Für das dargestellte Ausführungsbeispiel verfügt der Schubtransportwagen 3 über drei quer zur Längsachse nebeneinander angeordnete Kontaktelemente 65-1, 65-2 und 65-3, die jeweils als Kontaktzungen 67-1, 67-2 und 67-3 ausgebildet sind. Hierbei sind die entsprechend nebeneinander angeordneten Kontaktelemente 66-1, 66-2 und 66-3 an einer Kontaktelementleiste 75 gehalten, die innenliegend unmittelbar an dem Grundschenkel 62 befestigt ist. Die Kontaktzungen 67 sind an einer beabstandet von dem Grundschenkel 62 angeordneten Querstrebe 76 befestigt, die die beiden Seitenschenkel 63, 64 miteinander verbindet. Möglich ist, dass zwischen dem Grundschenkel 62 und der Kontaktelementleiste 75 einerseits und der Querstrebe 76 andererseits eine Elektrikeinrichtung 77 und/oder ein elektrischer Speicher 47 angeordnet sind/ist.

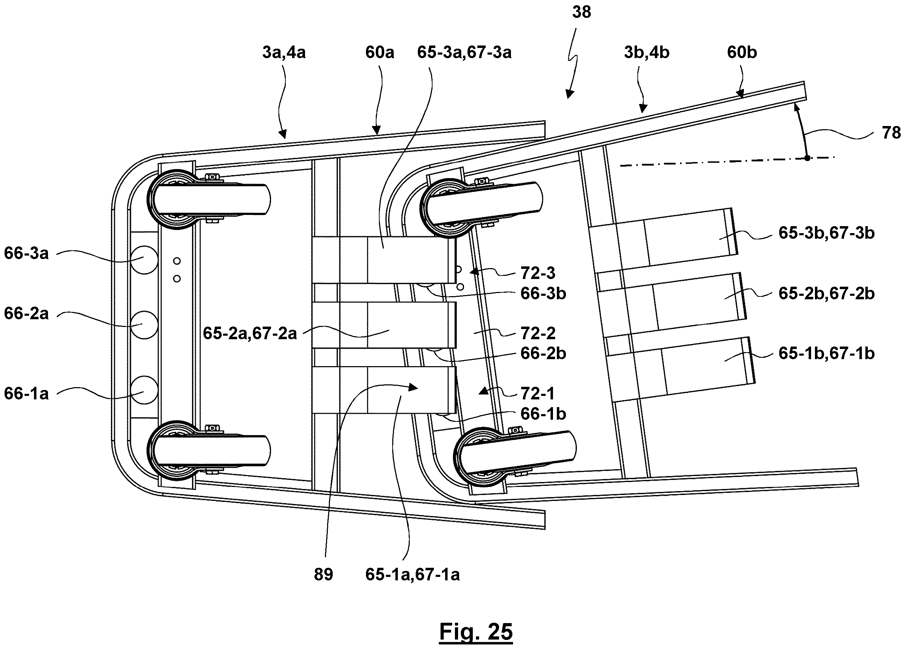

**Fig. 25** zeigt ein Schubtransportwagensystem 38, bei dem zwei Schubtransportwagen 3a, 3b, nur teilweise in Richtung ihrer Längsachsen ineinandergeschoben sind, wobei die Längsachsen auch nicht koaxial zueinander ausgerichtet sind. Die Kontaktelemente 66-1b, 66-2b, 66-3b des Schubtransportwagens 3b überfahren die Kontaktelemente 65-1a, 65-2a und 65-3a unter Herbeiführung der elektrischen Kontakte 72-1, 72-2 und 72-3. Die Gestaltung der Kontaktelemente 65, 66 und der Gleitkontakt derselben ermöglicht (zusätzlich zu einem Längsausgleichsbereich und einem Querausgleichsbereich) einen Winkelausgleichsbereich 78.

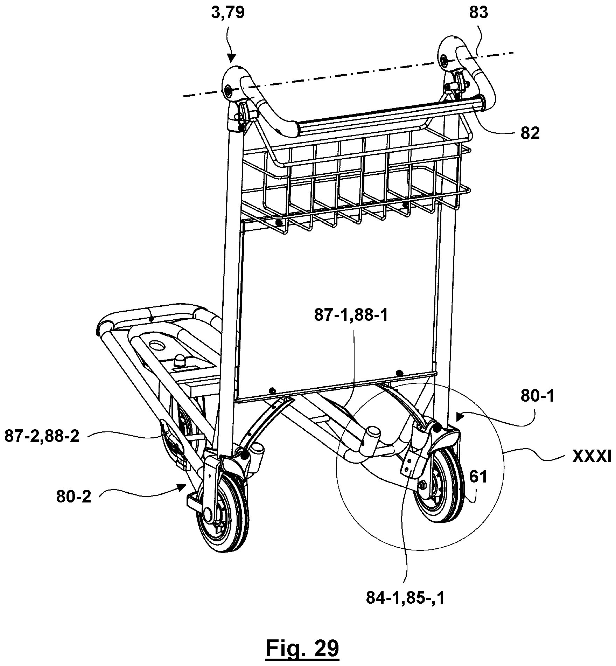

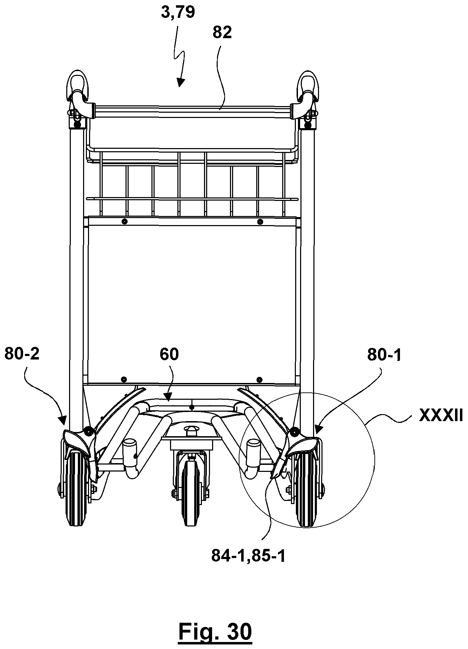

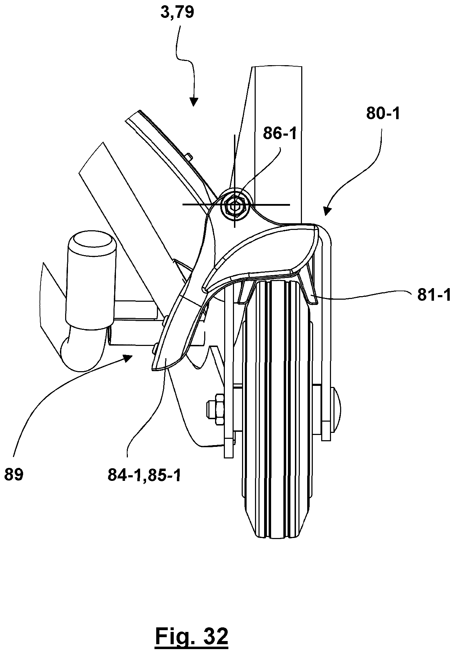

**Fig. 29 bis 32** zeigen eine weitere Ausführungsform eines Schubtransportwagens 3, der hier als Gepäckwagen 79 ausgebildet ist. Der Gepäckwagen 79 verfügt über eine Feststellbremse 80. Die Feststellbremse 80 weist ein Bremselement 81 auf, welches in einer Parkstellung mittels einer Feder gegen ein Fahrzeugrad 61 gedrückt wird zur Herbeiführung einer Feststellbremswirkung (vgl. Fig. 32). Der Gepäckwagen 79 verfügt über eine Schubstange 82. Damit der Benutzer die Feststellbremse 80 von der Parkstellung in eine Lösestellung überführen kann, in der das Bremselement 81 nicht gegen das Fahrzeugrad 61 gepresst wird, muss der Benutzer die Schubstange 82 um eine Schwenkachse 83 durch Herunterdrücken der Schubstange 82 verschwenken. Die Schwenkbewegung der Schubstange 82 um die Schwenkachse 83 wird über eine hier nicht dargestellte getriebliche Koppelverbindung derart an das Bremselement 81 übertragen, dass das Bremselement 81 durch Herunterdrücken der Schubstange 82 von dem Fahrzeugrad 61 weg geschwenkt wird. Durch eine hier ebenfalls nicht dargestellte Federeinrichtung werden die Schubstange 82, die Koppelverbindung und das Bremselement 81 in Richtung der Parkstellung beaufschlagt, so dass durch die Federeinrichtung bei Beseitigung der von dem Benutzer auf die Schubstange 82 aufgebrachten Kräfte automatisch die Parkstellung herbeigeführt wird.

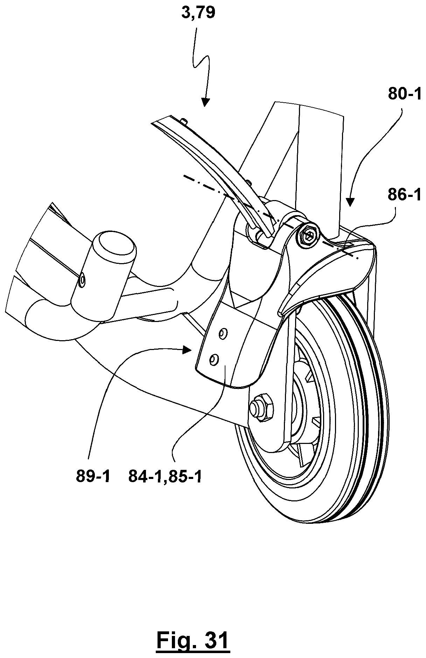

Die Feststellbremse verfügt über ein Betätigungselement 84. Das Betätigungselement 84 ist als Betätigungshebel 85 ausgebildet. Der Betätigungshebel 85 ist um eine horizontale, vorzugsweise in Längsrichtung orientierte Schwenkachse 86 verschwenkbar. Durch die Federeinrichtung oder eine zusätzliche Federeinrichtung ist der Betätigungshebel 65 in eine Betätigungshebel-Parkstellung beaufschlagt, die in **Fig. 31** **und** **32** eingenommen ist. Wird hingegen in den Schubtransportwagen 3a ein weiterer Schubtransportwagen 3b von hinten eingeschoben, kommt eine Außenfläche eines zugeordneten Seitenschenkels 63, 64 oder ein hieran gehaltenes Betätigungselement 87, insbesondere eine rampenförmige Gleitleiste 88, zur Anlage an den Betätigungshebel 85 und drückt den Betätigungshebel 85 nach außen, was eine Rotation des Betätigungshebels 85 um die Schwenkachse 86 bei Blickrichtung von hinten entgegen dem Uhrzeigersinn zur Folge hat. Der Betätigungshebel 85 ist getrieblich mit dem Bremselement 81 gekoppelt, wobei das Bremselement 81 auch fest mit dem Betätigungshebel 85 verbunden sein kann. Die erläuterte Schwenkbewegung des Betätigungshebels 85 in Folge des Einschiebens des Schubtransportwagens 3 führt somit dazu, dass das Bremselement 81 von der Parkstellung in die Lösestellung überführt wird. Dies kann mit einer Bewegung der getrieblichen Koppelverbindung und der Schubstange 82 einhergehen. Vorzugsweise behalten diese aber ihre Parkstellung bei, was durch einen Freiheitsgrad oder ein Langloch in der getrieblichen Koppelverbindung gewährleistet werden kann. Weitere Informationen zu einer derartigen Ausgestaltung einer automatisch mit dem Einschieben eines Schubtransportwagens gelösten Feststellbremse sowie Hinweise auf mögliche alternative Ausführungsformen der Realisierung dieser Feststellbremse 80, die auch im Rahmen der vorliegenden Erfindung einsetzbar sind, sind dem Patent DE 2005 003 730 B4 der Anmelderin zu entnehmen.

Für diese Ausführungsform können die Kontaktelemente 65 an dem Betätigungselement 84 oder dem Betätigungshebel 85 angeordnet sein, während die Kontaktelemente 66 an dem Betätigungselement 87 oder der Gleitleiste 88 angeordnet sein können. Die Federeinrichtung der Feststellbremse 80 ist somit sowohl für die Herbeiführung der Feststellbremswirkung der Feststellbremse 80 als auch für die Bereitstellung der Kontaktkraft zwischen den Kontaktelementen 65, 66 zuständig.

Für das dargestellte Ausführungsbeispiel sind auf diese Weise zwei elektrische Kontakte 72-1, 72-2 zwischen Kontaktelementen 65-1 und 66-1 sowie 65-2 und 66-2 bereitgestellt.

In den dargestellten Ausführungsbeispielen werden ein Längsausgleichsbereich 73, ein Querausgleichsbereich 74 und ein Winkelausgleichsbereich 78 auf unterschiedliche Weise durch eine Ausgleichseinrichtung 89 bereitgestellt. Ohne dass eine Einschränkung der Erfindung hierauf erfolgen soll, erfolgt die Bereitstellung dieser Ausgleichsbereiche durch die Ausgleichseinrichtung 89 einerseits durch eine nachgiebige Ausbildung oder Abstützung der Kontaktelemente 65, 66 und/oder die Ermöglichung einer Gleitbewegung der Kontaktelemente 65, 66 relativ zueinander und/oder eine verschwenkbare Abstützung der Kontaktelemente 65, 66 aneinander.

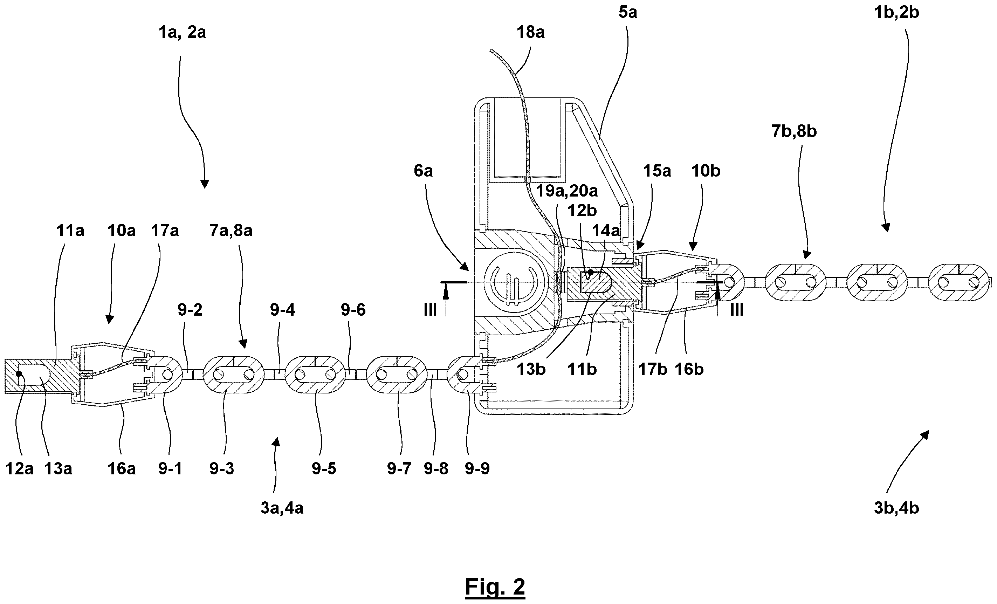

Die möglichen Übertragungen elektrischer Signale oder elektrischer Leistung ist zuvor für die Nutzung der elektrische Verbindungseinrichtung gemäß den Fig. 1 bis 18 für die elektrische Kopplung der ineinander geschobenen Schubtransportwagen beschrieben worden. Das Entsprechende gilt, wenn eine Übertragung der Signale oder Leistung nicht über die elektrische Verbindungseinrichtung 45 und nicht über einen Stecker 10 und eine Steckeraufnahme 15 erfolgt, sondern, wie unter Bezugnahme auf die Fig. 19 bis 32 beschrieben worden ist, über Kontaktelemente 65, 66. In diesem Fall kann auch die beschriebene Steuerlogik insbesondere für das Lastmanagement, das Laden und die Weitergabe von Signalen und elektrischer Leistung zwischen mehreren Schubtransportwagen einer Reihe entsprechend über die Kontaktelemente 65, 66 erfolgen. Auch die Prinzipskizzen gemäß Fig. 13 bis 18 gelten dann entsprechend, wobei dann insbesondere anstelle der elektrischen Verbindungseinrichtung 45, insbesondere der Anschlüsse 34, 35, 36, 39, 40, 41, 42, 43, 53, 54, 55, 56, die Kontaktelemente 65, 66 genutzt werden können. Sämtliche elektrischen und elektronischen Komponenten, insbesondere die Datenverarbeitungseinheit 57, die Ladefluss-Steuereinheit 46, die Speicher-Freigabeeinrichtung 48, der Speicher 47, der Stromsensor 51, die Stromflusskomponente 49 und/oder die beschriebene Steuerlogik können dann entsprechende Anwendung finden.

Vorteilhaft ist insbesondere für die Betriebssicherheit, wenn die elektrischen Verbindungseinrichtungen, der Stecker, die Steckeraufnahme und/oder die Kontaktelement bei dem Entfernen eines Schubtransportwagens von einem anderen Schubtransportwagen zur Benutzung des Schubtransportwagens stromlos sind oder geschaltet werden.

### BEZUGSZEICHENLISTE

- 1: mechanische Verbindungseinrichtung
- 2: elektrische Verbindungseinrichtung
- 3: Schubtransportwagen
- 4: Einkaufswagen
- 5: Gehäuse
- 6: Münzschloss
- 7: Verbindungsstrang
- 8: Sicherungskette
- 9: Glied
- 10: Stecker
- 11: Einsteckzunge
- 12: Rast- oder Verriegelungsfläche
- 13: Durchgangsausnehmung
- 14: Rast- oder Verriegelungselement
- 15: Steckeraufnahme
- 16: Steckergehäuse
- 17: Verbindungskabel
- 18: Verbindungskabel
- 19: elektrisches Steckerkontaktelement
- 20: Kontaktklemme
- 21: Anschlussleiste
- 22: Anschlussleiste
- 23: Feder
- 24: Anschlussleiste
- 25: Permanentmagnet
- 26: Permanentmagnet
- 27: Kabel
- 28: Ummantelung
- 29: Einführhilfe
- 30: Rahmen
- 31: Einführschräge
- 32: Ladestation
- 33: Bevorratungsstation
- 34: Anschluss
- 35: Anschluss
- 36: Anschluss
- 37: Reihe
- 38: Schubtransportwagensystem
- 39: Anschluss
- 40: Anschluss
- 41: Anschluss
- 42: Anschluss
- 43: Anschluss
- 44: Anschluss
- 45: elektrische Verbindungseinrichtung
- 46: Ladefluss-Steuereinheit
- 47: Speicher
- 48: Speicher-Freigabeeinrichtung
- 49: Stromflusskomponente
- 50: Diode
- 51: Stromsensor
- 52: AC/DC-Spannungswandler
- 53: Anschluss
- 54: Anschluss
- 55: Anschluss
- 56: Anschluss
- 57: Datenverarbeitungseinheit
- 58: Anschluss
- 59: Anschluss
- 60: Fahrgestellrahmen
- 61: Fahrzeugrad
- 62: Grundschenkel
- 63: Seitenschenkel
- 64: Seitenschenkel
- 65: Kontaktelement
- 66: Kontaktelement
- 67: Kontaktzunge
- 68: Schwenkachse
- 69: Kontaktgleitleiste
- 70: Kontaktfläche
- 71: Kontaktfläche
- 72: elektrischer Kontakt
- 73: Längsausgleichsbereich
- 74: Querausgleichsbereich
- 75: Kontaktelementleiste
- 76: Querstrebe
- 77: Elektrikeinrichtung
- 78: Winkelausgleichsbereich
- 79: Gepäckwagen
- 80: Feststellbremse
- 81: Bremselement
- 82: Schubstange
- 83: Schwenkachse
- 84: Betätigungselement
- 85: Betätigungshebel
- 86: Schwenkachse
- 87: Betätigungselement
- 88: Gleitleiste
- 89: Ausgleichseinrichtung

## Patentansprüche

1. Schubtransportwagensystem (38) mit mindestens zwei Schubtransportwagen (3a, 3b, 3c), insbesondere Einkaufswagen (4) oder Gepäckwagen (79), mit einem elektrischen Speicher (47) und einer Elektrikeinrichtung (77), wobei zwei Kontaktelemente (65, 66) vorhanden sind, welche bewegungsgesteuert durch eine Einschiebebewegung von Schubtransportwagen (3a; 3b; 3c) ineinander einen elektrischen Kontakt (72) ausbilden, wobei eine Verbindung einer elektrischen Verbindungseinrichtung (2-2) eines ersten Schubtransportwagens (3a) mit der elektrischen Verbindungseinrichtung (2-1) eines zweiten Schubtransportwagens (3b) und/oder einer Bevorratungs- und/oder Ladestation (32, 33) hergestellt ist, **dadurch gekennzeichnet, dass** Steuerlogik vorhanden ist, welche ein Ladeflussmanagement gewährleistet, bei dem ein Aufladen eines Speichers (47) eines Schubtransportwagens (3b) aus einem Speicher (47) mindestens eines anderen Schubtransportwagens (3a; 3c) erfolgt.

2. Schubtransportwagensystem (38) nach Anspruch 1, **dadurch gekennzeichnet, dass** der Fahrgestellrahmen (60) eine U-förmige Rahmenstruktur aufweist, die einen vorderen Grundschenkel (62) und zwei nach hinten divergierende Seitenschenkel (63, 64) aufweist, wobei vorzugsweise ein Kontaktelement (66) auf einer Außenseite eines Seitenschenkels (63; 64) angeordnet ist und ein Kontaktelement (65) auf einer Innenseite desselben Seitenschenkels (63; 64) angeordnet ist und/oder ein Kontaktelement (65; 66) im Bereich des Grundschenkels angeordnet ist.

3. Schubtransportwagensystem (38) nach Anspruch 1 oder 2, **dadurch gekennzeichnet, dass** ein Kontaktelement (66) eine nach unten weisende Kontaktfläche (71) aufweist und das andere Kontaktelement (65) eine nach oben weisende Kontaktfläche (70) aufweist, wobei vorzugsweise ein oder der elektrische(r) Speicher (47) und/oder eine oder die Elektrikeinrichtung (77) in einem Längsabschnitt zwischen dem Kontaktelement (76) mit der nach unten weisenden Kontaktfläche (71) und dem Kontaktelement (75) mit der nach oben weisenden Kontaktfläche (70) angeordnet sind/ist, wobei insbesondere ein oder der elektrische Speicher (47) und/oder eine oder die Elektrikeinrichtung (77) im vorderen Endbereich des Fahrgestellrahmens (60) angeordnet sind/ist.

4. Schubtransportwagensystem (38) nach einem der vorhergehenden Ansprüche, **dadurch gekennzeichnet, dass** mindestens ein Kontaktelement (65; 66) hinsichtlich
- seiner Position und/oder
- seiner Orientierung und/oder
- seiner Elastizität und/oder
- seiner Vorspannung und/oder
- der Elastizität oder der Federkonstante der federnden Abstützung einstellbar ist.

5. Schubtransportwagensystem (38) nach einem der vorhergehenden Ansprüche, **dadurch gekennzeichnet, dass**
- der Schubtransportwagen (3b) eine Feststellbremse (80) aufweist, die über ein Betätigungselement (84) gelöst werden kann, wobei das Betätigungselement (84) über eine Federeinrichtung in eine Parkstellung beaufschlagt ist, in der die Feststellbremse (80) betätigt ist, wobei das Betätigungselement (84) bewegungsgesteuert durch eine Einschiebebewegung des Schubtransportwagens (3b) in einen zweiten entsprechenden Schubtransportwagen (3a) entgegen der Beaufschlagung durch die Federeinrichtung in eine Lösestellung bewegbar ist, und
- mindestens ein Kontaktelement (65; 66) an dem Betätigungselement (84) angeordnet ist.

6. Schubtransportwagensystem (38) nach einem der vorhergehenden Ansprüche mit einer mechanischen Verbindungseinrichtung (1), über die der Schubtransportwagen (3a) mechanisch mit dem anderen Schubtransportwagen (3b) und/oder einer Bevorratungs- und/oder Ladestation (32, 33) verbindbar ist, wobei die mechanische Verbindungseinrichtung (1) und eine elektrische Verbindungseinrichtung (2) zusammengefasst sind und die mechanische Verbindungseinrichtung (1) und die elektrische Verbindungseinrichtung (2) so konfiguriert sind, dass bei der mechanischen Verbindung der mechanischen Verbindungseinrichtung (2-2) eines Schubtransportwagens (3a) mit der mechanischen Verbindungseinrichtung (2-1) des anderen Schubtransportwagens (3b) oder der Bevorratungs- und/oder Ladestation (32, 33) mindestens eine elektrische Verbindung der elektrischen Verbindungseinrichtung (2-2) des Schubtransportwagens (3a) mit der elektrischen Verbindungseinrichtung (2-1) des anderen Schubtransportwagen (3b) oder der Bevorratungs- und/oder Ladestation (32, 33) geschaffen wird, über die
- ein elektrischer Leistungsaustausch und/oder
- ein Signalaustausch und/oder
- ein Datenaustausch
möglich ist, wobei die mechanische Verbindungseinrichtung (1) bevorzugt eine Sicherungskette (8) aufweist, wobei vorzugsweise lose aneinander anliegende Glieder (9) der Sicherungskette (8) einen elektrischen Leiter der elektrischen Verbindungseinrichtung (2) bilden.

7. Schubtransportwagensystem (38) nach Anspruch 6, **dadurch gekennzeichnet, dass** die elektrische Verbindungseinrichtung (2) redundante Anschlüsse (39-1, 39-2; 42-1, 42-2), Anschlussleisten (21, 22) oder Schnittstellen aufweist, die jeweils für unterschiedliche Montageorientierungen der mechanischen Verbindungseinrichtung (1) nutzbar sind.

8. Schubtransportwagensystem (38) nach Anspruch 6 oder 7, **dadurch gekennzeichnet, dass** beabstandet von der elektrischen Verbindungseinrichtung (2) und der mechanischen Verbindungseinrichtung (1) eine weitere elektrische Verbindungseinrichtung vorhanden ist, die von den Kontaktelementen ausgebildet ist, wobei vorzugsweise die elektrische Verbindungseinrichtung (2) und die weitere elektrische Verbindungseinrichtung mindestens einen geschlossenen Kreis bilden.

9. Schubtransportwagensystem (38) nach einem der Ansprüche 6 bis 8, **dadurch gekennzeichnet, dass** eine Speicher-Freigabeeinrichtung (48) vorhanden ist, welche
- in einer Freigabestellung den Speicher (47) über die Kontaktelemente und/oder die elektrische Verbindungseinrichtung (2) mit einer Leistungsquelle verbindet, um eine Veränderung des Ladezustandes des Speichers (47) über die Kontaktelemente und/oder über die elektrische Verbindungseinrichtung (2) zu ermöglichen, und
- in einer Trennstellung den Speicher (47) elektrisch von der Leistungsquelle trennt.

10. Schubtransportwagensystem (38) nach einem der vorhergehenden Ansprüche, **dadurch gekennzeichnet, dass**
- eine Ladefluss-Steuereinheit (46) vorhanden ist,
- wobei die Ladefluss-Steuereinheit (46)
- zwischen einen Stecker (10) und die Steckeraufnahme (15) oder die Kontaktelemente zwischengeschaltet ist und
- den Stecker (10) oder die Steckeraufnahme (15) oder die Kontaktelemente mit dem Speicher (47) verbindet
- und wobei die Ladefluss-Steuereinheit (46)
- in einem Durchleitungs-Betriebsmodus den Stecker (10) mit der Steckeraufnahme (15) oder die Kontaktelemente verbindet, aber die Verbindung des Speichers (47) mit dem Stecker (10) oder der Steckeraufnahme (15) oder mit den Kontaktelementen trennt, und
- in einem Lade-Betriebsmodus den Stecker (10) von der Steckeraufnahme (15) oder die Kontaktelemente trennt, aber die Verbindung des Speichers (47) mit dem Stecker (10) oder der Steckeraufnahme (15) oder den Kontaktelementen gewährleistet.

11. Schubtransportwagensystem (38) nach einem der vorhergehenden Ansprüche mit einer Bevorratungs- und/oder Ladestation (32, 33), die mit den in einer Reihe (37) miteinander verbundenen Schubtransportwagen (3a, 3b, 3c) verbunden ist.

12. Schubtransportwagensystem (38) nach einem der vorhergehenden Ansprüche, **dadurch gekennzeichnet, dass** Steuerlogik vorhanden ist,
- welche erkennt, wenn der oder ein Schubtransportwagen (3a) mit einem benachbarten Schubtransportwagen (3b) und/oder der Bevorratungs- und/oder Ladestation (32, 33) mechanisch und/oder elektrisch verbunden ist, und/oder
- welche die Zahl der in einer Reihe (37) miteinander oder mit einer Bevorratungs- und/oder Ladestation (32, 33) verbundenen Schubtransportwagen (3a, 3b, ...) erfasst oder ermittelt, und/oder
- welche einen Austausch elektrischer Energie zwischen Schubtransportwagen (3a, 3b, 3c) steuert, die miteinander, aber nicht mit einer Bevorratungs- und/oder Ladestation (32, 33) verbunden sind.

13. Schubtransportwagensystem (38) nach einem der vorhergehenden Ansprüche, **dadurch gekennzeichnet, dass** Steuerlogik vorhanden ist,
- welche ein Ladeflussmanagement gewährleistet, bei dem eine für einen Einkaufsmarkt oder einen Gepäcktransportbereich spezifische Lademenge berücksichtigt wird und/oder
- welche ein Ladeflussmanagement gewährleistet, bei dem eine
- für einen Einkaufsmarkt oder einen Gepäcktransportbereich und/oder
- für eine Uhrzeit und/oder einen Wochentag spezifische Bedarfskenngröße berücksichtigt wird, die mit einem erwarteten Bedarf der von den Kunden verwendeten Schubtransportwagen (3) je Zeiteinheit korreliert und/oder
- welche ein Ladeflussmanagement gewährleistet, bei dem bei einer mit der Bevorratungs- und/oder Ladestation (32, 33) verbundenen Reihe (37) von Schubtransportwagen (3a, 3b, 3c) zunächst der am Weitesten von der Bevorratungs- und/oder Ladestation (32, 33) entfernte Schubtransportwagen (3c) aufgeladen wird, bis ein Schwellwert des Ladezustandes erreicht ist, und dann sukzessive der in Richtung der Bevorratungs- und/oder Ladestation benachbarte Schubtransportwagen (3b; 3a) aufgeladen wird und/oder
- welche ein Ladeflussmanagement gewährleistet, bei dem ein Aufladen eines Speichers (47) eines Schubtransportwagens (3b)
- sowohl aus einem Speicher (47) mindestens eines anderen Schubtransportwagens (3a; 3c)
- als auch aus der Bevorratungs- und/oder Ladestation (32, 33) erfolgt.

14. Schubtransportwagensystem (38) nach einem der vorhergehenden Ansprüche, **dadurch gekennzeichnet, dass** Steuerlogik vorhanden ist, welche eine Trennung
- eines Schubtransportwagens von einem anderen Schubtransportwagen und/oder von einer Bevorratungs- und/oder Ladestation (32, 33) und/oder
- von Kontaktelementen der Schubtransportwagen und/oder der Bevorratungs- und/oder Ladestation (32, 33) und/oder
- der mechanischen Verbindungseinrichtungen (1) der Schubtransportwagen und/oder der Bevorratungs- und/oder Ladestation (32, 33) und/oder
- der elektrischen Verbindungseinrichtungen (1) der Schubtransportwagen und/oder der Bevorratungs- und/oder Ladestation (32, 33)
detektiert, wobei vorzugsweise
- die Steuerlogik bei einer detektierten Trennung ein Display eines Schubtransportwagens aktiviert und/oder
- die Steuerlogik bei einer detektierten Trennung eine drahtlose Sende- und/oder Empfangseinrichtung aktiviert und/oder
- die Steuerlogik bei einer detektierten Trennung eine Tracking-Funktion für eine Ortsverfolgung des Schubtransportwagens aktiviert und/oder
- die Steuerlogik bei einer detektierten Trennung einen Produktscanner aktiviert und/oder
- die Steuerlogik bei einer detektierten Trennung eine Einkaufsabwicklungssoftware aktiviert und/oder
- die Steuerlogik bei einer detektierten Trennung einen Selbsttest des Schubtransportwagens durchführt, bei dem insbesondere ein Ladezustand des Speichers überprüft wird und/oder ein elektrisches Signal und/oder ein Sensorsignal geprüft wird, wobei die Steuerlogik vorzugsweise dann, wenn der Selbsttest zu dem Ergebnis führt, dass ein nicht ordnungsgemäßer Zustand vorliegt, eine Information an den Benutzer gibt, insbesondere eine Anzeige an einem Display des Schubtransportwagens erzeugt, welche dem Benutzer den negativen Selbsttest oder das Ergebnis des Selbsttestes oder eine Aufforderung, einen anderen Schubtransportwagen zu benutzen, anzeigt, und/oder
- Steuerlogik vorhanden ist, welche eine Herstellung einer Verbindung
- eines Schubtransportwagens mit einem anderen Schubtransportwagen und/oder mit einer Bevorratungs- und/oder Ladestation (32, 33) und/oder
- von Kontaktelementen der Schubtransportwagen und/oder mit der Bevorratungs- und/oder Ladestation (32, 33) und/oder
- der mechanischen Verbindungseinrichtungen (1) der Schubtransportwagen und/oder der Bevorratungs- und/oder Ladestation (32, 33) und/oder
- der elektrischen Verbindungseinrichtungen (1) der Schubtransportwagen und/oder der Bevorratungs- und/oder Ladestation (32, 33)
detektiert, wobei die Steuerlogik vorzugsweise bei einer detektierten hergestellten Verbindung
- ein Display eines Schubtransportwagens deaktiviert und/oder
- eine drahtlose Sende- und/oder Empfangseinrichtung deaktiviert und/oder
- eine Tracking-Funktion für eine Ortsverfolgung des Schubtransportwagens deaktiviert und/oder
- einen Produktscanner deaktiviert und/oder
- eine Einkaufsabwicklungssoftware deaktiviert.

15. Schubtransportwagensystem (38) nach Anspruch 14, **dadurch gekennzeichnet, dass** Steuerlogik vorhanden ist, welche auf Grundlage eines Signals eines Sensors, insbesondere einer Wägezelle und/oder einer Kamera, detektiert, ob sich noch ein Einkaufsprodukt oder ein Gegenstand des Benutzers auf dem Schubtransportwagen befindet und bei einer detektierten hergestellten Verbindung dem Benutzer eine Information gibt, dass sich noch ein Einkaufsprodukt oder ein Gegenstand des Benutzers auf dem Schubtransportwagen befindet.
